# FASCICULE DE BREVET EUROPEEN

(11) **EP 3 692 248 B1**
(45) Date de publication et mention de la délivrance du brevet: **16.02.2022**
(21) Numéro de dépôt: 18801014.4
(22) Date de dépôt: 01.10.2018
(51) Int. Cl.: F01L 1/18, F01L 1/08, F01L 1/24, F01L 1/46

(54) **ACTIONNEUR HYDRAULIQUE DE SOUPAPE A REGENERATION**
HYDRAULIK-VENTIL-STELLGLIED MIT REGENERIERUNGS-FUNKTION
REGENERATIVE HYDRAULIC VALVE DRIVE

(30) Priorité: 02.10.2017 FR 1759205
(43) Date de publication de la demande: 12.08.2020
(73) Titulaire: Rabhi, Vianney, 69006 Lyon (FR)
(72) Inventeur: Rabhi, Vianney, 69006 Lyon (FR)
(74) Mandataire: Vuillermoz, Bruno
(86) Numéro de dépôt international: PCT/FR2018/052405
(87) Numéro de publication internationale: WO 2019/069000

(56) Documents cités:
- CA-A1- 2 845 080
- DE-A1-102007 050 818
- DE-A1-102008 015 137
- FR-A1- 2 688 828
- FR-A1- 2 869 946
- JP-A- S55 151 106
- US-A1- 2004 069 255

## Description

La présente invention est relative à un actionneur hydraulique de soupape à régénération qui est particulièrement destiné aux moteurs thermiques alternatifs.

Depuis les origines de la motorisation thermique, de nombreux dispositifs ont été conçus pour actionner en ouverture et en fermeture les soupapes d'admission et d'échappement des moteurs à combustion interne les plus répandus, c'est à dire ceux à cycle de Beau de Rochas, d'Otto, ou de Diesel.

Cependant, en raison de sa fiabilité. de sa robustesse, de sa simplicité et de son prix de revient modéré, l'arbre à cames s'est imposé comme l'actionneur de soupape quasi universel qui équipe la quasi-totalité des moteurs à quatre temps produits dans le monde.

Pour autant, les cames que comporte iedit arbre à cames présentent un profil fixé par construction qui ne laisse aucune liberté de changer les lois de levée des soupapes qu'actionnent lesdites cames.

Une première étape a été franchie vers plus de flexibilité en intercalant un déphaseur entre le ou les arbre(s) à cames et le vilebrequin des moteurs à combustion interne alternatifs, ledit déphaseur permettant d'avancer ou de retarder l'ouverture - par rapport à la position angulaire du vilebrequin - soit des soupapes d'admission, soit des soupapes d'échappement, soit des deux. Ledit déphaseur est au service de la stratégie connue sous l'acronyme anglo-saxon de « VVT » qui signifie « Variable Valve Timing ».

Une deuxième étape a consisté en rendre variables la durée d'ouverture et/ou la hauteur de levée des soupapes, cette stratégie étant plus connue sous l'acronyme anglo-saxon de « VVA » qui signifie « Variable Valve Actuation ». A ce titre, plusieurs dispositifs sont ou ont été commercialisés sous diverses marques et/ou appellations commerciales.

On distingue les variateurs de levée de soupape discrets qui présentent au moins deux profils de came sélectionnables des variateurs de levée en continu en général basés sur une seule came et un transmetteur de mouvement à rapport continûment variable. Parmi les variateurs de levée discrets, on trouve par exemple le dispositif «VTec ^{®} » de «Honda ^{®}», le «Variocam Plus ^{®}» de «Porsche ^{®}» le « Valvelift system ^{®} » de « Audi ^{®} » ou encore le « WTL-i ^{®} » de « Toyota ^{®} ».

Parmi les dispositifs de levée de soupape à variation continue se trouve le « Vaivetronic ^{®} » développé par « BMW ^{®} » lequel est basé sur un levier à rapport vanable, ou le « Multiair ^{®} » de « FIAT ^{®} » ce dernier prévoyant une transmission hydraulique entre la came et le poussoir de la soupape tandis qu'une électrovanne de retour au réservoir du fluide hydraulique permet de tronquer plus ou moins la levée de ladite soupape.

Pour aller plus loin dans la flexibilité de contrôle en ouverture, fermeture et levée des soupapes des moteurs à combustion interne alternatifs, de nombreux dispositifs ont été imaginés pour purement et simplement remplacer l'arbre à cames et ses cames à profil invariable par des dispositifs plus ou moins variables. Ces dispositifs sans came sont connus sous le terme anglo-saxon de « camless ».

Lesdits dispositifs « camless » ambitionnent d'exécuter une grande variété de lois d'ouverture, de levée et de fermeture des soupapes, dans les limites autorisées par la physique et la géométrie. De nombreux dispositifs « camless » ont été réalisés qui sont pour le plupart restés à l'état de prototype. C'est le cas par exemple du « camless électromagnétique » de « Valeo ^{®} », du « Free Valve ^{®} » de « Cargine ^{®} », du dispositif hydroélectrique développé par la société américaine « Sturman ^{®} » en collaboration avec « Siemems ^{®} » ou encore de l' «: Active Valve Train (AVT^{™}) » de la société « Lotus ^{®} »

Une grande variété de dispositifs sont restés à l'état de concept et n'ont fait l'objet que de réalisations partielles, voire d'aucune réalisation On notera à ce titre les brevets appartenant au demandeur et qui décrivent des dispositifs « camless » hydromécaniques ou électro-hydrauliques. Le premier de ces dispositifs a été publié sous le N" FR 2 842 867 et décrit un actionneur hydraulique de soupapes pour moteur à pistons, tandis que le second a été publié sous le N° FR 2 980 516 et expose un actionneur de soupape électro-hydraulique à came alternative.

A ce jour, aucun dispositif de type « camless » n'a été produit en grande série pour l'automobile. Ceci résulte du fait que comparés aux dispositifs « camless », les actionneurs de soupape basés sur au moins une came restent plus compétitifs, moins aventureux, et présentent un rapport coût sur bénéfice plus avantageux.

En outre, le bilan énergétique de nombreux dispositifs « camless » est au final médiocre car, soit l'énergie investie pour accélérer la soupape et en comprimer le ressort de rappel n'est pas ou que trop partiellement récupérée, soit le rendement énergétique de l'actionneur « camless » hydraulique, électromagnétique ou mécanique est insuffisant

A titre d'exemple, le brevet US 5,410,994 de l'inventeur Michael M. Schechter ne récupère pas l'énergie hydraulique investie pour ouvrir la soupape, à tei point que l'inventeur précise même dans le texte dudit brevet que le débit de fluide hydraulique alimentant la soupape détermine principalement la consommation énergétique du système.

Outre conduire à une grande consommation énergétique, la non-récupération de l'énergie cinétique de la soupape ou de l'énergie de compression du ressort de rappel de soupape - quelle que soit la nature dudit ressert - implique une grande instabilité de ladite soupape qui forme avec le fluide hydraulique un ensemble masse-ressort soumis à une grande excitation tant que l'énergie non-récupérée n'est pas entièrement dissipée sous forme de chaleur.

C'est pourquoi beaucoup de dispositifs « camless » sont imprécis et conduisent à une levée et à un maintien en ouverture instables de la soupape, laquelle est animée de mouvements parasites. Ceci conduit notamment à la nécessité d'amortir les déplacements de ladite soupape pour la rendre précise cependant que par nature, l'amortissement dissipe de l'énergie sous forme de chaleur ce qui est défavorable au rendement.

On note aussi la difficulté que présentent la plupart des dispositifs « camless » à ralentir suffisamment la soupape lors de sa fermeture, lorsque ladite soupape arrive au voisinage de son siège. Ce ralentissement est nécessaire pour limiter la puissance du choc entre ladite soupape et ledit siège, à la fois pour conférer audit siège une durée de vie normale, et pour éviter toute émission acoustique excessive. Cette stratégie de ralentissement connue sous l'expression anglo-saxonne de « soft landing » est naturellement mise en œuvre par les cames qui. selon l'état de l'art, présentent un profil qui se termine par ce que l'homme de l'art appelle une « rampe de silence ». laquelle assure en outre la récupération de l'énergie cinétique de la soupape dans d'excellentes conditions de rendement.

Le document FR2869946 A1 décrit un actionneur hydraulique de soupape d'échange de gaz de moteur à combustion interne comportant un vérin hydraulique actionnant la soupape d'échange de gaz, le vérin ayant une première chambre munie d'une conduite d'alimentation à haute pression, d'au moins une vanne de commande pour commander le débit dans la conduite d'alimentation et une conduite de retour sans pression ou sollicitée par une pression statique faible, la conduite d'alimentation et la conduite de retour étant reliées hydrauliquement au vérin.

On remarquera d'ailleurs et à ce titre que le brevet US 5,410,994 ne comporte pas non plus de came ou de dispositif de ralentissement mécanique de la soupape au voisinage de son siège, pas plus que n'en comporte par exemple ie brevet US 2008/0251041 A1 de l'inventeur Zheng Lou.

De tels dispositifs conduisent donc nécessairement à des émissions acoustiques inacceptables, au matage du siège de soupape, et à une dépense énergétique préjudiciable au rendement global du moteur thermique qui en est équipé.

Ainsi, jusqu'à aujourd'hui et tenant compte de l'état de l'art et de la technique, l'effort technologique, économique et industriel à consentir pour maximiser le rendement énergétique d'un moteur thermique au moyen d'actionneurs de soupape de type « camless » ne se justifie pas dans la mesure ou des moyens plus simples et plus robustes basés sur un ou plusieurs arbres à cames permettent d'accéder à l'essentiel des gains en rendement théoriquement accessibles pour ledit moteur, sans recourir au « camless ».

En d'autres termes, pour s'imposer en production de grande série automobile, le prix de revient en fabrication, la fiabilité et l'encombrement d'un actionneur de soupape de type « camless » se doivent d'être au moins comparables à ceux d'un actionneur à came, voire plus compétitifs.

Toutefois, le recours à un actionneur de soupape « camless » peut se justifier s'il est impossible de recourir à un actionneur à came pour des raisons fonctionnelles . C'est notamment le cas par exemple du moteur thermique à transfert-détente et régénération dont le brevet français appartenant au demandeur a été publié sous le N" FR 3 032 236. En effet, la soupape doseuse d'admission dudit moteur doit être levée en un temps tellement court - de l'ordre de quelques centaines de microsecondes - qu'un actionneur à came ne peut en aucun cas assurer l'ouverture de ladite soupape dans les conditions recherchées. Il en est de même s'agissant de la fermeture de ladite soupape. Un actionneur classique ne pourrait donc ouvrir la soupape doseuse du moteur selon le brevet N° FR 3 032 236 que si ledit moteur ne tournait qu'à très faible vitesse, ce qui ne peut pas être le cas si ce dernier est mis en œuvre dans le domaine de l'automobile ou du poids-lourds.

Par ailleurs, l'architecture particulière du moteur à transfert-détente et régénération selon le brevet N° FR 3 032 236 et particulièrement celle des culasses du cylindre détendeur à double effet dudit moteur, est difficilement compatible avec un arbre à cames. En effet l'ensemble que constitue le fut de cylindre. la culasse inférieure et la culasse supérieure dudit cylindre détendeur est prévu pour être suspendu sur des piliers évidés comme le décrit la demande de brevet français N°1558585 du 14 septembre 2015. ladite demande appartenant également au demandeur.

Etant donné que les piliers évidés reposent sur des liaisons rotules d'une part, et que ledit ensemble est porté à haute température d'autre part, il est impossible de fixer sur la culasse inférieure et/ou la culasse supérieure que comprend ledit ensemble une transmission par courroie ou par chaïne de quelque arbre à cames que ce soit. Il est donc pertinent de prévoir - comme le propose le brevet N° FR 3 032 236 - des cartouches prêtes à monter dans lesdites culasses, lesdites cartouches incluant notamment l'actionneur de soupape doseuse et la soupape doseuse eile-même tandis que lesdites cartouches ne sont reliées entre-elles et/ou à la source d'énergie qui alimente ledit actionneur que par des câbles et/ou des conduits suffisamment souples.

Dans le domaine d'application des compresseurs et moteurs alternatifs à piston et selon un mode particulier de réalisation il résulte de l'invention un actionneur hydraulique de soupape il régénération .
- extrêmement rapide au point de permettre des temps d'ouverture de soupape de quelques centaines de microsecondes et des durées d'ouverture proche de la milliseconde, répondant ainsi notamment au besoin fonctionnel du moteur thermique à transfert-détente et régénération que décrit le brevet français publié sous le N° FR 3 032 236 :
- précis et induisant peu de mouvements parasites de la soupape qu'il actionne, malgré une quasi absence d'amortissement de ladite soupape :
- Pouvant équiper n'importe compresseur à pistons ou n'importe quel moteur à combustion interne alternatif selon l'état de l'art, et notamment implantable sur le moteur thermique â transfert-détente et régénération que décrit le brevet français publié sous le N° FR 3 032 236 grâce à la possibilité de réaliser une cartouche prête à monter indépendante pour chaque soupape, dont Orientation par rapport audit moteur est non-contraignante, et qui n'est reliée à la source d'énergie de l'actionneur que par un conduit suffisamment souple pour pouvoir s'accommoder des dilatations thermiques de la culasse sur laquelle est montée ladite cartouche :
- dont le rendement énergétique est élevé et comparable à celui d'un actionneur à came, ledit rendement élevé étant notamment obtenu en récupérant la quasi-totalité de l'énergie cinétique de tous les organes mobiles dudit actionneur. en plus de ceile de la soupape :
- silencieux en ce qu'il permet de reposer la soupape sur son siège á très faible vitesse malgré la vitesse élevée qu'acquiert ladite soupape durant sa course de fermeture :
- à longue durée de vie, compatible avec celle de tout moteur thermique à combustion interne alternatif ;
- qui permet si nécessaire d'ouvrir toute soupape vers l'extérieur de la chambre de compression ou de combustion de tout compresseur ou moteur à piston alternatif sans pour autant laisser s'échapper le gaz sous pression que contient ladite chambre via ladite soupape, et de ce fait, qui évite d'avoir à réaliser des embrèvements de soupape sur la calotte du piston dudit compresseur ou moteur pour éviter toute collision entre ledit piston et ladite soupape, tandis que l'écoulement de tout gaz via ladite soupape est facilité ;
- dont la fabrication est abordable au plan économique.

A ce titre, l'actionneur hydraulique de soupape à régénération selon l'invention est notamment prévu pour mettre en œuvre sur tout moteur thermique alternatif la plupart des stratégies qui permettent de maximiser le couple et la puissance d'une part, et de réduire la consommation de carburant et les émissions polluantes d'autre part, lesdites stratégies reposant sur le pilotage précis et flexible des soupapes d'admission et/ou d'échappement dudit moteur.

Grâce á l'actionneur hydraulique de soupape à régénération selon l'invention, cette amélioration notable des performances desdits moteurs pourra s'opérer sans en augmenter notablement ni les émissions acoustiques, ni le Prix de Revient en Fabrication.

On comprend également que l'actionneur hydraulique de soupape à régénération selon l'invention est notamment prévu pour permettre la réalisation dans des conditions optimales du moteur thermique à transfert-détente et régénération tel que décrit dans le brevet français publié sous le N° FR 3 032 236. ce dernier moteur promettant une baisse drastique de la consommation de carburant et des émissions polluantes par rapport aux moteurs à combustion interne alternatifs conventionnels.

Il est entendu que si le l'actionneur hydraulique de soupape à régénération selon l'invention s'adresse principalement aux compresseurs et moteurs alternatifs à piston, ledit actionneur reste adaptable à tout autre domaine d'application, machine ou appareil qui comporte au moins un conduit dans lequel circule un gaz ou un fluide de quelque nature que ce soit, cependant qu'avantageusement, ledit actionneur permet d'ouvrir et de refermer toute soupape de quelque type que ce soit logée dans ledit conduit afin de permettre ou d'interdire la circulation dudit gaz ou fluide dans ledit conduit.

En outre. ledit actionneur peut être utilisé en remplaçant la soupape qu'il actionne par tout autre objet nécessitant un déplacement rapide entre au moins deux positions.

Les autres caractéristiques de la présente invention ont été décrites dans la description et dans les revendications secondaires dépendantes directement ou indirectement de la revendication principale
L'actionneur hydraulique de soupape à régénération suivant la présente invention est prévu pour un compresseur ou moteur a piston alternatif qui comprend au moins un piston relié à des moyens de transmission pour aller et venir dans un cylindre fermé par une culasse de compresseur ou moteur, ledit piston. ledit cylindre et ladite culasse formant une chambre de compression ou combustion dans laquelle débouche au moins un conduit d'admission et au moins un conduit d'échappement ou de refoulement, l'un, l'autre ou les deux dits conduit, étant reliés à ladite chambre par un orifice de conduit qu'une soupape peut obturer quand elle repose sur un siège de soupape, ledit actionneur comprenant :
- Au moins une pompe hydraulique haute-pression d'alimentation qui peut admettre un fluide hydraulique depuis un accumulateur basse-pression ou une bâche à fluide via un conduit d'alimentation basse-pression pour refouler ledit fluide vers un accumulateur haute-pression via un conduit d'alimentation haute-pression :
- Au moins un vérin d'actionneur qui comprend un cylindre de vérin d'actionneur coiffé d'une culasse de vérin d'actionneur, ledit cylindre étant directement ou indirectement ammé à la culasse de compresseur ou moteur cependant que ledit cylindre et la culasse de vérin d'actionneur forment avec un piston de vénn d'actionneur une chambre hydraulique d'actionneur, ledit piston étant mécaniquement relié par des moyens de transmission à la soupape: lesdits moyens étant prévus de telle sorte que si la chambre hydraulique d'actionneur est soumise à une pression exercée par le fluide hydraulique, le piston de vérin d'actionneur tend à éloigner ladite soupape du siège de soupape avec lequel elle coopère :
- Au moins un dispositif de rappel de soupape qui exerce sur la soupape un effort antagoniste à celui que peut produire le vérin d'actionneur, ledit dispositif tendant ainsi à ramener la soupape au contact du siège de soupape avec lequel elle coopère :
- Au moins une vanne hydraulique de levée de soupape qui peut ouvrir ou fermer un conduit de levée haute-pression qui relie l'accumulateur haute-pression à la chambre hydraulique d'actionneur ;
- Au moins un clapet anti-retour de levée placé dans un conduit de levée inertielle qui relie l'accumulateur basse-pression ou la bâche à fluide à la chambre hydraulique d'actionneur, ledit clapet permettant au fluide hydraulique via ledit conduit - de circuler depuis l'accumulateur basse-pression ou la bâche à fluide vers la chambre hydraulique d'actionneur, mais non en sens inverse ;
- Au moins une vanne hydraulique de fermeture de soupape qui peut ouvrir ou fermer un conduit de fermeture et régénération qui relie la chambre hydraulique d'actionneur avec une admission de fluide que présente un moteur hydraulique de fermeture et régénération, une sortie de fluide que présente également ledit moteur étant reliée avec l'accumulateur basse-pression ou avec la bâche à fluide par un conduit de retour basse-pression de moteur hydraulique;

Au moins un levier à rapport de bras progressif constituant en tout ou partie les moyens de transmission, ledit levier exposant au moins un point d'application de i'effort de vérin sur lequel le piston de vérin d'actionneur peut directement ou indirectement appliquer un effort moteur ou résistant, au moins un point d'application de l'effort de soupape sur lequel la soupape peut directement ou indirectement appliquer un effort moteur ou résistant, et au moins un point d'application de i'effort de réaction sur la culasse sur lequel s'applique directement ou indirectement un effort sur la culasse de compresseur ou moteur.

Lactionneur hydraulique de soupape à régénération suivant la présente invention comprend des moyens de déplacement du point d'application qui déplacent le point d'application de i'effort de vérin et/ou le point d'application de l'effort de soupape et/ou le point d'application de l'effort de réaction sur la culasse le long du levier à rapport de bras progressif durant la course d'ouverture de la soupape.

L'actionneur hydraulique de soupape à régénération suivant la présente invention comprend un point d'application de l'effort de vérin et/ou un point d'application de l'effort de soupape et/ou un point d'application de l'effort de réaction sur la culasse qui forme directement ou indirectement respectivement avec le piston de vérin d'actionneur. et/ou avec la soupape et/ou avec la culasse de compresseur ou moteur avec le ou laquelle il coopère soit au moins une liaison pivot, soit au moins une liaison roulante-glissante, cette dernière constituant les moyens de déplacement du point d'application.

L'actionneur hydraulique de soupape à régénération suivant la présente invention comprend une liaison roulante-glissante qui est constituée d'au moins une piste de contact de levier aménagée sur le levier à rapport de bras progressif au niveau du point d'application de l'effort de vérin et/ou du point d'application de l'effort de soupape et/ou du point d'application de l'effort de réaction sur la culasse, ladite piste coopérant avec une surface de réaction de levier aménagée directement ou indirectement respectivement sur le piston de vérin d'actionneur et/ou sur la soupape et/ou sur la culasse de compresseur ou moteur ladite piste et/ou ladite surface présentant un profil de contact courbe sur lequel s'établit le contact entre ladite piste et ladite surface.

L'actionneur hydraulique de soupape à régénération suivant la présente invention comprend un dispositif de rappel de soupape qui est constitué d'un vérin de rappel de soupape qui comprend un cylindre de vérin de rappel coiffé d'une culasse de vérin de rappel ledit cylindre étant directement ou indirectement arrimé à la culasse de compresseur ou moteur cependant que ledit cylindre et la culasse de vérin de rappel forment avec un piston de vérin de rappel une chambre hydraulique de vérin de rappel ledit piston étant mécaniquement relié à la soupape par des moyens de transmission de rappel.

L'actionneur hydraulique de soupape à régénération suivant la présente invention comprend une chambre hydraulique de vérin de rappel qui est reliée à l'accumulateur haute-pression par un conduit de pression de rappel

L'actionneur hydraulique de soupape à régénération suivant la présente invention comprend un niveau et une pression du fluide hydraulique que contient l'accumulateur basse-pression qui sont maintenus dans une certaine plage de valeur par une pompe hydraulique basse-pression de gavage qui peut transférer ledit fluide depuis la bâche à fluide vers ledit accumulateur via un conduit de gavage basse-pression.

L'actionneur hydraulique de soupape à régénération suivant la présente invention comprend au moins une soupape avec ou sans le siège de soupape avec lequel elle coopère, un vérin d'actionneur des moyens de transmission, un dispositif de rappel de soupape, un clapet anti-retour de levée une vanne hydraulique de levée de soupape, et une vanne hydraulique de fermeture de soupape qui sont communément logés dans une cartouche d'actionneur qui expose au moins un connecteur hydraulique,

L'actionneur hydraulique de soupape à régénération suivant la présente invention comprend une vanne hydraulique de levée de soupape et/ou une vanne hydraulique de fermeture de soupape qui est constituée d'une vanne tubulaire qui comprend un tube obturateur qui peut être mu en translation longitudinale par un actionneur de tube, ledit tube étant logé de manière étanche dans un alésage de tube obturateur et se terminant par une portée d'étanchéité de tube qui peut soit reposer sur un siège de tube pour former avec ce dernier une ligne continue de contact étanche, soit être maintenue à une certaine distance dudit siège pour laisser passer le fluide hydraulique depuis un volume interne de tube vers un collecteur-répartiteur externe de tube ou inversement.

L'actionneur hydraulique de soupape à régénération suivant la présente invention comprend un l'actionneur de tube qui est un actionneur piézoélectrique à amplification hydraulique qui comprend une pile d'éléments céramiques qui se déforment mécaniquement quand on les soumet à un champ électrique, l'extrémité de ladite pile étant reliée à un piston émetteur d'actionneur de grand diamètre qui forme - avec un cylindre émetteur d'actionneur - une chambre émettrice d'actionneur qui communique avec au moins une chambre réceptrice d'actionneur cette dernière étant formée d'une part, par un piston récepteur d'actionneur de petit diamètre qui est directement ou indirectement relié au tube obturateur avec lequel il coopère de sorte à pouvoir mouvoir ce dernier en translation longitudinale, et d'autre part, par un cylindre récepteur d'actionneur.

L'actionneur hydraulique de soupape à régénération suivant la présente invention comprend une chambre émettrice d'actionneur et une chambre réceptrice d'actionneur qui sont communément mises en relation avec une source de fluide hydraulique sous pression par un clapet anti-retour de gavage d'actionneur qui permet à du fluide hydraulique d'aller depuis ladite source vers lesdites chambres, et non l'inverse.

L'actionneur hydraulique de soupape à régénération suivant la présente invention comprend un piston émetteur d'actionneur qui reçoit un ressort de compensation de pression qui tend à le rapprocher de la chambre émettrice d'actionneur, l'effort qu'exerce ledit ressort sur ledit piston étant inférieur ou égal à l'effort qu'exerce le fluide hydraulique sur ledit piston lorsque la pression régnant dans la chambre émettrice d'actionneur est égale â celle régnant dans la source de fluide hydraulique sous pression.

L'actionneur hydraulique de soupape à régénération suivant la présente invention comprend un piston récepteur d'actionneur qui reçoit un ressort de compensation de pression qui tend à le rapprocher de la chambre réceptrice d'actionneur, i'effort qu'exerce ledit ressort sur ledit piston étant inférieur ou égal à l'effort qu'exerce le fluide hydraulique sur ledit piston lorsque la pression régnant dans ia chambre réceptrice d'actionneur est égale à celle régnant dans la source de fluide hydraulique sous pression.

L'actionneur hydraulique de soupape à régénération suivant la présente invention comprend une chambre émettrice d'actionneur qui communique via une rampe commune de chambres réceptrices avec plusieurs chambres réceptrices d'actionneur, le piston récepteur d'actionneur formant chaque dite chambre réceptrice pouvant mouvoir en translation longitudinale un tube obturateur qui lui est propre.

L'actionneur hydraulique de soupape à régénération suivant la présente invention comprend des chambres réceptrices d'actionneur qui sont chacune mise ou non en communication avec la rampe commune de chambres réceptrices par une vanne de sélection dont l'ouverture est commandée par un actionneur de vanne de sèlection.

L'actionneur hydraulique de soupape à régénération suivant la présente invention comprend une rampe commune de chambres réceptrices qui héberge de façon non-étanche au moins un élément cylindrique incompressible plein ou creux qui est maintenu centré au voisinage d'une certaine position longitudinale relative à la rampe commune de chambres réceptrices par au moins deux ressorts antagonistes de centrage.

L'actionneur hydraulique de soupape à régénération suivant la présente invention comprend une moteur hydraulique de fermeture et régénération qui comprend une came de fermeture et régénération montée sur un arbre de moteur hydraulique qui est entraîné - directement ou indirectement - en rotation par le compresseur ou moteur à piston alternatif, un piston de fermeture et régénération prenant appui directement ou indirectement sur ladite came et formant - avec un cylindre de fermeture et régénération - une chambre de fermeture et régénération qui communique avec l'admission de fluide.

L'actionneur hydraulique de soupape à régénération suivant la présente invention comprend une came de fermeture et régénération qui expose un profil de came de fermeture et régénération qui comporte au moins un secteur angulaire de régénération R sur lequel prend appui le piston de fermeture et régénération pour reposer la soupape sur le siège de soupape

L'actionneur hydraulique de soupape à régénération suivant la présente invention comprend une came de fermeture et régénération qui expose un profil de came de fermeture et régénération qui comporte au moins un secteur angulaire de pré-compression P sur lequel prend appul le piston de fermeture et régénération pour pré-comprimer le conduit de fermeture et régénération entre deux reposes de la soupape sur le siège de soupape.

L'actionneur hydraulique de soupape à régénération suivant la présente invention comprend une came de fermeture et régénération qui peut être décalée angulairement par rapport à l'arbre de moteur hydraulique par des moyens de déphasage de came

L'actionneur hydraulique de soupape à régénération suivant la présente invention comprend des moyens de déphasage de came qui sont constitués d'au moins une cannelure hélicoidale mâle aménagée sur la face cylindrique externe de i'arbre de moteur hydraulique qui coopère avec au moins une cannelure hélicoïdale femelle aménagée à l'intérieur de la came de fermeture et régénération, cette dernière pouvant être déplacée ou maintenue en place axialement par rapport à l'arbre de moteur hydraulique par un actionneur de déphasage de came.

L'actionneur hydraulique de soupape à régénération suivant la présente invention comprend un actionneur de déphasage de came qui est relié à la came de fermeture et régénération par l'intermédiaire d'une fourchette de déphasage qui coopère avec une gorge de déphasage que présente la came de fermeture et régénération.

L'actionneur hydraulique de soupape à régénération suivant la présente invention comprend un conduit de fermeture et régénération qui comporte un clapet anti-retour de fin de détente qui permet à du fluide hydraulique provenant soit de l'accumulateur basse-pression, soit de la bâche à fluide, soit d'une source de fluide hydraulique sous pression de pénétrer dans ledit conduit via un canal de roue libre, mais non d'en ressortir.

L'actionneur hydraulique de soupape à régénération suivant la présente invention comprend un conduit de fermeture et régénération qui comporte une vanne de pré-compression qui permet à du fluide hydraulique provenant soit de l'accumulateur basse-pression, soit de la bâche à fluide, soit d'une source de fluide hydraulique sous pression de pénétrer dans ledit conduit et/ou d'en ressortir.

L'actionneur hydraulique de soupape à régénération suivant la présente invention comprend un point d'application de l'effort de vérin et/ou un point d'application de l'effort de soupape et/ou un point d'application de l'effort de réaction sur la culasse qui comporte des moyens de rattrapage de jeu.

L'actionneur hydraulique de soupape à régénération suivant la présente invention comprend des moyens de rattrapage de jeu qui sont constitués d'un vérin de rattrapage de jeu à l'intérieur duquel une chambre de rattrapage de jeu comporte un clapet anti-retour de rattrapage de jeu qui permet à du fluide hydraulique provenant soit de l'accumulateur basse-pression, soit de l'accumulateur haute-pression, soit de la bâche à fluide, soit d'une source de fluide hydraulique sous pression de pénétrer dans ladite chambre, mais non d'en ressortir.

L'actionneur hydraulique de soupape à régénération suivant la présente invention comprend des moyens de rattrapage de jeu qui sont constitués d'un vérin de rattrapage de jeu à l'intérieur duquel une chambre de rattrapage de jeu comporte un ajutage de rattrapage de jeu qui permet à du fluide hydraulique provenant soit de l'accumulateur basse-pression, soit de l'accumulateur haute-pression, soit de la bâche à fluide, soit d'une source de fluide hydraulique sous pression de pénétrer dans ladite chambre, et d'en ressortir.

L'actionneur hydraulique de soupape à régénération suivant la présente invention comprend un levier à rapport de bras progressif qui est logé dans une chambre de levier dans laquelle débouche également le piston de vérin d'actionneur, ladite chambre étant reliée, soit avec l'accumulateur basse-pression, soit avec la bâche à fluide, soit avec une source de fluide hydraulique sous pression par un clapet anti-retour de chambre de levier qui permet à du fluide hydraulique de sortir de ladite chambre de levier mais non d'y entrer, ou bien par un ajutage calibré de chambre de levier qui permet à du fluide hydraulique de sortir et de rentrer de ladite chambre de levier, ou encore par à la fois ledit clapet et ledit ajutage, ce dernier étant alors placé en parallèle avec le clapet anti-retour de chambre de levier.

La description qui va suivre en regard des dessins annexés et donnés à titre d'exemples non limitatifs permettra de mieux comprendre l'invention, les caractéristiques qu'elle présente, et les avantages qu'elle est susceptible de procurer :

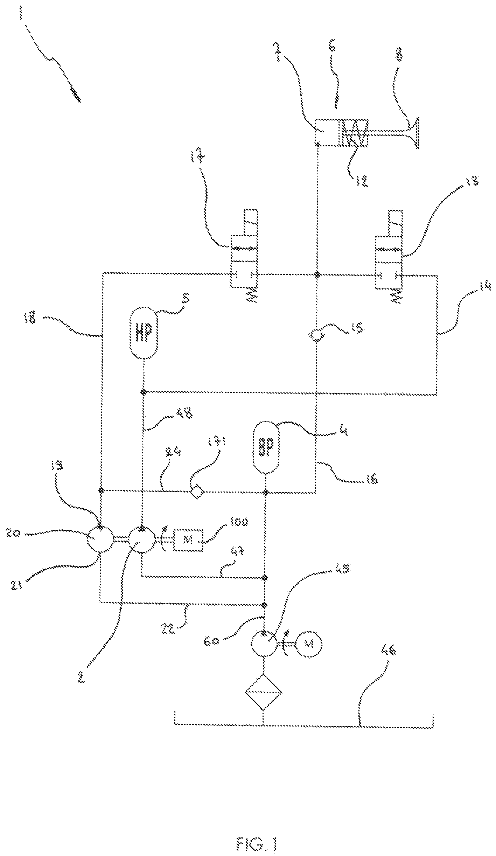

Figure 1 est un schéma de principe de l'actionneur hydraulique de soupape à régénération suivant l'invention lequel comporte à titre de variante un clapet anti-retour de fin de détente et un canal de roue libre, ledit schéma reprenant les symboles usuellement utilisés pour décrire les circuits et organes hydrauliques.

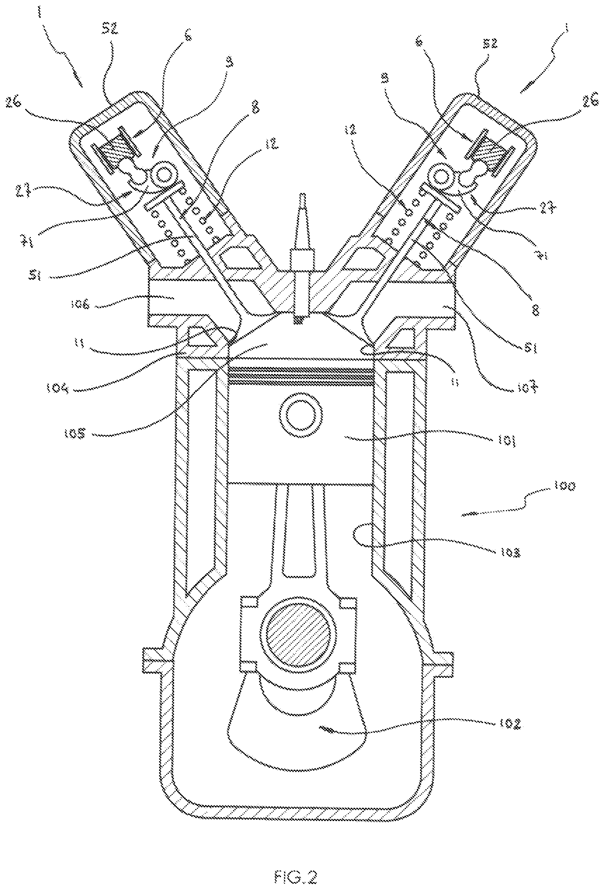

Figure 2 est une vue en coupe schématique d'un moteur à combustion interne alternatif recevant l'actionneur hydraulique de soupape à régénération suivant l'invention.

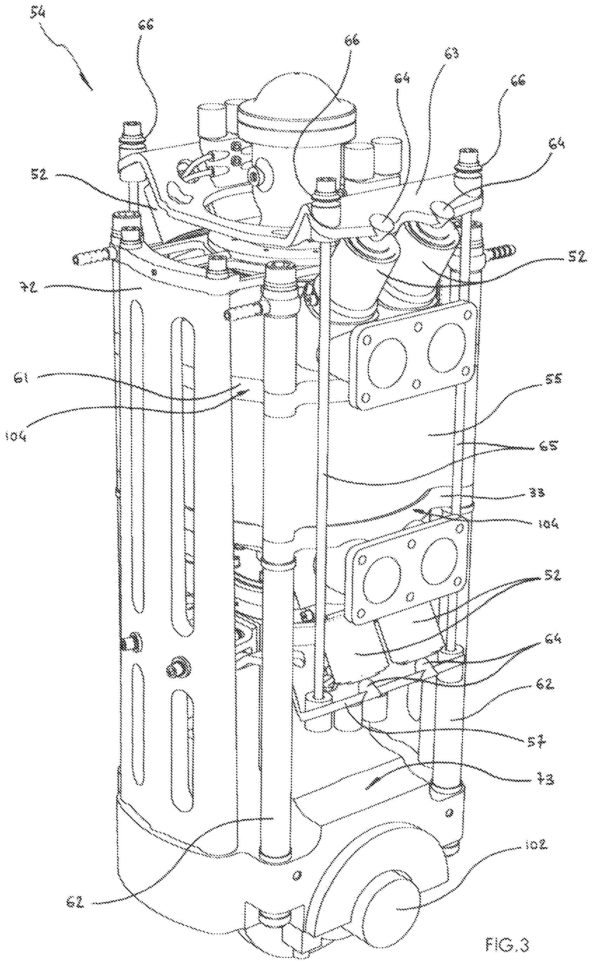

Figure 3 est une vue tridimensionnelle de l'ensemble de cylindre détendeur du moteur thermique à transfert-détente et régénération tel que décrit dans le brevet français publié sous le N° FR 3 032 236 et appartenant au demandeur, dans sa version perfectionnée selon la demande de brevet français N° 1558585 du 14 septembre 2015 appartenant également au demandeur, la culasse inférieure de cylindre détendeur et la culasse supérieure de cylindre détendeur que comprend ledit ensemble recevant chacune quatre cartouches d'actionneur qui sont plaquées via des butées de plaque sur la culasse avec laquelle elles coopèrent par d'une part, une plaque de contention de cartouche inférieure s'agissant de la culasse inférieure de cylindre détendeur et par d'autre part, une plaque de contention de cartouche supérieure s'agissant de la culasse supérieure de cylindre détendeur, lesdites plaques tendant à être rapprochées l'une de l'autre par des tirants de plaque.

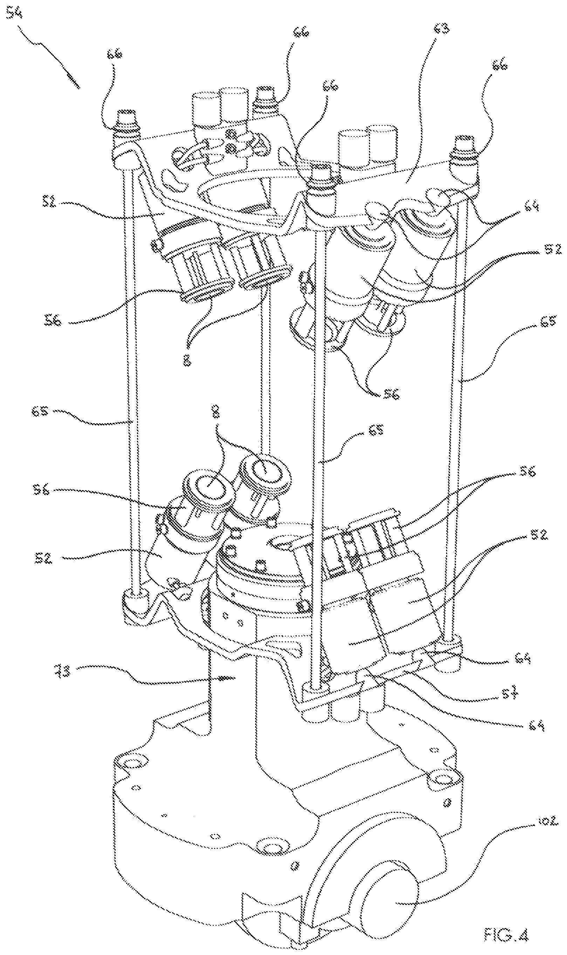

Figure 4 est une vue tridimensionnelle de l'ensemble de cylindre détendeur montré en figure 3 auquel on a ôté divers organes de sorte à pouvoir distinguer plus clairement les cartouches d'actionneur de l'actionneur hydraulique de soupape à régénération suivant l'invention, les plaques de contention de cartouche inférieure et supérieure, et les tirants de plaque qui tendent à rapprocher lesdites plaques de contention de sorte à maintenir lesdites cartouches d'actionneur plaquées sur leur culasse respective via la butée de plaque avec laquelle elles coopèrent.

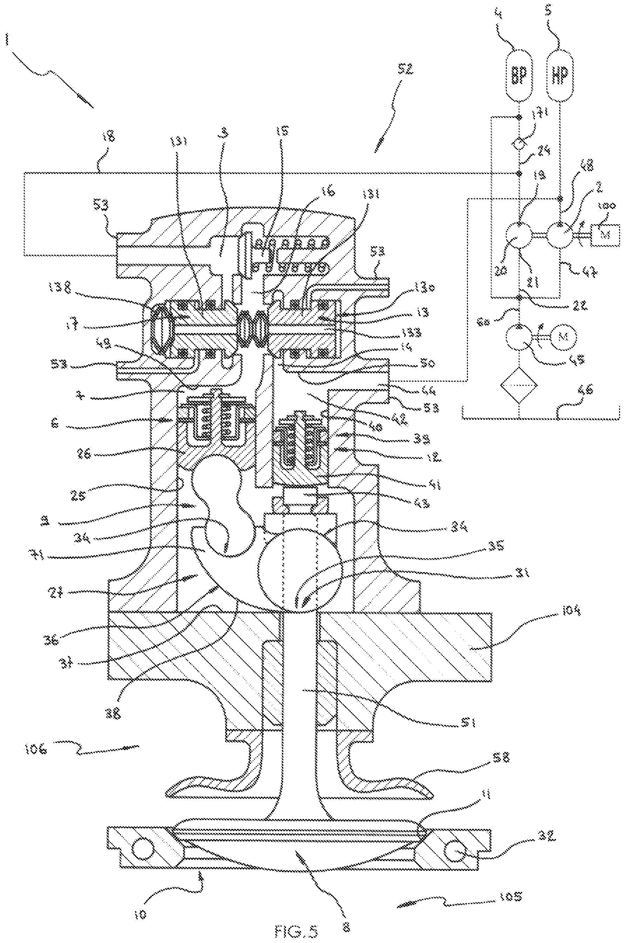

Figures 5 à 12 sont des vues en coupe schématique de l'actionneur hydraulique de soupape à régénération suivant l'invention et selon un mode particulier de réalisation où le débit de fluide hydraulique que le clapet anti-retour de levée peut laisser circuler depuis l'accumulateur basse-pression vers la chambre hydraulique d'actionneur passe intégralement par le clapet anti-retour de fin de détente, les deux dits clapets anti-retours étant placés en série, chaque dite vue étant reliée à un schéma hydraulique reprenant ies symboles usuellement utilisés pour décrire les circuits et organes hydrauliques, lesdites figures permettant d'expliquer - figure après figure - le séquencement du fonctionnement dudit actionneur hydraulique suivant l'invention

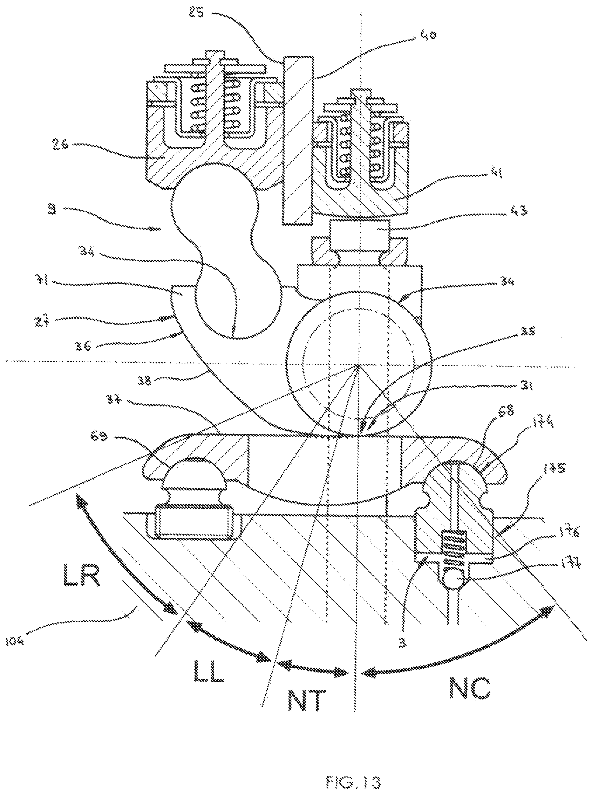

Figure 13 est une vue simplifiée en coupe schématique du levier à rapport de bras progressif et des pistons avec lesquels il coopère selon un mode particulier de réalisation de l'actionneur hydraulique de soupape à régénération suivant l'invention qui prévoit un vérin de rattrapage de jeu qui supporte la surface de réaction de levier, et qui s'intercale entre ladite surface et la culasse.

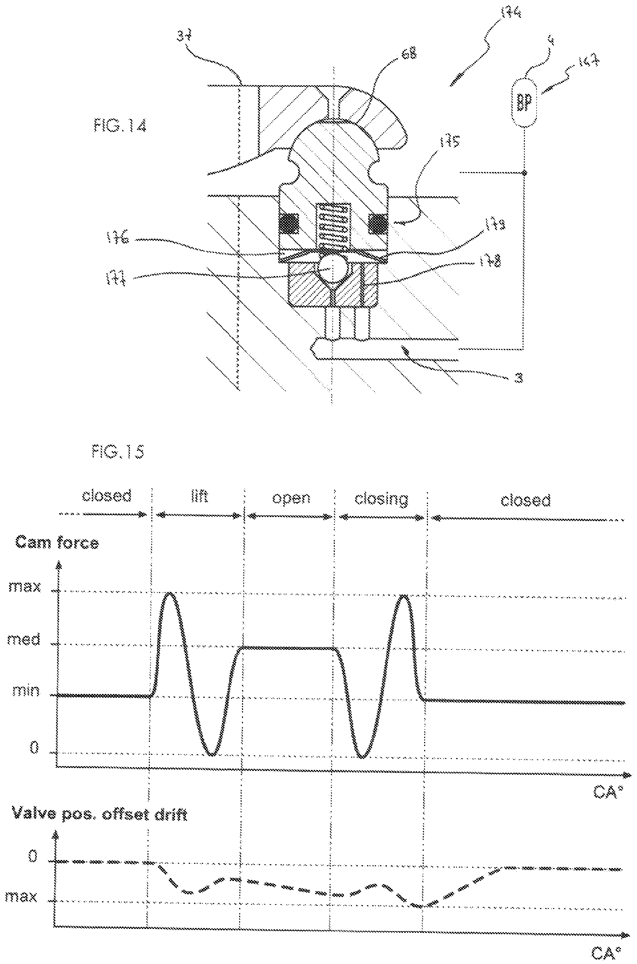

Figure 14 est une vue simplifiée en coupe schématique d'une variante du vérin de rattrapage de jeu qui. selon i'actionneur hydraulique de soupape à régénération suivant l'invention, prévoit un vérin de rattrapage de jeu qui comporte un clapet anti-retour de rattrapage de jeu et un ajutage de rattrapage de jeu placés en parallèle, ledit vélin comportant en outre un ressort de rattrapage de jeu qui tend à le faire avancer.
Figure 15 est un graphe qui illustre la dérive en compression ou en extension du vérin de rattrapage de jeu tel qu'illustré en figure 14, ceci en fonction de révolution de l'effort exercé sur le point d'application de l'effort de soupape selon l'actionneur hydraulique de soupape à régénération suivant l'invention.

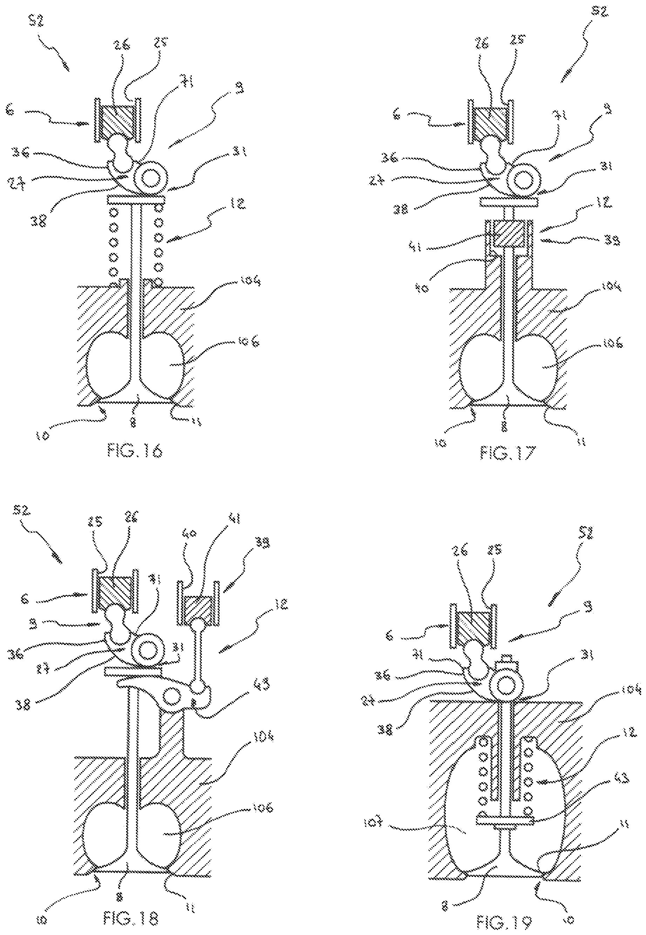

Figure 16 est une vue simplifiée en coupe schématique d'un mode particulier de réalisation de l'actionneur hydraulique de soupape à régénération suivant l'invention selon lequel la soupape s'ouvre vers l'intérieur de la chambre de compression ou combustion, le dispositif de rappel de soupape étant constitué d'un ressort hélicoïdal connu en soi.
Figure 17 est une vue simplifiée en coupe schématique d'un mode particulier de réalisation de l'actionneur hydraulique de soupape à régénération suivant l'invention selon lequel la soupape s'ouvre vers l'intérieur de la chambre de compression ou combustion le dispositif de rappel de soupape étant constitué d'un vérin de rappel de soupape qui est coaxial à ladite soupape et dont le piston de vérin de rappel est solidaire de la queue de soupape.
Figure 18 est une vue simplifiée en coupe schématique d'un mode particulier de réalisation de l'actionneur hydraulique de soupape à régénération suivant l'invention selon lequel la soupape s'ouvre vers l'intérieur de la chambre de compression ou combustion, le dispositif de rappel de soupape étant constitué d'un vérin de rappel de soupape qui rappelle la soupape en fermeture par l'intermédiaire d'un levier de rappel
Figure 19 est une vue simplifiée en coupe schématique d'un mode particulier de réalisation de l'actionneur hydraulique de soupape à régénération suivant i'invention particulièrement adapté aux compresseurs alternatifs à piston et selon lequel la soupape s'ouvre vers l'extérieur de la chambre de compression ou combustion. le dispositif de rappel de soupape étant constitué d'un ressort hélicoïdal logé selon le cas dans le conduit d'admission ou dans le conduit d'échappement ou de refoulement.

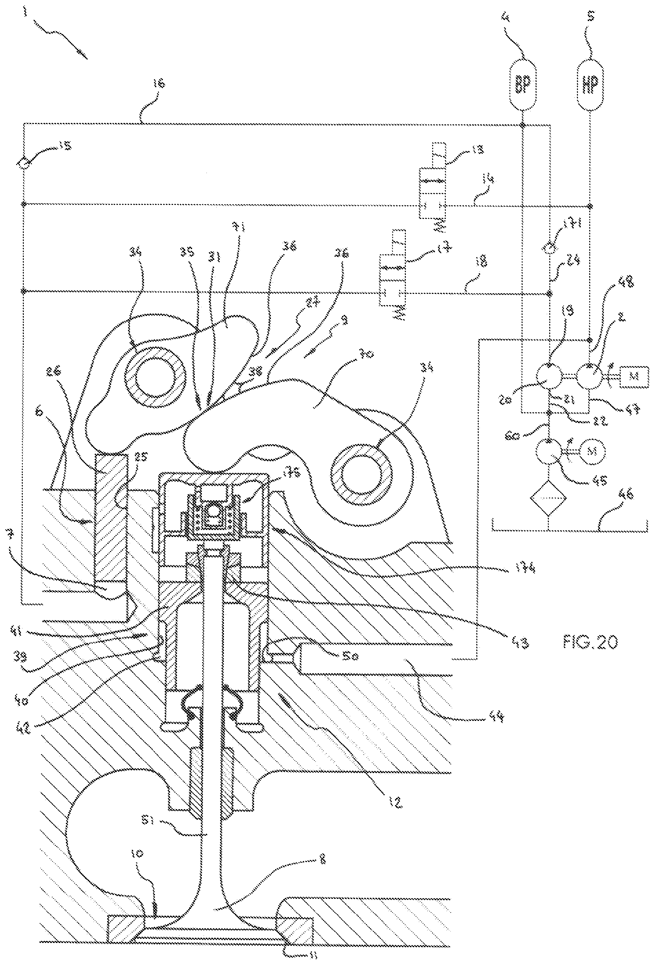

Figure 20 est une vue en coupe schématique d'un mode particulier de réalisation de l'actionneur hydraulique de soupape à régénération suivant l'invention selon lequel la soupape s'ouvre vers l'intérieur de la chambre de compression ou combustion, le dispositif de rappel de soupape étant constitué d'un vénn de rappel de soupape qui est coaxial à ladite soupape et dont le piston de vérin de rappel est solidaire de la queue de soupape tandis qu'un linguet actionneur de soupape forme une partie du levier à rapport de bras progressif.

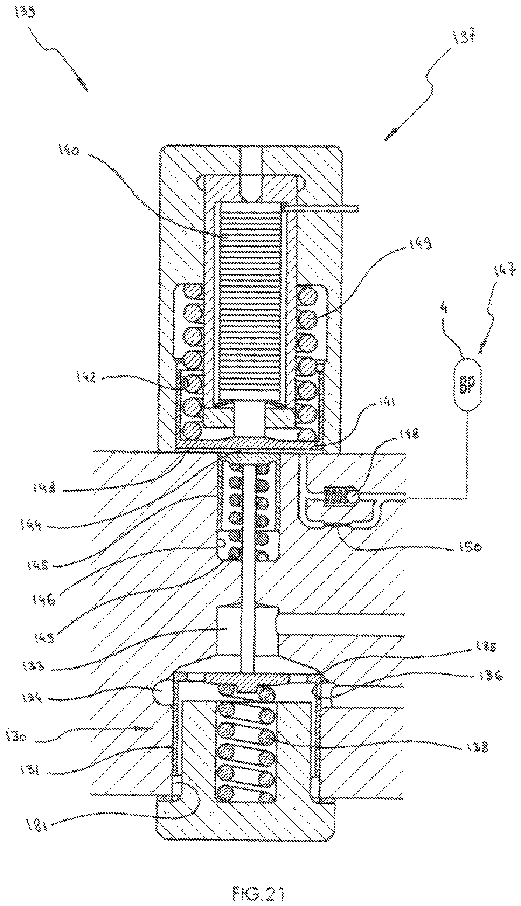

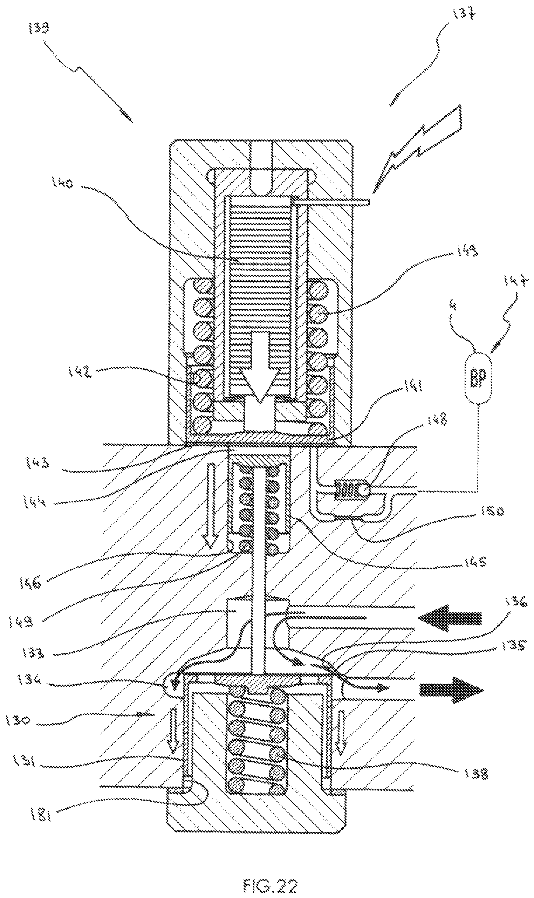

Figures 21 et 22 sont des vues en coupe schématique de l'actionneur piézoélectrique à amplification hydraulique tel qu'il est prévu à titre de variante de l'actionneur de tube par l'actionneur hydraulique de soupape à régénération suivant l'invention, lesdites figures 21 et 22 représentant le tube obturateur respectivement reposé sur le siège de tube avec lequel il coopère, puis maintenu à une certaine distance dudit siège pour laisser passer le fluide hydraulique depuis le volume interne de tube vers le collecteur-répartiteur externe de tube.

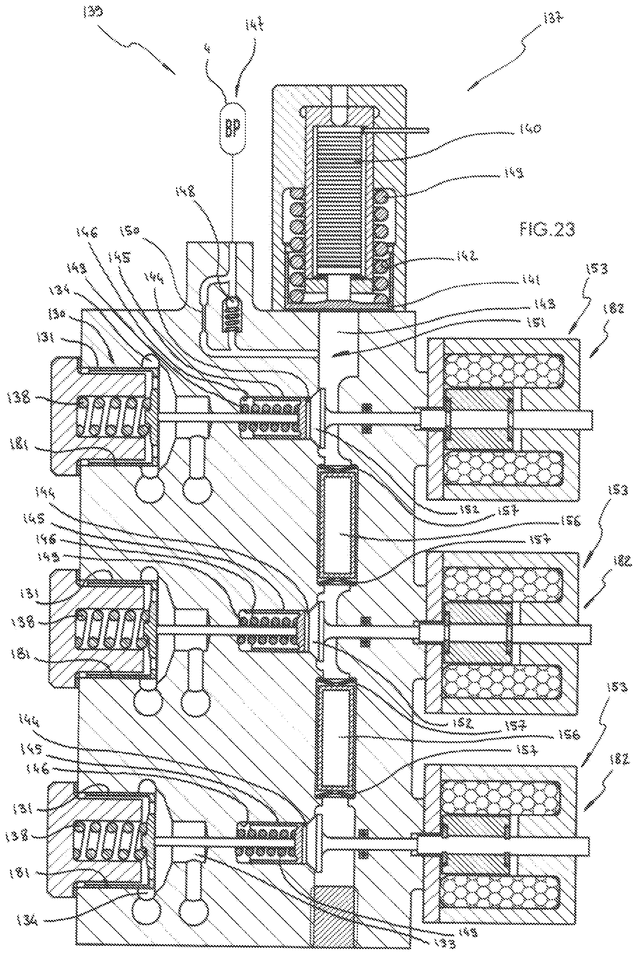

Figure 23 est une vue en coupe schématique de l'actionneur piézoélectrique à amplification hydraulique que peut comprendre l'actionneur hydraulique de soupape à régénération suivant l'invention, la chambre émettrice d'actionneur dudit actionneur piézoélectrique pouvant communiquer via une rampe commune de chambres réceptrices avec plusieurs chambres réceptrices d'actionneur qui peuvent chacune être mise ou non en communication avec ladite rampe par une vanne de sélection.

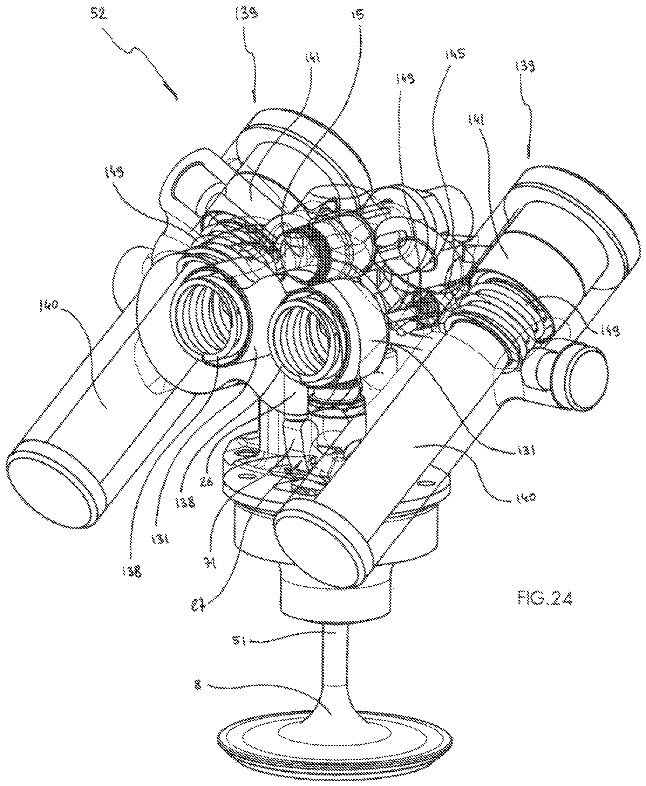

Figure 24 est une vue tridimensionnelle fantome de la cartouche d'actionneur de l'actionneur hydraulique de soupape à régénération suivant l'invention, la vanne hydraulique de levée de soupape et la vanne hydraulique de fermeture de soupape étant constituées d'une vanne tubulaire mue en translation longitudinale par un actionneur piézoélectrique à amplification hydraulique.

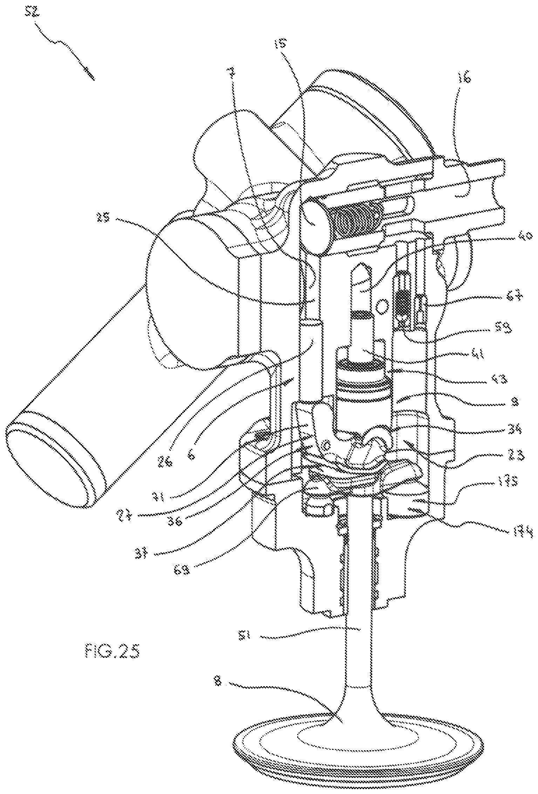

Figure 25 est une vue en coupe tridimensionnelle de l'actionneur hydraulique de soupape à régénération suivant l'invention et suivant la configuration particulière montrée en figure 24, ladite coupe mettant particulièrement en évidence les principaux composants mobiles ou non qui coopèrent directement avec la soupape, et le clapet anti-retour de levée.

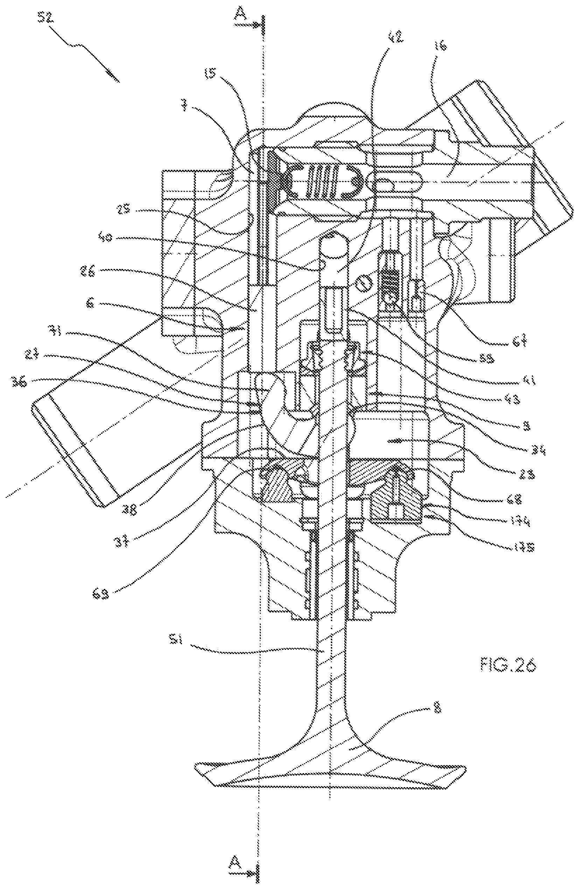

Figure 26 est une vue en coupe tridimensionnelle de l'actionneur hydraulique de soupape à régénération suivant l'invention et suivant la configuration particulière montrée en figure 24. ladite coupe mettant particulièrement en évidence les principaux composants mobiles ou non qui coopèrent directement avec la soupape, et le clapet anti-retour de levée.

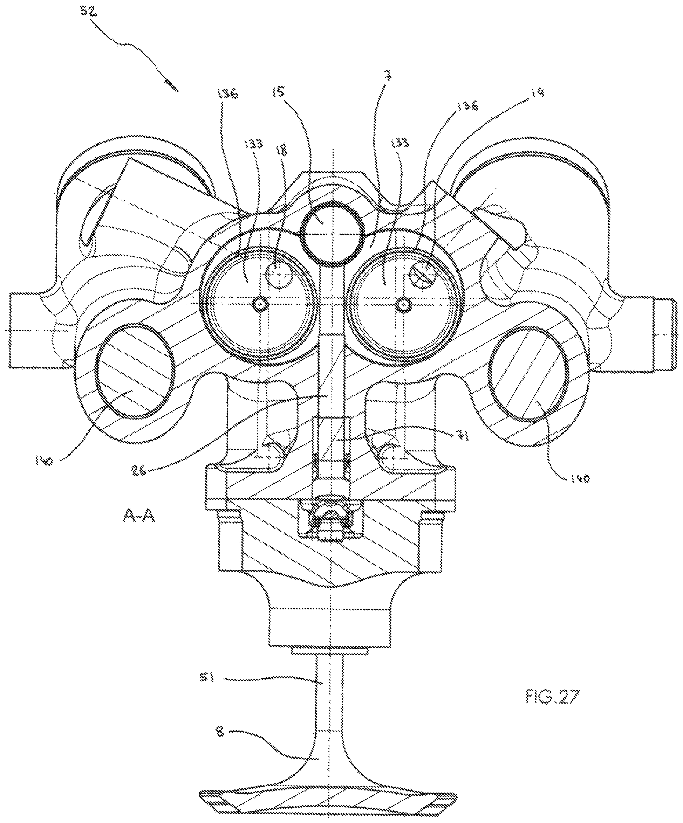

Figure 27 est une vue en coupe transversale de l'actionneur hydraulique de soupape à régénération suivant l'invention et suivant la configuration particulière montrée en figure 24, ladite coupe étant perpendiculaire à celle montrée en figure 26 et mettant en évidence la chambre hydraulique d'actionneur.

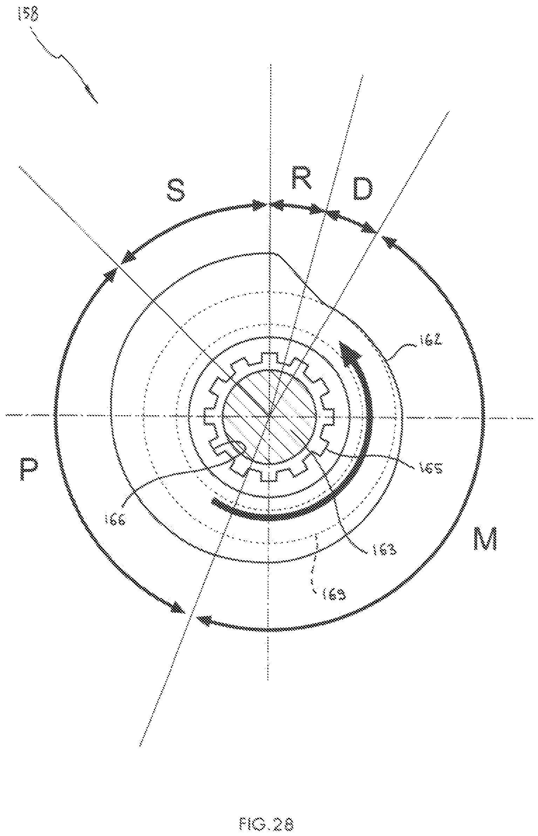

Figure 28 est une vue en coupe schématique de la came de fermeture et régénération que peut comprendre le moteur hydraulique de fermeture et régénération de l'actionneur hydraulique de soupape à régénération suivant l'invention, ladite figure montrant les différents secteurs angulaires que peut exposer le profil de came de fermeture et régénération sur lequel prend appui le piston de fermeture et régénération.

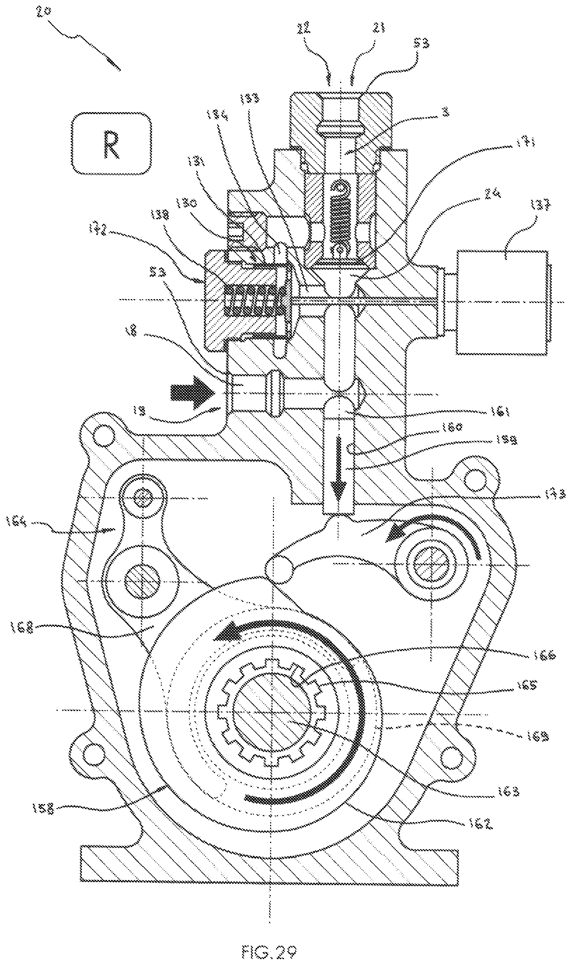

Figures 29 a 33 sont des vues en coupe schématique illustrant par étapes successives le fonctionnement d'une configuration particulière du moteur hydraulique de fermeture et régénération de l'actionneur hydraulique de soupape à régénération suivant l'invention selon laquelle une came de fermeture et régénération est montée sur un arbre de moteur hydraulique entraîné en rotation par le compresseur ou moteur à piston alternatif au moyen d'une poulie de moteur hydraulique, ladite came pouvant être décalée angulairement par rapport audit arbre par des moyens de déphasage de came constitués de cannelures hélicoïdales mâles aménagées sur ia face cylindrique externe dudit arbre qui coopérent avec des cannelures hélicoidales femelles aménagées à l'intérieur de ladite came cette dernière pouvant être déplacée ou maintenue axialement par rapport à l'arbre de moteur hydraulique par un actionneur de déphasage de came par l'intermédiaire d'une fourchette de déphasage.

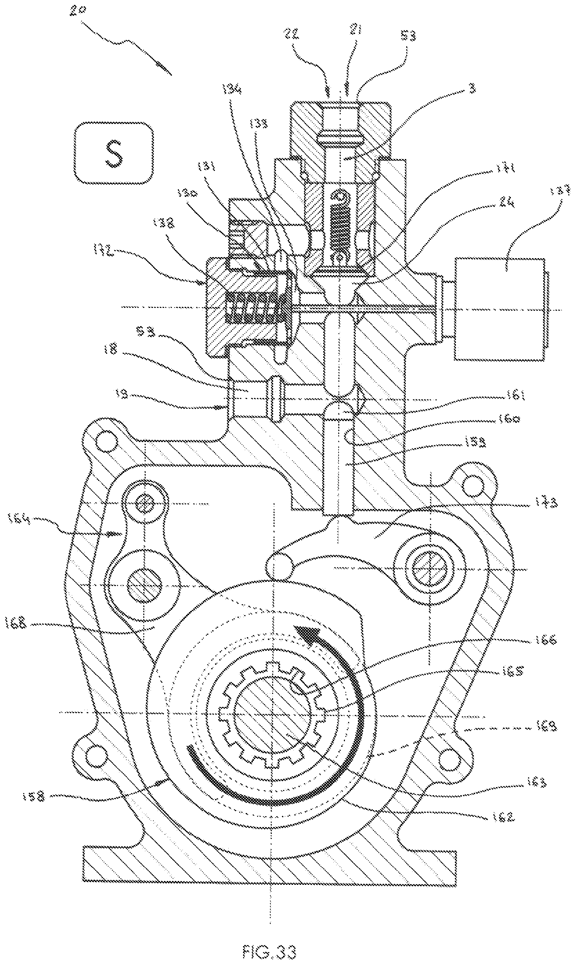

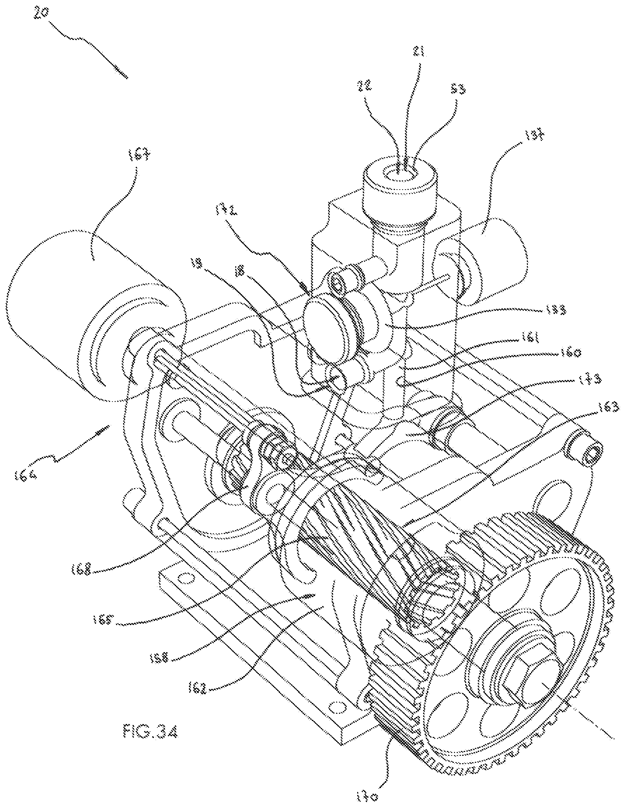

Figure 34 est une vue tridimensionnelie fantôme du moteur hydraulique de fermeture et régénération de l'actionneur hydraulique de soupape à régénération suivant l'invention montré en figures 29 à 33.

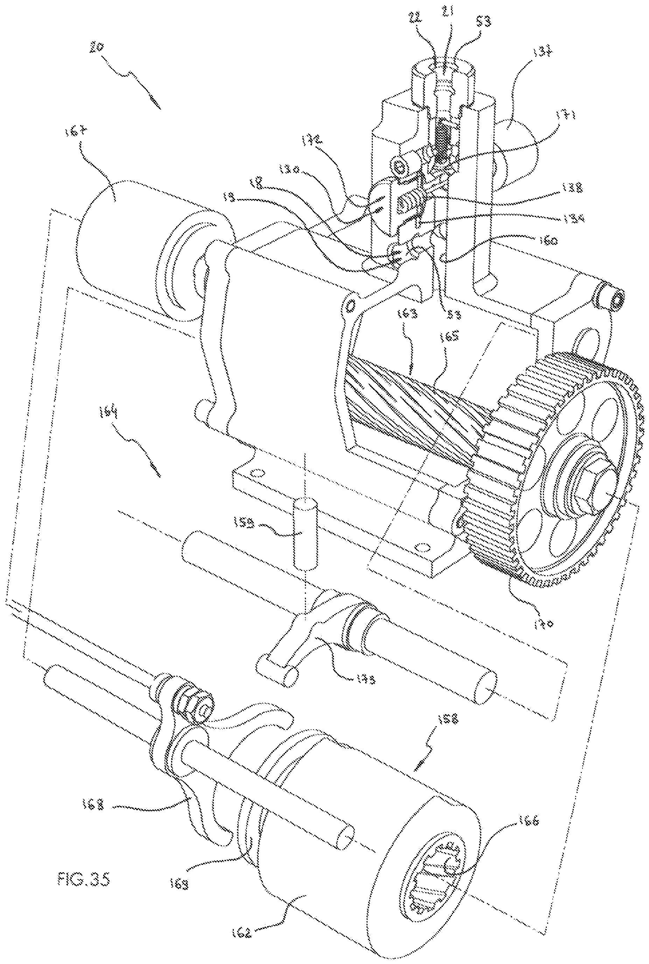

Figure 35 est une vue tridimensionnelle éclatée et en écorché du moteur hydraulique de fermeture et régénération de l'actionneur hydraulique de soupape à régénération suivant l'invention montré en figures 29 à 33.

### DESCRIPTION DE L'INVENTION :

On a montré en figures 1 à 35 l'actionneur hydraulique de soupape à régénération 1, divers détails de ses composants: ses variantes, et ses accessoires.

Comme l'illustre la figure 2, l'actionneur hydraulique de soupape à régénération 1 est particulièrement prévu pour un compresseur ou moteur à piston alternatif 100 qui comprend au moins un piston 101 relié à des moyens de transmission 102 pour aller et venir dans un cylindre 103 fermé par une culasse de compresseur ou moteur 104

Toujours en figure 2. on remarque que le piston 101. le cylindre 103 et la culasse de compresseur ou moteur 104 forment une chambre de compression ou combustion 105 dans laquelie débouche au moins un conduit d'admission 106 et au moins un conduit d'échappement ou de refoulement 107, l'un l'autre ou les deux dits conduit 106, 107 étant reliés à ladite chambre 105 par un orifice de conduit 10 qu'une soupape 8 peut obturer quand elie repose sur un siège de soupape 11.

Comme l'illustrent particulièrement la figure 1 et les figures 5 à 12, l'actionneur hydraulique de soupape à régénération 1 suivant l'invention comprend au moins une pompe hydraulique haute-pression d'alimentation 2 qui peut admettre un fluide hydraulique 3 depuis un accumulateur basse-pression 4 ou une bâche à fluide 46 via un conduit d'alimentation basse-pression 47 pour refouler ledit fluide 3 vers un accumulateur haute-pression 5 via un conduit d'alimentation haute-pression 48.

On note que la pompe hydraulique haute-pression d'alimentation 2 peut par exemple être entrainée en rotation par des moyens de transmission 102 tels que montrés en figures 2 à 4. Ladite pompe 2 peut en outre être à piston, à engrenage, à palette ou de tout autre type connu de l'homme de l'art, tandis que l'accumulateur haute-pression 5 peut être à piston, à membrane, à ressort mécanique ou pneumatique, ou de tout type également connu de l'homme de l'art.

La figure 1 et 2, les figures 5 à 12, les figures 16 à 20. et les figures 25 et 26 illustrent aussi que l'actionneur hydraulique de soupape à régénération 1 suivant l'invention comprend au moins un vérin d'actionneur 6 qui comprend un cylindre de vérin d'actionneur 25 coiffé d'une culasse de vérin d'actionneur 49. ledit cylindre 25 étant directement ou indirectement arrimé à la culasse de compresseur ou moteur 104.

Sur lesdites figures, on remarque que le cylindre de vérin d'actionneur 25 et la culasse de vérin d'actionneur 49 forment avec un piston de vérin d'actionneur 26 une chambre hydraulique d'actionneur 7, ledit piston 26 étant mécaniquement relié par des moyens de transmission 9 à la soupape 8, lesdits moyens 9 étant prévus de telle sorte que si la chambre hydraulique d'actionneur 7 est soumise à une pression exercée par le fluide hydraulique 3. le piston de vénn d'actionneur 26 tend à éloigner ladite soupape 8 du siège de soupape 11 avec lequel elie coopère ou inversement à rapprocher ladite soupape 8 du siège de soupape 11.

On note que l'orifice de conduit 10 peut être indifféremment aménagé dans le conduit d'admission 106 et/ou dans le conduit d'échappement ou de refoulement 107 de sorte que la soupape 8 interdit le passage de tout gaz dans ledit conduit 106, 107 lorsqu'elle repose sur son siège de soupape 11.

Comme montré de façon particulièrement visible en figure 1 et 2, en figures 5 à 12, et en figures 16 à 20, l'actionneur hydraulique de soupape à régénération 1 suivant l'invention comprend moins un dispositif de rappel de soupape 12 qui exerce sur la soupape 8 un effort antagoniste à celui que peut produire le vérin d'actionneur 6, ledit dispositif 12 tendant ainsi à ramener la soupape 8 au contact du siège de soupape 11 avec lequel elle coopère ou. selon le cas. à l'éloigner dudit siège 11. ledit dispositif de rappel 12 pouvant par exemple être un ressort hélicoïdal connu en soi tel qu'ordinairement utilisé pour rappeler au contact de leur siège les soupapes des moteurs à combustion interne alternatifs,

En figure 1, en figures 5 à 12 et en figure 20, on remarque que l'actionneur hydraulique de soupape à régénération 1 suivant l'invention comprend au moins une vanne hydraulique de levée de soupape 13 qui peut ouvrir ou fermer un conduit de levée haute-pression 14 qui relie l'accumulateur haute-pression 5 à la chambre hydraulique d'actionneur 7.

On remarque d'ailleurs que l'ouverture de la vanne hydraulique de levée de soupape 13 permet de lever la soupape 8 du siège de soupape 11 avec lequel elie coopère, puis d'éloigner iadite soupape 8 dudit siége 11 jusqu'à obtenir la section de passage recherchée au niveau de l'orifice de conduit 10.

A titre d'exemple, la vanne hydraulique de levée de soupape 13 peut être une électrovanne de tout type connu de l'homme de l'art, pilotée par un calculateur. On note également que si plusieurs soupapes 8 doivent être simultanément levées de leur siège consécutivement à la mise en relation simultanée de leurs chambres hydrauliques d'actionneur 7 respectives avec un même accumulateur haute-pression 5 par leurs vannes hydrauliques de levée de soupape 13 respectives, lesdites soupapes 8 peuvent être communément reliées audit accumulateur 5 via un diviseur de débit connu en soi qui garantit que lesdites soupapes 8 se lèvent chacune du siège de soupape 11 avec lequel elle coopèrent à la même vitesse, et au même moment.

La figure 1. les figures 5 à 12, la figure 20 et les figures 24 à 27 illustrent en outre que l'actionneur hydraulique de soupape à régénération 1 suivant l'invention comprend au moins un clapet anti-retour de levée 15 placé dans un conduit de levée inertielle 16 qui relie l'accumulateur basse-pression 4 ou la bâche á fluide 46 à ia chambre hydraulique d'actionneur 7. ledit clapet 15 permettant au fluide hydraulique 3 - via ledit conduit 16 - de circuler depuis l'accumulateur basse-pression 4 ou la bâche à fluide 46 vers la chambre hydraulique d'actionneur 7, mais non en sens inverse. ledit clapet 15 pouvant être constituè d'une bilie maintenue plaquée sur son siège par un ressort.

En figure 1, en figures 5 à 12 et en figure 20. on remarque que l'actionneur hydraulique de soupape á régénération 1 suivant l'invention comprend au moins une vanne hydraulique de fermeture de soupape 17 qui peut ouvrir ou fermer un conduit de fermeture et régénération 18 qui relie la chambre hydraulique d'actionneur 7 avec une admission de fluide 19 que présente un moteur hydraulique de fermeture et régénération 20. une sortie de fluide 21 que présente également ledit moteur 20 étant reliée avec l'accumulateur basse-pression 4, ou avec la bâche à fluide 46. ou à quelque accumulateur basse-pression que ce soit par un conduit de retour basse-pression de moteur hydraulique 22.

On remarque que l'ouverture de la vanne hydraulique de fermeture de soupape 17 permet de reposer la soupape 8 sur le siège de soupape 11 avec lequel elle coopère. A titre d'exemple. ladite vanne 17 peut être une électrovanne de tout type connu de l'homme de l'art, pilotée par un calculateur.

On note que le moteur hydraulique de fermeture et régénération 20 peut être á pistons, à engrenage, à palette, ou de tout type connu de l'homme de l'art.

On note également que si plusieurs soupapes 8 doivent être simultanément reposées sur leur siège par le moteur hydraulique de fermeture et régénération 20, lesdites soupapes 8 peuvent être communément relièes audit moteur 20 via un diviseur de débit connu en soi qui garantit que lesdites soupapes 8 reviennent toutes au contact du siège de soupape 11 avec lequel elles coopèrent à la même vitesse, et au même moment

Avantageusement, l'arbre ou le dispositif de transmission mécanique qui entraine le moteur hydraulique de fermeture et régénération 20 peut simultanément entraîner la pompe hydraulique haute-pression d'alimentation 2 et/ou la pompe hydraulique basse-pression de gavage 45, les deux dites pompes 2, 45 pouvant par exemple être constituées d'au moins une came qui coopère avec au moins un piston qui forme avec un cylindre une chambre munie de clapets d'admission et de refoulement.

En figure 2, en figures 5 á 13, en figures 16 à 20 et en figures 24 á 26, on remarque que l'actionneur hydraulique de soupape à régénération 1 suivant l'invention comprend au moins un levier à rapport de bras progressif 27 constituant en tout ou partie les moyens de transmission 9, ledit levier 27 exposant au moins un point d'application de l'effort de vérin 28 sur lequel le piston de vérin d'actionneur 26 peut directement ou indirectement appliquer un effort moteur ou résistant au moins un point d'application de l'effort de soupape 29 sur lequel la soupape 8 peut directement ou indirectement appliquer un effort moteur ou résistant, et au moins un point d'application de l'effort de réaction sur la culasse 30 sur lequel s'applique directement ou indirectement un effort sur la culasse de compresseur ou moteur 104.

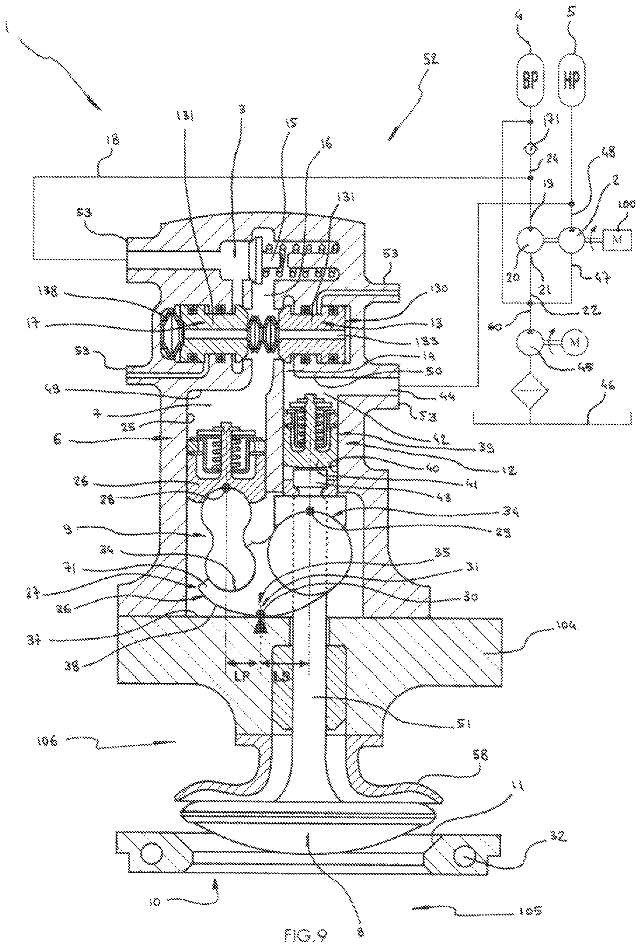

Comme le montre clairement la figure 9, cette configuration permet de définir de première part, un bras de levier de piston de vérin LP compris soit entre le point d'application de l'effort de vérin 28 et le point d'application de l'effort de soupape 29 soit entre ledit point d'application de l'effort de vérin 28 et le point d'application de l'effort de réaction sur la culasse 30, et de deuxième part, un bras de levier d'action de soupape LS qui est compris entre le point d'application de l'effort de soupape 29 et le point d'application de l'effort de réaction sur la culasse 30.

On remarque notamment en figure 20 que le levier à rapport de bras progressif 27 peut être constitué de plusieurs pièces. En l'occurrence, ledit levier 27 comprend un linguet actionneur de soupape 70 qui s'articule dans la culasse de compresseur ou moteur 104.

Comme on le voit en figures 5 à 13 et en figures 16 à 20. l'actionneur hydraulique de soupape à régénération 1 suivant l'invention peut comporter des moyens de déplacement du point d'application 31 qui déplacent le point d'application de l'effort de vérin 28 et/ou le point d'application de l'effort de soupape 29 et/ou le point d'application de l'effort de réaction sur la culasse 30 le long du levier à rapport de bras progressif 27 durant la course d'ouverture de la soupape 8

Selon cette configuration particuliére. le rapport entre la longueur du bras de levier de piston de vérin LP et la longueur du bras de levier d'action de soupape LS varie en fonction de la levée de la soupape 8.

Par exemple, le bras de levier de piston de vérin LP sur lequel le piston de vérin d'actionneur 26 applique un effort peut présenter sa plus grande longueur lorsque la soupape 8 est peu éloignée du siège de soupape 11 et une plus petite longueur lorsque ladite soupape 8 est davantage éloignée dudit siège 11, la situation étant exactement inverse s'agissant du bras de levier d'action de soupape LS.

En d'autres termes, le levier à rapport de bras progressif 27 peut être avantageusement prévu pour que pour une vitesse constante donnée du piston de vérin d'actionneur 26, la vitesse de levée ou de repose de la soupape 8 soit plus petite lorsque ladite soupape 8 est positionnée au voisinage de sa position de contact avec son siège de soupape 11. que lorsque ladite soupape 8 est davantage éloignée dudit siège 11.

On note qu'à titre d'exemple de réalisation illustré en figures 2, 5 à 13, 16 à 19 et 24 à 27, ies moyens de déplacement du point d'application 31 peuvent prendre la forme d'une camelevier 71.

Selon les variantes de l'actionneur hydraulique de soupape à régénération 1 suivant l'invention, on note que le point d'application de l'effort de vérin 28 et/ou le point d'application de l'effort de soupape 29 et/ou le point d'application de l'effort de réaction sur la culasse 30 forme directement ou indirectement respectivement avec le piston de vérin d'actionneur 26, et/ou avec la soupape 8 et/ou avec la culasse de compresseur ou moteur 104 avec le ou laquelie il coopère soit au moins une liaison pivot 34, soit au moins une liaison roulante-glissante 35, cette dernière constituant les moyens de déplacement du point d'application 31

En alternative, lesdits points d'application 29. 29, 30 peuvent aussi former une liaison roulante dont la cinématique peut être imposée par un dispositif à engrenage de quelque type que ce soit.

Comme on le voit en figures 5 à 13, en figures 16 à 20, et en figures 25 et 26, la liaison roulante-glissante 35 peut être constituée d'au moins une piste de contact de levier 36 aménagée sur le levier à rapport de bras progressif 27 au niveau du point d'application de l'effort de vérin 28 et/ou du point d'application de l'effort de soupape 29 et/ou du point d'application de l'effort de réaction sur la culasse 30, ladite piste 36 coopérant avec une surface de réaction de levier 37 aménagée directement ou indirectement respectivement sur le piston de vérin d'actionneur 26 et/ou sur la soupape 8 et/ou sur la culasse de compresseur ou moteur 104, ladite piste 36 et/ou ladite surface 37 présentant un profil de contact courbe 38 sur lequel s'établit le contact entre ladite piste 36 et ladite surface 37.

Il résulte du profil de contact courbe 38 que lorsque la soupape 8 se rapproche ou s'éloigne du siège de soupape 11 avec lequel elie coopère, la liaison roulante-glissante 35 se déplace le long du levier à rapport de bras progressif 27 ce qui par exemple et comme illustré en figure 9 augmente le bras de levier de piston de vérin LP et/ou diminue le bras de levier d'action de soupape LS, ou inversement.

On note que - comme montré tout particulièrement en figures 5 à 12, 17 à 20 et 25 et 26 - le dispositif de rappel de soupape 12 de l'actionneur hydraulique de soupape à régénération 1 suivant l'invention peut être constitué d'un vérin de rappel de soupape 39 qui comprend un cylindre de vènn de rappel 40 coiffé d'une culasse de vérin de rappel 50, ledit cylindre 40 étant directement ou indirectement arrimé à la culasse de compresseur ou moteur 104 cependant que ledit cylindre 40 et la culasse de vérin de rappel 50 forment avec un piston de vérin de rappel 41 une chambre hydraulique de vérin de rappel 42. ledit piston 41 étant mécaniquement relié à la soupape 8 par des moyens de transmission de rappel 43.

Selon cette variante, la chambre hydraulique de vérin de rappel 42 peut être reliée à l'accumulateur haute-pression 5 par un conduit de pression de rappel 44. En alternative, le dispositif de rappel de soupape 12 peut être constitué d'un ressort de rappel de soupape connu en soi.

On remarque en figure 1, en figures 5 à 12 et en figure 20 que le niveau et la pression du fluide hydraulique 3 que contient l'accumulateur basse-pression 4 peuvent être mainlenus dans une certaine plage de valeur par une pompe hydraulique basse-pression de gavage 45 qui peut transférer ledit fluide 3 depuis la bâche á fluide 46 vers ledit accumulateur 4 via un conduit de gavage basse-pression 60.

On note que la bâche á fluide 46 peut être un réservoir non-pressurisé connu en soi dans lequel s'écoulent notamment les fuites de fluide hydraulique 3 qui peuvent survenir de quelque organe de l'actionneur hydraulique de soupape à régénération 1 suivant l'invention que ce soit.

Les figures 2 à 12 et les figures 24 à 27 montrent qu'au moins la soupape 8 avec ou sans le siège de soupape 11 avec lequel elie coopère, le vérin d'actionneur 6, les moyens de transmission 9, le dispositif de rappel de soupape 12, le clapet anti-retour de levée 15. la vanne hydraulique de levée de soupape 13, et la vanne hydraulique de fermeture de soupape 17 peuvent être communément logés dans une cartouche d'actionneur 52 qui expose au moins un connecteur hydraulique 53.

On remarque que si - comme montré en figures 3 et 4 - la cartouche d'actionneur 52 est montée sur l'ensemble de cylindre détendeur 54 du moteur thermique à transfert-détente et régénération dont le brevet français appartenant au demandeur a été publié sous le N° FR 3 032 236, la cartouche d'actionneur 52 peut comporter notamment une cage de soupape 56 logée dans la culasse inférieure de cylindre détendeur 33 et la culasse supérieure de cylindre détendeur 61 que comprend ledit ensemble 54

En ce cas, la soupape 8 peut être guidée directement ou indirectement dans ladite cage 56 qui en outre héberge le siège de soupape 11, ce dernier et/ou la partie de la cage de soupape 56 qui guide la soupape 8 pouvant être refroidi par un circuit de refroidissement de soupape 32 dans lequel circule un fluide caloporteur comme montrée en figures 5 à 12.

On remarque que dans ce contexte, avantageusement et comme représenté ègalement en figures 5 à 12, une queue de soupape 51 que présente la soupape 8 peut être protégée par un écran thermique de soupape 58 qui limite la quantité de chaleur reçue par la soupape 8, ladite chaleur devant être évacuée par le fluide caloporteur.

Comme le montrent les figures 5 à 12 et 21 à 24, la vanne hydraulique de levée de soupape 13 et/ou la vanne hydraulique de fermeture de soupape 17 peut être constituée d'une vanne tubulaire 130 qui comprend un tube obturateur 131 qui peut être mû en translation longitudinale par un actionneur de tube 137, ledit tube 131 étant logé de manière étanche dans un alésage de tube obturateur 181 et se terminant par une portée d'étanchéité de tube 135 qui peut soit reposer sur un siège de tube 136 pour former avec ce dernier une ligne continue de contact étanche, soit être maintenue à une certaine distance dudit siège 136 pour laisser passer le fluide hydraulique 3 depuis un volume interne de tube 133 vers un collecteur-répartiteur externe de tube 134 ou inversement.

On note que la portée d'étanchéité de tube 135 peut être soit maintenue au contact du siège de tube 136, soit maintenue à distance dudit siège 136 par un ressort de rappel de tube 138 selon que la vanne tubulaire 130 est respectivement de type « normalement fermée » ou « normalement ouverte ». On note aussi que l'actionneur de tube 137 peut être indifféremment électrique, électromagnétique, piézoélectrique, pneumatique, hydraulique, ou de tout type connu de l'homme de l'art,

Comme on l'a montré en figures 21 à 27, l'actionneur de tube 137 peut être un actionneur piézoélectrique à amplification hydraulique 139 qui comprend une pile d'éléments céramiques 140 qui se déforment mécaniquement quand on les soumet á un champ électrique, l'extrémité de ladite pile 140 étant reliée á un piston émetteur d'actionneur 141 de grand diamètre qui forme - avec un cylindre émeiteur d'actionneur 142 - une chambre émettrice d'actionneur 143 qui communique avec au moins une chambre réceptrice d'actionneur 144 cette dernière étant formée d'une part, par un piston récepteur d'actionneur 145 de petit diamètre qui est directement ou indirectement relié au tube obturateur 131 avec lequel il coopère de sorte à pouvoir mouvoir ce dernier en translation longitudinale, et d'autre part, par un cylindre récepteur d'actionneur 142.

On note que le rapport entre la section du piston émetteur d'actionneur 141 et la section du piston récepteur d'actionneur 145 détermine le rapport d'amplification du mouvement de l'actionneur piézoélectrique à amplification hydraulique 139.

Selon cette variante de l'actionneur hydraulique de soupape à régénération 1 suivant l'invention, la chambre émettrice d'actionneur 143 et la chambre réceptrice d'actionneur 144 peuvent être communément mises en relation avec une source de fluide hydraulique sous pression 147 par un clapet anti-retour de gavage d'actionneur 148 qui permet à du fluide hydraulique 3 d'ailer depuis ladite source 147 vers lesdites chambres 143, 144 et non l'inverse. Avantageusement, la source de fluide hydraulique sous pression 147 peut être l'accumulateur basse-pression 4.

Comme le montrent les figures 21 à 23. un ajutage antidérive 150 peut être placé en parallèle du clapet anti-retour de gavage d'actionneur 148, ledit ajutage 150 permettant au fluide hydraulique 3 d'aller depuis la source de fluide hydraulique sous pression 147 vers lesdites chambres 143, 144 ou inversement, tandis que ledit ajutage 150 forme un passage restreint au travers duquel seul un faible débit de fluide hydraulique 3 peut passer

On voit en figures 21 à 24 que le piston émetteur d'actionneur 141 peut recevoir un ressort de compensation de pression 149 qui tend à le rapprocher de la chambre émettrice d'actionneur 143, l'effort qu'exerce ledit ressort 149 sur ledit piston 141 étant inféneur ou égal à l'effort qu'exerce le fluide hydraulique 3 sur ledit piston 141 lorsque la pression régnant dans la chambre émettrice d'actionneur 143 est égale à celie régnant dans la source de fluide hydraulique sous pression 147.

Sur les mêmes dites figures 21 à 24, on remarque que le piston récepteur d'actionneur 145 peut recevoir un ressort de compensation de pression 149 qui tend à le rapprocher de la chambre réceptrice d'actionneur 144, l'effort qu'exerce ledit ressort 149 sur ledit piston 145 étant inférieur ou égal à l'effort qu'exerce le fluide hydraulique 3 sur ledit piston 145 lorsque la pression régnant dans la chambre réceptrice d'actionneur 144 est ègale à celle régnant dans la source de fluide hydraulique sous pression 147.

La figure 23 montre que selon une variante de l'actionneur hydraulique de soupape à régénération 1 suivant l'invention. la chambre émettrice d'actionneur 143 peut communiquer via une rampe commune de chambres réceptrices 151 avec plusieurs chambres réceptrices d'actionneur 144, le piston récepteur d'actionneur 145 formant chaque dite chambre réceptrice 144 pouvant en ce cas mouvoir en translation longitudinale un tube obturateur 131 qui lui est propre.

Selon la variante montrée en figure 23, on note que les chambres réceptrices d'actionneur 144 peuvent être chacune mise ou non en communication avec la rampe commune de chambres réceptrices 151 par une vanne de sélection 152 dont l'ouverture est commandée par un actionneur de vanne de sélection 153

Ainsi, pour que la pile d'éléments céramiques 140 puisse mouvoir en translation longitudinale le tube obturateur 131 correspondant á une chambre réceptnce d'actionneur 144, il faut préalablement que la vanne de sélection 152 qui coopère avec ladite chambre 144 mette cette dernière en communication avec la rampe commune de chambres réceptrices 151.

Cette configuration particulière de l'actionneur hydraulique de soupape á régénération 1 suivant l'invention permet par exemple de n'utiliser qu'une seule pile d'éléments céramiques 140 très rapide mais réputée chère et encombrante pour manœuvrer successivement plusieurs tubes obturateurs 131. la sélection des dits tubes 131 se faisant au moyen d'actionneurs de vannes de sélection 153 certes moins rapides: mais moins chers et moins encombrants tels que des actionneurs à solénoïde 182.

A titre d'exemple non-limitatif. cette stratégie particulière trouve tout son intérêt dans le cadre d'un moteur multicylindres à combustion interne alternatif á cycle de Diesel ou de Beau de Rochas dont les soupapes 8 d'admission et/ou d'échappement sont actionnées successivement selon un décalage angulaire important. Ledit décalage est par exemple de cent quatre-vingt degrés de rotation de vilebrequin dans le cas d'un moteur à quatre cylindres.

Toujours selon la variante montrée en figure 23, on remarque que la rampe commune de chambres réceptrices 151 peut héberger de façon non-étanche au moins un élément cylindrique incompressible 156 plein ou creux qui est maintenu centré au voisinage d'une certaine position longitudinale relative à la rampe commune de chambres réceptrices 151 par au moins deux ressorts antagonistes de centrage 157.

On note que ledit élément 156 est préférentiellement constitué d'un matériau à la fois peu compressible - c'est à dire dont le module d'élasticité est élevè, et de faible densité. Ledit élément 156 permet notamment de prévoir une rampe commune de chambres réceptrices 151 de grand diamètre intérieur ce qui permet de limiter la perte de charge que produit ladite rampe 151 lors de la circulation du fluide hydraulique 3, ceci sans avoir à subir la grande compressibilité qu'induirait sinon un grand volume de fluide hydraulique 3 à l'intérieur de ladite rampe 151.

Ainsi, lorsque le piston émetteur d'actionneur 141 expulse du fluide hydraulique 3 de la chambre émettrice d'actionneur 143, l'élément cylindrique incompressible 156 accompagne pour partie au moins dans son mouvement le fluide hydraulique 3 en se déplaçant librement dans la rampe commune de chambres réceptrices 151. Une fois la manœuvre d'ouverture et/ou de fermeture du tube obturateur 131 correspondant achevée, l'élément cylindrique incompressible 156 est ramené au voisinage de sa position initiale sous l'action conjuguée des deux ressorts antagonistes de centrage 157 avec lesquels ii coopère.

En figures 28 à 35, on a montré que le moteur hydraulique de fermeture et régénération 20 de l'actionneur hydraulique de soupape á régénération 1 suivant l'invention peut comprendre une came de fermeture et régénération 158 montée sur un arbre de moteur hydraulique 163 qui est entrainé - directement ou indirectement - en rotation par le compresseur ou moteur à piston alternatif 100 ou par tout moyen d'entrainement annexe audit compresseur ou moteur 100. un piston de fermeture et régénération 159 prenant appui directement ou indirectement sur ladite came 158 et formant avec un cylindre de fermeture et régénération 160 - une chambre de fermeture et régénération 151 qui communique avec l'admission de fluide 19.

Comme montré en figures 34 et 35, l'arbre de moteur hydraulique 163 peut être entrainé en rotation par le compresseur ou moteur à piston alternatif 100 par l'intermédiaire d'une poulie de moteur hydraulique 170 entrainée par une courroie ou une chaine, par des pignons ou par quelque transmission mécanique, électrique ou hydraulique que ce soit à rapport fixe ou variable.

On remarque aussi que ···· comme illustré en figures 29 à 35 - le piston de fermeture et régénération 159 peut prendre appui sur la came de fermeture et régénération 158 par l'intermédiaire d'un linguet de fermeture et régénération 173.

La figure 28 montre que la came de fermeture et régénération 158 peut exposer un profil de came de fermeture et régénération 162 qui comporte au moins un secteur angulaire de régénération R sur lequel prend appui le piston de fermeture et régénération 159 pour reposer la soupape 8 sur le siège de soupape 11

En outre, la came de fermeture et régénération 158 peut exposer un profil de came de fermeture et régénération 162 qui comporte au moins un secteur angulaire de pré-compression P sur lequel prend appui le piston de fermeture et régénération 159 pour précomprimer le conduit de fermeture et régénération 18 entre deux reposes de la soupape 8 sur le siège de soupape 11

En figures 29 à 35, on a montré que la came de fermeture et régénération 158 peut être décalée angulairement par rapport à l'arbre de moteur hydraulique 163 par des moyens de déphasage de came 164.

Sur ces mêmes figures, on remarque que les moyens de déphasage de came 164 peuvent être constitués d'au moins une cannelure hélicoïdale mâle 165 aménagée sur la face cylindrique externe de l'arbre de moteur hydraulique 163 qui coopère avec au moins une cannelure hélicoïdale femeile 166 aménagée à l'intérieur de la came de fermeture et régénération 158, cette dernière pouvant être déplacée puis maintenue en place axialement par rapport à l'arbre de moteur hydraulique 163 par un actionneur de déphasage de came 167 qui peut être un moteur électrique linéaire ou rotatif pas-à-pas. un vérin hydraulique, ou quelque un actionneur que ce soit connu ou non de l'homme de l'art

On remarque en figures 29 à 35 que l'actionneur de déphasage de came 167 peut être relié à la came de fermeture et régénération 158 par l'intermédiaire d'une fourchette de déphasage 168 qui coopère avec une gorge de déphasage 169 que présente la came de fermeture et régénération 158.

En figures 29 à 33 et en figure 35, on voit que le conduit de fermeture et régénération 18 peut comporter un clapet anti-retour de fin de détente 171 qui permet á du fluide hydraulique 3 provenant soit de l'accumulateur basse-pression 4, soit de la bâche à fluide 46. soit d'une source de fluide hydraulique sous pression 147 de pénétrer dans ledit conduit 18 via un canai de roue libre 24, mais non d'en ressortir.

On note que le clapet anti-retour de fin de détente 171 peut être constitué d'une bille maintenue plaquée sur son siège par un ressort. On notera aussi que selon une configuration particulière montrée en figures 5 à 12 de l'actionneur hydraulique de soupape à régénération 1 suivant l'invention, le débit de fluide hydraulique 3 que le clapet anti-retour de levée 15 peut laisser circuler depuis l'accumulateur basse-pression 4 vers la chambre hydraulique d'actionneur 7 peut passer intégralement par le clapet anti-retour de fin de détente 171, les deux clapets anti-retours 15, 171 étant alors placés en série.

Cet agencement particulier n'a aucune conséquence notable sur le fonctionnement de l'actionneur hydraulique de soupape à régénération 1 et permet notamment de faire l'économie d'un connecteur hydraulique 53 pour mettre en relation la chambre hydraulique d'actionneur 7 avec l'accumulateur basse-pression 4.

En figures 29 à 35, on remarque que le conduit de fermeture et régénération 18 peut comporter une vanne de pré-compression 172 qui permet à du fluide hydraulique 3 provenant soit de l'accumulateur basse-pression 4, soit de la bâche à fluide 46, soit d'une source de fluide hydraulique sous pression 147 de pénétrer dans ledit conduit 18 et/ou d'en ressortir.

Selon un mode particulier de réalisation du l'actionneur hydraulique de soupape á régénération 1 suivant l'invention, la vanne de pré-compression 172 peut être constituée d'une vanne tubulaire 130

En figures 13, 14, 20. 25 et 26, on remarque que le point d'application de l'effort de vérin 28 et/ou le point d'application de l'effort de soupape 29 et/ou le point d'application de l'effort de réaction sur la culasse 30 peut comporter des moyens de rattrapage de jeu 174.

On voit d'ailleurs qu'avantageusement, les moyens de rattrapage de jeu 174 peuvent être constitués d'un vérin de rattrapage de jeu 175 à l'intérieur duquel une chambre de rattrapage de jeu 176 comporte un clapet anti-retour de rattrapage de jeu 177 qui permet à du fluide hydraulique 3 provenant soit de l'accumulateur basse-pression 4, soit de l'accumulateur haute-pression 5, soit de la bâche à fluide 46, soit d'une source de fluide hydraulique sous pression 147 de pénétrer dans ladite chambre 176, mais non d'en ressortir.

Comme le montre clairement la figure 13. le vérin de rattrapage de jeu 175 peut être intercalé entre la surface de réaction de levier 37 qu'il supporte à l'une de ses extrémités et par intermédiaire d'une liaison rotule fixe 68, et la culasse de compresseur ou moteur 104.

On note aussi en figure 13 qu'à son autre extrémité, la surface de réaction de levier 37 est préférentieliement soutenue par une liaison rotule glissante 69 qui peut sensiblement se déplacer sur la culasse de compresseur ou moteur 104 parallèlement à la surface de réaction de levier 37.

En figure 14, on a montré que les moyens de rattrapage de jeu 174 peuvent être constitués d'un vérin de rattrapage de jeu 175 à l'intérieur duquel une chambre de rattrapage de jeu 176 comporte un ajutage de rattrapage de jeu 178 qui permet à du fluide hydraulique 3 provenant soit de l'accumulateur basse-pression 4, soit de l'accumulateur haute-pression 5, soit de la bâche á fluide 46, soit d'une source de fluide hydraulique sous pression 147 de pénétrer dans ladite chambre 176, et d'en ressortir.

Comme l'illustre particulièrement la figure 15, cette configuration particulière de l'actionneur hydraulique de soupape à régénération 1 suivant l'invention permet au vérin de rattrapage de jeu 175 de reculer lorsque le vérin d'actionneur 6 exerce un effort important sur le levier à rapport de bras progressif 27.

Ceci permet de contrebalancer la dérive en sens inverse - c'est à dire en extension - du vérin de rattrapage de jeu 175 qui survient lors de la levée de la soupape 8, au moment oú - lorsque ladite soupape 8 décélère en fin de course de levée - l'effort auquel est soumis ledit vérin 175 est faible voire nul.

Notamment, ladite configuration évite que - le vérin de rattrapage de jeu 175 ayant dérivé en extension de façon excessive - il ne soit impossible de reposer ladite soupape 8 sur le siège de soupape 11 avec lequel elie coopère.

On remarquera qu'avantageusement, i'ajutage de rattrapage de jeu 178 peut être intégré au clapet anti-retour de rattrapage de jeu 177, lequel pouvant par exemple être constitué - comme le montre la figure 14 - d'une bille plaquée sur son siège par un ressort, l'étanchéité entre ladite bille et ledit siège étant volontairement imparfaite.

La figure 14 montre également qu'un ressort de rattrapage de jeu 179 peut être prévu qui tend à faire avancer le vérin de rattrapage de jeu 175.

En figures 25 et 26, on remarque que selon une variante de l'actionneur hydraulique de soupape à régénération 1 suivant l'invention, le levier à rapport de bras progressif 27 peut être logé dans une chambre de levier 23 dans laquelie débouche également le piston de vérin d'actionneur 26, ladite chambre 23 étant reliée, soit avec l'accumulateur basse-pression 4, soit avec la bâche à fluide 46, soit avec une source de fluide hydraulique sous pression 147 par, un clapet anti-retour de chambre de levier 59 qui permet à du fluide hydraulique 3 de sortir de ladite chambre de levier 23 mais non d'y entrer, ou bien par un ajutage calibrè de chambre de levier 67 qui permet à du fluide hydraulique 3 de sortir et de rentrer de ladite chambre de levier 23, ou encore par à la fois ledit clapet 59 et ledit ajutage 67, ce dernier étant alors placé en parallèle avec le clapet anti-retour de chambre de levier 59

On remarque d'ailieurs que le clapet anti-retour de chambre de levier 59 et l'ajutage calibré de chambre de levier 67 peuvent ne faire qu'un, notamment en prévoyant pour ledit clapet 59 une bille plaquée par un ressort sur un siège, iadite bille laissant avec ledit siège passer une fuite de fluide hydraulique 3 qui fait office d'ajutage calibré de chambre de levier 67.

Comme l'illustrent particulièrement les figures 25 et 26, cette configuration particulière de l'actionneur hydraulique de soupape à régénération 1 suivant l'invention permet d'exploiter la variation du volume du fluide hydraulique 3 contenu dans la chambre de levier 23 pour retenir le piston de vérin d'actionneur 26 plaqué sur les moyens de transmission 9 avec lesquels il coopère, ceci au moment où la soupape 8 est reposée sur son siège de soupape 11, ou bien lorsque ladite soupape 8 revient au voisinage dudit siège 11.

A titre d'alternative, le piston de vérin d'actionneur 26 peut coopérer avec des moyens de freinage par exemple aménagés dans ou sur le cylindre de vérin d'actionneur 25 avec lequel il coopère, lesdits moyens pouvant être constitués d'une forme générant un effet de chasse, ladite forme étant solidaire dudit cylindre 25 ou libre par rapport à celui-ci et rappelée ou non par un ressort.

### FONCTIONNEMENT DE L'INVENTION :

Le fonctionnement de l'actionneur hydraulique de soupape à régénération 1 selon l'invention se comprend aisément à partir des figures 1 à 35.

On notera en préalable que les coupes schématiques montrées sur les figures ne sont qu'explicatives et ne reflètent pas les détails de réalisation à confier à l'homme de l'art qui permettront notamment aux différentes pièces d'être assemblées.

Le principe fondateur dudit actionneur 1 est exposé en figure 1. Durant l'explication qui va suivre, il est possible de se rapporter à ladite figure pour asseoir la compréhension dudit actionneur 1 et des différents composants qu'il réunit en un seul et même système.

Comme l'illustre la figure 2. ledit actionneur 1 s'adresse en particulier aux compresseurs ou moteurs à piston alternatif 100 d'un type connu en soi, sans que cette application ne soit toutefois limitative, ledit actionneur 1 pouvant avantageusement trouver d'autre champs d'application.

Les figures 3 et 4 détaillent l'adaptation de l'actionneur hydraulique de soupape à régénération 1 selon l'invention à l'ensemble de cylindre détendeur 54 du moteur thermique à transfert-détente et régénération dont le brevet français appartenant au demandeur a été publié sous le N° FR 3 032 236, et particulièrement à la version perfectionnée dudit moteur telle que présentée dans la demande de brevet français N°1558585 du 14 septembre 2015 appartenant également au demandeur.

On déduit desdites figures 3 et 4 qu'avantageusement, on a prévu une cartouche d'actionneur 52 dans laquelle sont communément logés les principaux organes de l'actionneur hydraulique de soupape à régénération 1 selon l'invention et notamment ceux représentés sur la coupe schématique montrée en figure 5 à 12, c'est à dire la soupape 8 et le siège de soupape 11 avec lequel elle coopère, le vénn d'actionneur 6, les moyens de transmission 9, le dispositif de rappel de soupape 12, le clapet anti-retour de levée 15, la vanne hydraulique de levée de soupape 13, et la vanne hydraulique de fermeture de soupape 17.

On remarque que selon cet exemple non-limitatif de réalisation, l'ensemble de cylindre détendeur 54 compte huit cartouches d'actionneur 52 chacune présentant une cage de soupape 56 refroidie par un circuit de refroidissement de soupape 32 dans lequel circule un fluide caloporteur. On note que dans ce contexte, avantageusement et comme représenté en figures 5 à 12, la queue de soupape 51 peut étre protégée par un écran thermique de soupape 58 qui limite la quantité de chaleur reçue par la soupape 8, ladile chaleur devant être évacuée par le fluide caloporteur.

On remarque aussi en figure 3 que l'ensemble de cylindre détendeur 54 comporte un fût de cylindre 55, une culasse inférieure de cylindre détendeur 33 et une culasse supérieure de cylindre détendeur 61 qui peuvent par exemple être réalisés en céramique et être suspendus sur des piliers évidés 62 comme le décrit la demande de brevet français N°1558585 du 14 septembre 2015 qui appartient au demandeur

Vu que les piliers évidés 62 reposent sur des liaisons rolules d'une part, et que l'ensemble de cylindre détendeur 54 est porté à haute température d'autre part. il serait impossible de fixer sur ia culasse inférieure de cylindre détendeur 33 et/ou la culasse supérieure de cylindre détendeur 61 une transmission par courrole, par pignons ou par chaîne de quelque arbre à cames que ce soit.

Il est donc pertinent de prévoir - comme le propose le brevet N° FR 3 032 236 et la présente invention - des cartouches d'actionneur 52 prêtes á monter dans lesdites culasses 33, 61, lesdites cartouches 52 n'étant reliées entre-elles et/ou à la source d'énergie qui les alimente que par des càbles et/ou des conduits souples.

En figures 3 et 4, on voit aussi qu'avantageusement, les cartouches d'actionneur 52 de la culasse inférieure de cylindre détendeur 33 sont plaquées sur cette dernière par une plaque de contention de cartouche inférieure 57 tandis que les cartouches d'actionneur 52 de la culasse supérieure de cylindre détendeur 61 sont plaquées sur cette dernière par une plaque de contention de cartouche supérieure 63.

Comme on le remarque sur lesdites figures 3 et 4, les deux dites plaques 57, 63 sont maintenues au contact des cartouches d'actionneur 52 avec lesquelles eiles coopèrent au moyen de butées de plaque 64 que comportent lesdites plaques 57, 63 face à chaque dite cartouche 52.

En outre, les deux dites plaques 57, 63 tendent à être rapprochées l'une de l'autre par des tirants de plaque 65 qui sont selon cet exemple au nombre de quatre et qui sont constitués de vis de grande longueur qui coopèrent avec un ressort de rapprochement de plaque 66 ce dernier étant placé sous la tète desdites vis. On remarque en figures 3 et 4 que ledit ressort 66 est - selon cet exemple non-limitatif de réalisation - constitué d'un empilement de trois rondelles de type « Belleville » connues en soi.

On comprend que selon cette configuration particulière, la plaque de contention de cartouche inférieure 57, la plaque de contention de cartouche supérieure 63 et les tirants de plaque 65 avec lesquels elles coopèrent restent á relativement basse température par rapport à l'ensemble de cylindre détendeur 54.

En effet, lesdites plaques 57, 63 ne touchent pas directement ledit ensemble 54 tandis que les cartouches d'actionneur 52 sont maintenues à basse température - par exemple de l'ordre de cent degrés Celsius - par le circuit de refroidissement de soupape 32 que présente leur cage de soupape 56 d'une part, et par la circulation du fluide hydraulique 3 dans les actionneurs hydrauliques de soupape à régénération 1 selon l'invention d'autre part.

On distingue en figure 3 un portique de centrage 72 qui coopère à orienter l'ensemble de cylindre détendeur 54 par rapport à un carter de transmission 73 que comprend le moteur thermique à transfert-détente et régénération objet du brevet français publié sous le N° FR 3 032 236. On notera qu'avantageusement, une biellette non représentée peut être prévue qui relie directement ou indirectement ledit portique 72, soit, avec la plaque de contention de cartouche inférieure 57. soit. avec la plaque de contention de cartouche supérieure 63. soit, avec les deux, ceci afin de maintenir l'ensemble de cylindre détendeur 54 correctement orienté autour de son axe vertical par rapport au carter de transmission 73.

Pour détailler le fonctionnement de l'actionneur hydraulique de soupape à régénération 1 selon l'invention, nous en retiendrons ici l'exemple de réalisation non-limitatif illustré en figures 5 à 12 selon lequel ledit actionneur 1 peut tirer sur une queue de soupape 51 que présente la soupape 8. cette dernière - lorsqu'elle s'ouvre en se soulevant de son siège de soupape 11 - se déplaçant vers l'intérieur du conduit d'admission 106 avec lequel elle coopère, la portée dudit siège 11 étant orientée vers l'intérieur dudit conduit 106.

Cette configuration est particulièrement adaptée à la soupape doseuse d'admission de l'ensemble de cylindre détendeur 54 montré en figures 3 et 4, du moteur thermique à transfert-détente et régénération objet du brevet français publié sous le N° FR 3 032 236. Supposons donc que c'est sur ce même dit moteur et plus précisément sur son ensemble de cylindre détendeur 54 qu'est installé l'actionneur hydraulique de soupape à régénération 1 selon l'invention tel que présenté en figures 5 á 12.

On notera sur les figures 5 à 12 qu'est repérée la culasse de compresseur ou moteur 104. Ceci est purement terminologique dans le seui objectif de faciliter la compréhension du fonctionnement de l'actionneur hydraulique de soupape à régénération 1 selon l'invention. En effet, la partie de ladite culasse 104 qui est représentée sur lesdites figures fait ici partie intégrante de la cartouche d'actionneur 52 notamment avec le siège de soupape 11. L'ensemble ainsi constitué peut être prévu pour être introduit dans le reste de la culasse 104 dans laquelle sont aménagés la chambre de compression ou combustion 105, le conduit d'admission 106, et le conduit d'échappement ou de refoulement 107 de tout compresseur ou moteur à piston alternatif 100 qui reçoit ladite cartouche 52.

On remarquera sur les figures 5 à 12 que la vanne hydraulique de levée de soupape 13 et la vanne hydraulique de fermelure de soupape 17 sont chacune constituées d'une vanne tubulaire 130 identique à celle ayant fait l'objet de la demande de brevet français N° FR 1659096 du 27 septembre 2016 relative á une vanne tubulaire à commande hydraulique, ladile demande appartenant au demandeur.

Les figures 5 à 12 illustrent aussi que le levier à rapport de bras progressif 27 prend la forme d'une came-ievier 71 laquelle forme l'un des constituants des moyens de transmission 9. Ladite carne-levier 71 expose un point d'application de l'effort de vérin 28 sur lequel le piston de vérin d'actionneur 26 peut appliquer un effort moteur ou résistant, un point d'application de l'effort de soupape 29 sur lequel la soupape 8 peut appliquer un effort moteur ou résistant, et un point d'application de l'effort de réaction sur la culasse 30 sur lequel s'applique un effort sur la culasse 104. Ces différents dits points d'application 28, 29, 30 sont particulièrement référencés en figure 9.

On remarque que selon cet exemple de réalisation particulier de l'actionneur hydraulique de soupape à régénération 1 suivant l'invention tel qu'illustré en figures 5 à 12. le point d'application de l'effort de vérin 28 et le point d'application de l'effort de soupape 29 forment une liaison pivot 34 tandis que le point d'application de l'effort de réaction sur la culasse 30 forme une liaison roulante-glissante 35 qui en soi constitue des moyens de déplacement du point d'application 31.

Les figures 5 à 12 montrent en outre que la liaison roulante-glissante 35 est notamment formée par une piste de contact de levier 36 qui présente un profil de contact courbe 38 le long duquel se déplace le point d'application de l'effort de réaction sur la culasse 30 lors des manœuvres d'ouverture et de fermeture de la soupape 8, ledit profil 38 coopérant avec une surface de réaction de levier 37 aménagée sur la culasse 104.

Sur ia figure 9, on a représenté le bras de levier de piston de vérin LP et le bras de levier d'action de soupape LS. Cette représentation permet aisément de comprendre que lorsque la soupape 8 est proche du siège de soupape 11 avec lequel elle coopère, le bras de levier de piston de vérin LP présente sa plus grande longueur. Aussi, ledit bras LP présente sa plus petite longueur quand la soupape 8 est à son ouverture maximale. La situation est exactement inverse s'agissant du bras de levier d'action de soupape LS.

La figure 13 permet de détailler une stratégie particulière et non-limitative de fonctionnement de la came-levier 71 et notamment. de détailler les conséquences du déplacement du point d'application de l'effort de réaction sur la culasse 30.

Notamment, on voit en figure 13 que la came-ievier 71 peut avantageusement présenter un secteur angulaire neutre concentrique NC qui maintient la soupape 8 immobile lorsque tourne ladite came-ievier 71. Ce secteur permet d'accompagner la décélération en rotation de la came-levier 71 après que la soupape 8 ait été reposée sur son siège de soupape 11

Selon cet exemple non-limitatif illustré en figure 13, la came-levier 71 présente aussi un secteur angulaire neutre tangentiei NT qui ne lève pas la soupape 8, mais qui permet de pré-positionner le point d'application de l'effort de réaction sur la culasse 30 au voisinage du début de la levée de la soupape 8 lorsqu'entre deux ouvertures de la soupape 8. la came-levier 71 n'est plus animée de quelque rotation que ce soit.

Le secteur angulaire de levée lente LL quant à lui reproduit approximativement ce que l'homme de l'art appelle la « rampe de silence » aménagée sur les cames usueliement utilisées dans les moteurs thermiques à combustion interne alternatifs. Ledit secteur LL permet d'une part, de fortement accélérer la soupape 8 au début de sa levée par exemple sur les premiers dixièmes de millimètres, et d'autre part, de reposer à vitesse lente - par exemple inférieure à moins d'un mètre par seconde - ladite soupape 8 sur son siège de soupape 11 en fin de course de fermeture de ladite soupape 8.

La came-levier 71 présente également un secteur angulaire de levée rapide LR qui finit d'accélérer la soupape 8 lors de sa levée. puls qui raccompagne sur sa deuxième demi-course de levée alors que la vanne hydraulique de levée de soupape 13 est fermée et tandis que le clapet anti-retour de levée 15 introduit du fluide hydraulique 3 en provenance de l'accumulateur basse-pression 4 dans la chambre hydraulique d'actionneur 7.

On remarquera que lors de la repose de la soupape 8, le secteur angulaire de levée rapide LR précède le secteur angulaire de levée lente LL, le piston de vénn d'actionneur 26 expulsant alors le fluide hydraulique 3 vers le moteur hydraulique de fermeture et régénération 20 via la vanne hydraulique de fermeture de soupape 17.

Sur les figures 5 à 12, on remarque que le dispositif de rappel de soupape 12 est constitué d'un vérin de rappel de soupape 39 qui comprend un cylindre de vérin de rappel 40 coiffé d'une culasse de vérin de rappel 50, ledit cylindre 40 et ladite culasse 50 formant une chambre hydraulique de vérin de rappel 42 avec un piston de vérin de rappel 41 relié á la soupape 8 par des moyens de transmission de rappel 43.

De façon schématique, les figures 5 à 12 montrent également que la chambre hydraulique de vérin de rappel 42 est reliée à l'accumulateur haute-pression 5 par un conduit de pression de rappel 44.

On remarquera en figures 5 à 12 que le piston de vérin d'actionneur 26 et le piston de vérin de rappel 41 peuvent être équipés du dispositif d'étanchéité pour piston dont le brevet appartenant au demandeur a été publié sous le N° FR 3 009 037, ledit dispositif garantissant une étanchéité poussée sous de hautes pressions opérationnelles, étant compatible avec des vitesses de déplacement élevées. et permettant ia réalisation de pistons 26, 41 courts et légers.

On remarquera aussi que selon cet exemple de réalisation non-limitatif, la section du piston de vérin d'actionneur 26 est approximativement deux fois plus grande que celle du piston de vérin de rappel 41.

Pour détailler le fonctionnement de l'actionneur hydraulique de soupape à régénération 1 suivant l'invention, nous ferons l'hypothése que le fluide hydraulique 3 est maintenu sous une pression de vingt bars dans l'accumulateur basse-pression 4 et sous une pression de cinq cents bars dans l'accumulateur haute-pression 5.

La figure 5 montre l'actionneur hydraulique de soupape à régénération 1 selon l'invention au repos, la soupape 8 reposant sur son siège de soupape 11 et obturant l'orifice de conduit 10 de sorte que le conduit d'admission 106 ne communique pas avec la chambre de compression ou combustion 105 dans laquelle il débouche.

A ce stade. la vanne hydraulique de levée de soupape 13 et la vanne hydraulique de fermeture de soupape 17 sont fermées. La pression qui règne dans la chambre hydraulique d'actionneur 7 est de vingt bars tandis que celle régnant dans la chambre hydraulique de vérin de rappel 42 est de cinq cents bars, ladite chambre étant directement reliée à l'accumulateur haute-pression 5.

En position fermée représentée en figure 5, l'effort qui maintient la soupape 8 au contact du siège de soupape 11 équivaut au produit de la section du piston de vérin de rappel 41 par la pression de cinq cents bars, minoré du produit de la section du piston de vérin d'actionneur 26 par la pression de vingt bars par le quotient de la longueur du bras de levier de piston de vérin LP par la longueur du bras de levier d'action de soupape LS tels qu'on les a notés en figure 9

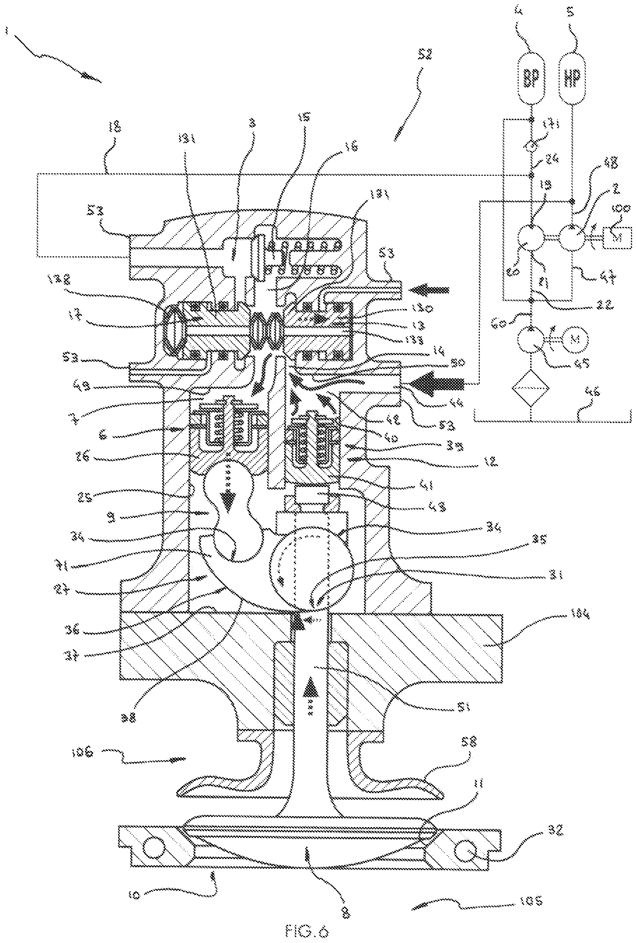

Pour ouvrir la soupape 8, un calculateur non représenté commande en ouverture la vanne hydraulique de levée de soupape 13. Cette situation est représentée en figure 6. Ladite vanne 13 étant ouverte, une pression de cinq cents bars continue à étre exercée sur le piston de vérin de rappel 41 tandis que la même pression de cinq cents bars s'exerce également sur le piston de vérin d'actionneur 26.

La section du piston de vérin d'actionneur 26 étant du double de celle du piston de vérin de rappel 41 et ledit piston de vérin d'actionneur 26 disposant d'un bras de levier important, ledit piston 26 accélère et prend de la vitesse. Ce faisant, ledit piston 26 exerce un effort important sur la soupape 8 laquelle accélère et commence à se lever du siège de soupape 11 avec lequel elle coopère.

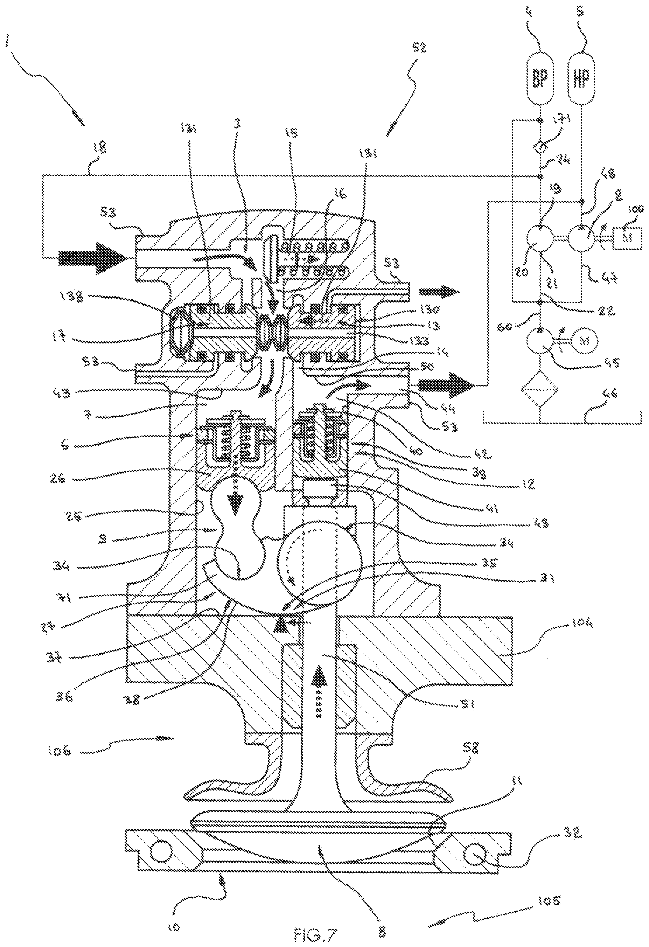

La figure 7 montre comment l'actionneur hydraulique de soupape à régénération 1 selon l'invention permet avantageusement de tirer parti de l'énergie cinétique emmagasinée par le piston de vérin d'actionneur 26, les moyens de transmission 9, le piston de vérin de rappel 41 et la soupape 8 pour parfaire la levée de ladite soupape 8.

Au stade montré en figure 7, la soupape 8 a déjà parcouru environ la moitié de sa course d'ouverture. Le calculateur non représenté a commandé en fermeture la vanne hydraulique de levée de soupape 13. Entraîné par son inertie, l'ensemble constitué du piston de vénn d'actionneur 26. des moyens de transmission 9. de la came-levier 71, du piston de vérin de rappel 41. et de la soupape 8 a continué à se déplacer, ce qui a entraîné une chute de pression dans la chambre hydraulique d'actionneur 7 au point que la pression régnant dans ladite chambre 7 est descendu en dessous de vingt bars.

Il a résulté de cette situation que le clapet anti-retour de levée 15 s'est levé de son siège tandis que du fluide hydraulique 3 provenant de l'accumulateur basse-pression 4 a commencé à s'introduire dans la chambre hydraulique d'actionneur 7 via ledit clapet 15.

Parallèlement à cela, le piston de vénn de rappel 41 a expulsé du fluide hydraulique 3 sous approximativement cinq cents bars vers l'accumulateur haute-pression 5 tout en freinant la soupape 8.

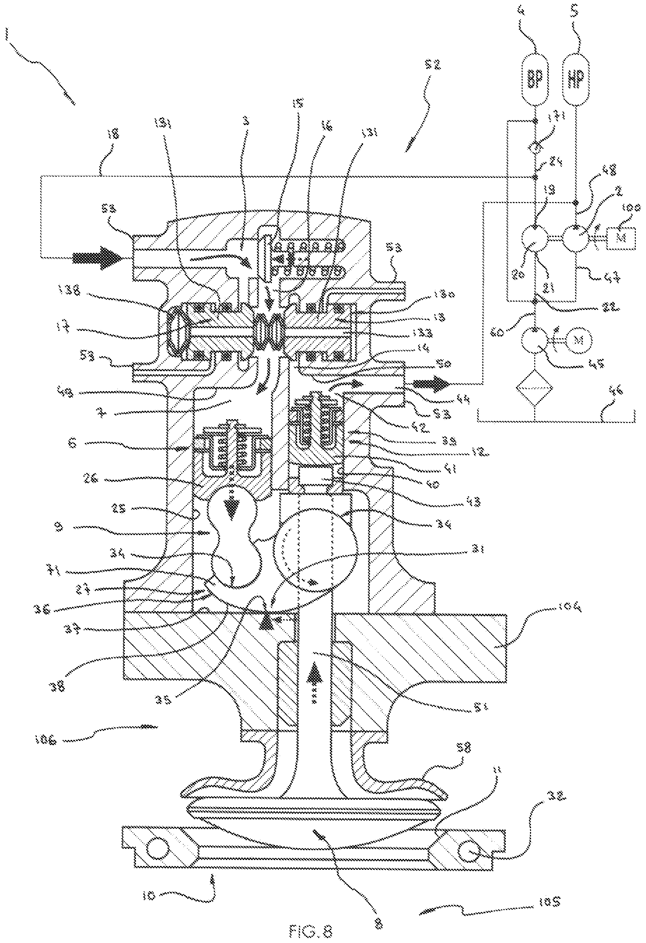

Comme l'illustre la figure 8, cette situation perdure jusqu'à ce que toute l'énergie cinétique de l'ensemble constitué du piston de vérin d'actionneur 26, des moyens de transmission 9, de la came-levier 71, du piston de vérin de rappel 41, et de la soupape 8 ait été convertie en débit de fluide hydraulique 3 sous cinq cents bars produit par le piston de vérin de rappel 41. ladite énergie étant stockée dans l'accumulateur haute-pression 5.

Durant ce déplacement et alors que la soupape 8 commence à atteindre la fin de son déplacement en ouverture, le bras de levier de piston de vérin LP s'est considérablement raccourci tandis qu'en parallèle s'allongeait le bras de levier d'action de soupape LS.

La figure 9 illustre la situation d'équilibre trouvée en fin de course d'ouverture de la soupape 8. Les organes mobiles ayant cédé toute leur énergie cinétique à l'accumulateur haute-pression 5. le piston de vérin de rappel 41 a tendu à repousser la soupape 8 vers le siège de soupape 11. Le clapet anti-retour de levée 15 s'est alors immédiatement refermé en emprisonnant du fluide hydraulique 3 dans la chambre hydraulique d'actionneur 7, laquelle est montée en pression jusqu'à ce que l'effort produit par le piston de vérin de rappel 41 sur la soupape 8 via les moyens de transmission de rappel 43 soit exactement contré par un effort de même intensité produit par le piston de vérin d'actionneur 26 sur ladite soupape 8 notamment via le point d'application de l'effort de soupape 29, ceci tenant compte des rapports de section que présentent lesdits pistons 41, 26 et du rapport entre la longueur du bras de levier de piston de vérin LP et celle du bras de levier d'action de soupape LS.

La pression d'équilibre régnant dans la chambre hydraulique d'actionneur 7 est donc le résultat de ces différents rapports de section et rapports de leviers. Selon l'exemple pris ici, considérons par approximation que ladite pression d'équilibre trouvée en figure 9 est de trois cents bars.

On d'ailleurs peut préciser ici qu'au moment ou la pression de vingt bars est atteinte dans la chambre hydraulique d'actionneur 7 et juste après que le clapet anti-retour de levée 15 ne se soit refermé, le calculateur non-représenté peut actionner la vanne hydraulique de levée de soupape 13 en ouverture un court instant pour hausser volontairement la pression dans la chambre hydraulique d'actionneur 7 à trois cents bars, ceci pour maintenir immobile le piston de vérin d'actionneur 26 lorsque la soupape 8 a atteint son ouverture maximale. Cette stratégie permet d'annuler les effets de la compressibilité du fluide hydraulique 3 et évite que le piston de vérin d'actionneur 26 ne ré-avance dans son cylindre de vérin d'actionneur 25 et ne referme partiellement la soupape 8.

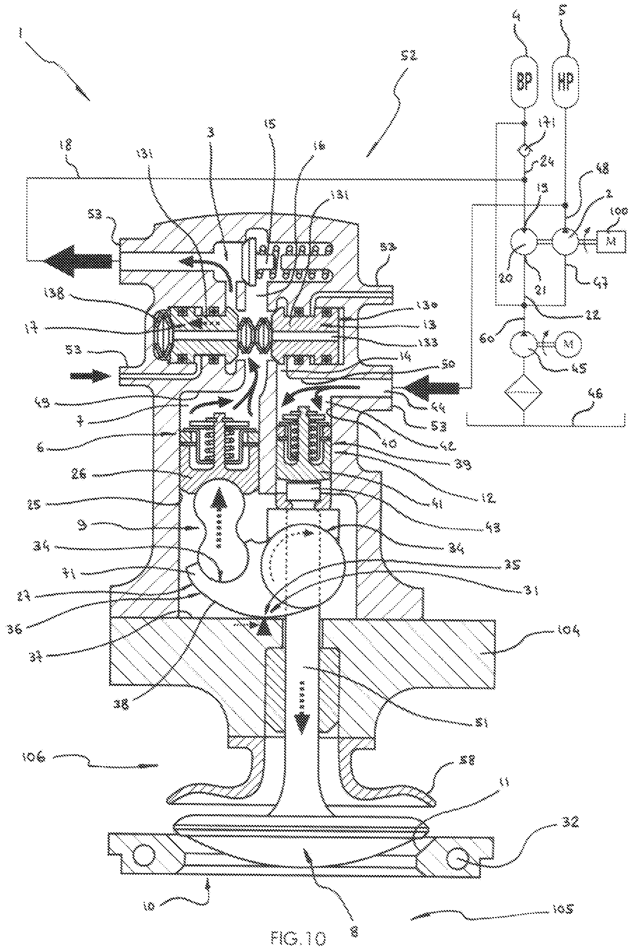

Partant de la situation d'équilibre telle qu'illustrée en figure 9, la figure 10 montre ce qui survient lorsqu'est décidée la fermeture de la soupape 8.

Toutefois, avant de détailler plus avant la séquence de fermeture de ladite soupape 8. il est utile d'étudier plus en détail le fonctionnement de la pompe hydraulique haute-pression d'alimentation 2 d'une part, et du moteur hydraulique de fermeture et régénération 20 d'autre part. ceci partant du schéma exposé dans la partie supérieure droite des figures 5 à 12.

Selon l'exemple pris ici pour illustrer le fonctionnement de l'actionneur hydraulique de soupape à régénération 1 suivant l'invention, considérons que la pompe hydraulique haute-pression d'alimentation 2 est prévue pour tenir une consigne de pression dans l'accumulateur haute-pression 5 de cinq cents bars avec une latitude de plus ou moins trois bars. Ladite pompe 2 est par exemple à cylindrée variable de sorte que sa cylindrée est automatiquement adaptée pour que soit tenue ladite consigne. Ici et à titre d'exemple, ladite pompe 2 est directement entrainée par le vilebrequin 102 du compresseur ou moteur à piston alternatif 100 qui est en l'occurrence constitué du moteur thermique à transfert-détente et régénération objet du brevet français publié sous le N° FR 3 032 236,

Le moteur hydraulique de fermeture et régénération 20 est également relié mécaniquement audit vilebrequin 102 de sorte que sa vitesse de rotation est proportionnelle à celle dudit vilebrequin 102.

En figures 5 à 12. on comprend que lorsque la vanne hydraulique de levée de soupape 13 et la vanne hydraulique de fermeture de soupape 17 sont fermées, la pression de vingt bars régnant dans l'accumulateur basse-pression 4 s'applique à la fois à l'admission de fluide 19 et à la sortie de fluide 21 du moteur hydraulique de fermeture et régénération 20.

II en résulte une circulation de fluide hydraulique 3 au travers dudit moteur 20 ce dernier d'une part, admettant ledit fluide 3 par son admission de fluide 19 via le canai de roue libre 24 lequel comporte un clapet anti-retour de fin de détente 171 et d'autre part, refoulant ledit fluide 3 par sa sortie de fluide 21 via le conduit de retour basse-pression de moteur hydraulique 22. En somme, ledit moteur hydraulique de fermeture et régénération 20 boucle sur lui-même, entraîné en cela par le vilebrequin 102.

Lorsque - comme l'illustre la figure 10 - le calculateur non-représenté ouvre la vanne hydraulique de fermeture de soupape 17, ledit calculateur met en relation la chambre hydraulique d'actionneur 7 avec le conduit de fermeture et régénération 18. Le fluide hydraulique 3 contenu dans ladite chambre se détend brutalement dans ledit conduit 18 dont la pression monte quasi instantanément à - par exemple - deux cent quatre-vingt bars.

Quelques microsecondes plus tard, le piston de vérin d'actionneur 26 s'est déplacé rapidement sous la poussée du piston de vérin de rappel 41, ladite poussée s'exerçant notamment via les moyens de transmission 9. Ce faisant, le piston de vérin d'actionneur 26 a restauré une pression d'approximativement trois cents bars à la fois dans la chambre hydraulique d'actionneur 7 et dans le conduit de fermelure et régénération 18.

Presque instantanément après que la vanne hydraulique de fermeture de soupape 17 ait été ouverte, la pression en aval du clapet anti-retour de fin de détente 171 est devenue très supérieure à celle de vingt bars régnant en amont dudit clapet 171 Ledit clapet 171 s'est donc fermé de sorte que la pression d'abord de deux cent quatre-vingt bars puis quelques microsecondes plus tard de trois cents bars s'est appliquée à l'admission de fluide 19 du moteur hydraulique de fermeture et régénération 20.

Il a résulté de ceci que le moteur hydraulique de fermeture et régénération 20 a immédiatement appliqué un couple moteur au vilebrequin 102 du compresseur ou moteur à piston alternatif 100.

Le moteur hydraulique de fermeture et régénération 20 étant selon cet exemple de type volumétrique connu en sol, il a imposé un certain débit au fluide hydraulique 3 circulant désormais dans le conduit de fermeture et régénération 18. ledit débit étant déterminé par la vitesse de rotation dudit moteur 20 elle-mème fixée par la vitesse de rotation du vilebrequin 102.

Ainsi, la vitesse d'avancement du piston de vérin d'actionneur 26 dans le cylindre de vérin d'actionneur 25 avec lequel il coopère est à ce stade directement déterminée par la vitesse de rotation du vilebrequin 102.

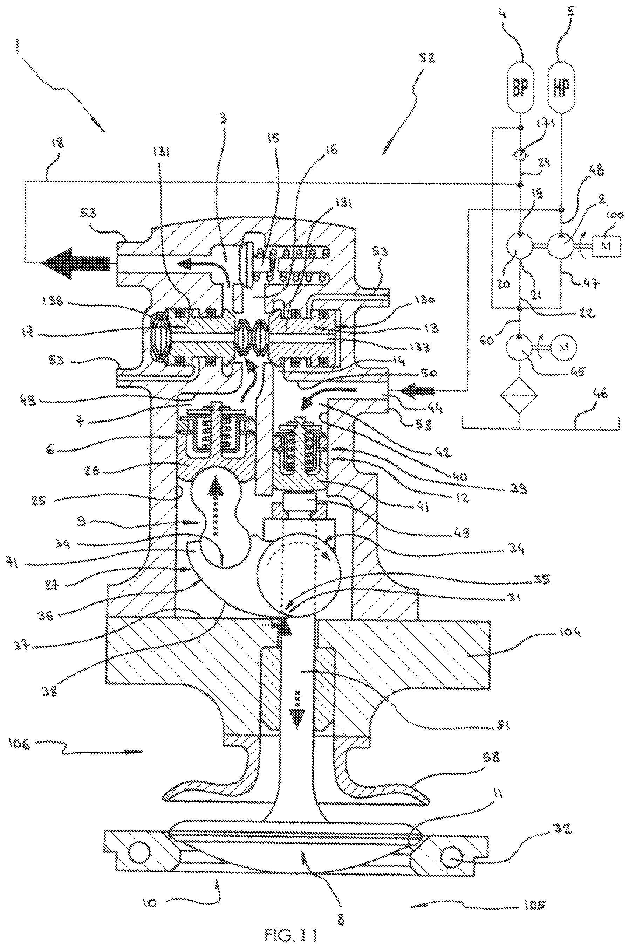

Comme on le remarque en figure 11. à l'inverse de ce qui s'est produit à la levée de la soupape 8. la longueur du bras de levier de piston de vérin LP augmente á nouveau au fur et à mesure que la soupape 8 se rapproche du siège de soupape 11 tandis que corrélativement, la longueur du bras de levier d'action de soupape LS diminue. Ceci provient du fait que le point d'application de l'effort de réaction sur la culasse 30 sur lequel s'applique un effort sur la culasse de compresseur ou moteur 104 se déplace le long du profil de contact courbe 38 que présente la piste de contact de levier 36 aménagée sur la came-levier 71

L'effort qu'exerce le piston de vérin de rappel 41 sur la soupape 8 étant approximativement constant, l'augmentation du rapport de la longueur du bras de levier de piston de vérin LP sur la longueur du bras de levier d'action de soupape LS induit une baisse graduelle de l'effort appliqué par le levier à rapport de bras progressif 27 que constitue la came-levier 71 sur le piston de vérin d'actionneur 26 et donc, de la pression du fluide hydraulique 3 trouvée à l'admission de fluide 19 du moteur hydraulique de fermeture et régénération 20. Ceci reste vrai malgré la décélération de la soupape 8 qui génère un effort additionnel sur le piston de vérin d'actionneur 26 via la came-levier 71

Lorsque la soupape 8 est à quelques dixièmes de millimètres du siège de soupape 11. la came-levier 71 opère son secteur angulaire de levée lente LL tel que représenté en figure 13 et le quotient de la longueur du bras de levier de piston de vérin LP par la longueur du bras de levier d'action de soupape LS devient élevé. Le rapport entre la vitesse d'avancement du piston de vènn d'actionneur 26 et celle de la soupape 8 est à proportion dudit quotient. La pression dans le conduit de fermeture et régénération 18 est désormais relativement faible.

Il s'ensuit que la vitesse de repose de ladite soupape 8 est très faible - par exemple de quelques dizaines de centimètres par seconde - ce qui garantit à ladite soupape 8 un atterrissage en douceur sur ie siège de soupape 11 avec lequel elle coopère Ledit atterrissage garantit un fonctionnement silencieux et durable de la soupape 8 et du siège de soupape 11. et garantit que la soupape 8 cède la quasi-totalité de son énergie cinétique au fluide hydraulique 3 admis à l'admission de fluide 19 du moteur hydraulique de fermeture et régénération 20.

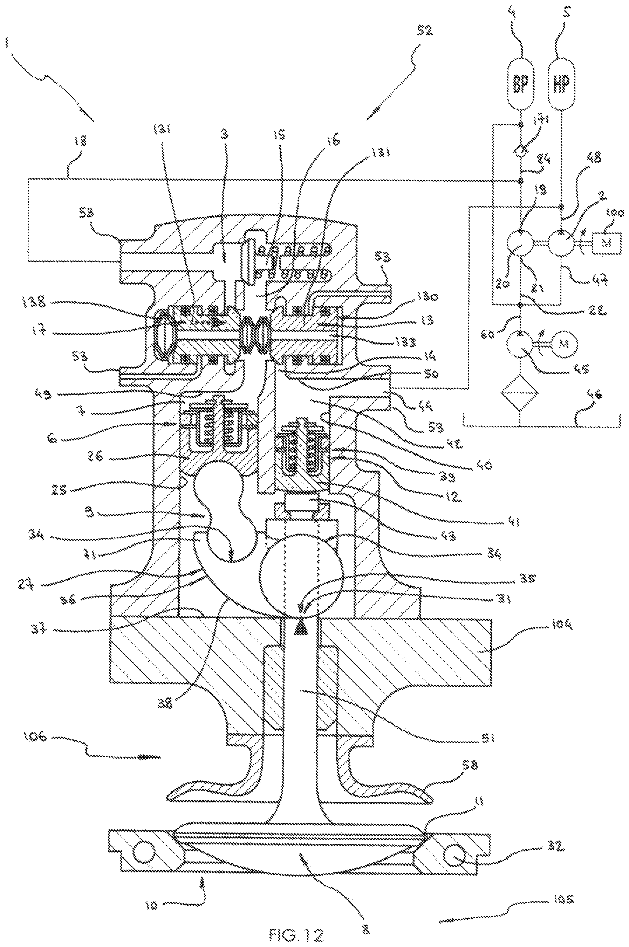

Une fois la soupape totalement refermée et parfaitement reposée sur son siège de soupape 11 comme le montre la figure 12. le piston de vérin d'actionneur 26 a pu continuer sa course sur sa lancée sur quelques dixièmes de millimètres sans conséquence sur la position de la soupape 8, accompagné dans son mouvement par les moyens de transmission 9 et ceci, grâce notamment au secteur angulaire neutre concentrique NC de la came-levier 71. Ensuite, ledit piston 26 a été remis en position de repos par la pression qui lui fait face. Cette micro-course additionnelle a permis au piston de vérin d'actionneur 26 et aux moyens de transmission 9 avec lesquels il coopère de céder eux aussi leur énergie cinétique au fluide hydraulique 3 introduit à l'admission de fluide 19 du moteur hydraulique de fermeture et régénération 20.

Puis. comme le moteur hydraulique de fermeture et régénération 20 continue a tourner sous l'action du vilebrequin 102 auquel il est mécaniquement relié, la pression dans le conduit de fermeture et régénération 18 revient progressivement à la pression de vingt bars qui règne dans l'accumulateur basse-pression 4 au fur et à mesure que se détend le fluide hydraulique 3 comprimé subsistant dans le conduit de fermeture et régénération 18.

Une fois une pression très sensiblement inférieure à vingt bars atteinte dans le conduit de fermeture et régénération 18. le moteur hydraulique de fermeture et régénération 20 boucle à nouveau sur lui-méme comme précédemment exposé admettant pour cela le fluide hydraulique 3 au niveau de son admission de fluide 1 9 via le clapet anti-retour de fin de détente 171 et le canal de roue libre 24.

La description qui vient d'étre faite du fonctionnement du moteur hydraulique de fermeture et régénération 20 est toutefois théorique. En pratique, il est nécessaire de gérer la compressibilité du fluide hydraulique 3 contenu dans le conduit de fermeture et régénération 18 car sinon, la soupape 8 va se fermer trop violemment. En effet, la détente brutale du fluide hydraulique 3 contenu dans la chambre hydraulique d'actionneur 7 dans le conduit de fermeture et régénération 18 lors de l'ouverture de la vanne hydraulique de fermeture de soupape 17 ne peut que produire une dépressurisation rapide de ladite chambre 7, avec - outre une excitation et une instabilité de la soupape 8 - une perte énergétique notable par laminage du fluide hydraulique 3 lors de son passage au travers de ladite vanne 17.

On note d'ailleurs que plus le volume interne du conduit de fermeture et régénération 18 est grand relativement à celui de la chambre hydraulique d'actionneur 7, plus l'instabilité de soupape 8 et la perte énergétique associée seront grandes.

C'est pour prévenir ces deux effets indésirables que selon un mode particulier de réalisation de l'actionneur hydraulique de soupape à régénération 1 selon l'invention, le moteur hydraulique de fermeture et régénération 20 peut être constitué d'une came de fermeture et régénération 158 telle qu'illustrée en figure 28. Ladite came comporte selon cet exemple non-limitatif un profil de came de fermeture et régénération 162 divisé en plusieurs secteurs angulaires ayant chacun un rôle déterminé.

On distingue en figure 28 le secteur angulaire de régénération R. le secteur angulaire de détente D. le secteur angulaire de manœuvre M, le secteur angulaire de pré-compression P, et le secteur angulaire de stabilisation S.

Le rôle de chaque secteur angulaire R, D. M, P et S est détaillé en figures 29 á 33 qui sont des vues en coupe schématique illustrant par étapes successives le fonctionnement du moteur hydraulique de fermeture et régénération 20 de l'actionneur hydraulique de soupape á régénération 1 suivant l'invention

On remarque que la came de fermeture et régénération 158 est montée sur un arbre de moteur hydraulique 163 que l'on suppose ici entraîné en rotation par le vilebrequin 102 du moteur thermique à transfert-détente et régénération dont le brevet français appartenant au demandeur a été publié sous le N° FR 3 032 236 au moyen d'une poulie de moteur hydraulique 170 telle que l'on peut la voir sur les figures 34 et 35

On remarque aussi que ladite came 158 peut être décalée angulairement par rapport ȧ l'arbre de moteur hydraulique 163 par des moyens de déphasage de came 164 constitués de cannelures hélicoïdales máles 165 aménagées sur la face cylindrique externe dudit arbre 163 qui coopèrent avec des cannelures hélicoïdales femelies 166 aménagées á l'intérieur de ladite came 158, cette dernière pouvant être déplacée axialement par rapport à l'arbre de moteur hydraulique 163 par un actionneur de déphasage de came 167 qui agit par l'intermédiaire d'une fourchette de déphasage 168,

Les figures 29 à 33 montrent clairement qu'en tournant, came de fermeture et régénération 158 meut en translation un piston de fermeture et régénération 159 dans son cylindre de fermeture et régénération 160, ceci par l'intermédiaire d'un linguet de fermeture et régénération 173 Comme on le voit, ledit piston 159 et ledit cylindre 160 forment communément une chambre de fermeture et régénération 161.

On comprend d'ailleurs que la came de fermeture et régénération 158 est prévue suffisamment longue pour que quelle que soit sa position axiale par rapport à l'arbre de moteur hydraulique 153, eile expose toujours son profil de came de fermeture et régénération 162 au linguet de fermeture et régénération 173

Les figures 29 à 33 montrent le connecteur hydraulique 53 qui est raccordé au conduit de fermeture et régénération 18, ledit connecteur 53 formant l'admission de fluide 19 du moteur hydraulique de fermeture et régénération 20. On note aussi sur lesdites figures 29 à 33 le connecteur hydraulique 53 qui est raccordé au conduit de retour basse-pression de moteur hydraulique 22 lequel est en relation directe avec l'accumulateur basse-pression 4. Ce dernier dit connecteur 53 forme la sortie de fluide 21 du moteur hydraulique de fermeture et régénération 20.

A la vue des figures 29 à 33, on comprend que la mise en relation du conduit de retour basse-pression de moteur hydraulique 22 avec la chambre de fermeture et régénération 161 peut se faire soit. via le clapet anti-retour de fin de détente 171 et en ce cas le fluide hydraulique 3 ne peut aller que dudit conduit 22 vers ladite chambre 161 et non l'inverse. soit, via la vanne de pré-compression 172 lorsque cette dernière est maintenue ouverte par son actionneur de tube 137, ladite vanne de pré-compression 172 étant montée parallèlement avec ledit clapet 171 et permettant au fluide hydraulique 3 d'aller dudit conduit 22 vers ladite chambre 161 et inversement.

La figure 29 montre le rôle du secteur angulaire de régénération R. La soupape 8 est en cours de repose et la vanne hydraulique de fermeture de soupape 17 est ouverte. Le piston de fermeture et régénération 159 pousse sur le linguet de fermeture et régénération 159, lequel entraîne en rotation l'arbre de moteur hydraulique 163 via la came de fermelure et régénération 158. Ledit secteur R permet donc de récupérer une grande partie de l'énergie cinétique de ia soupape 8 et des composants mobiles qui l'accompagnent dans son mouvement.

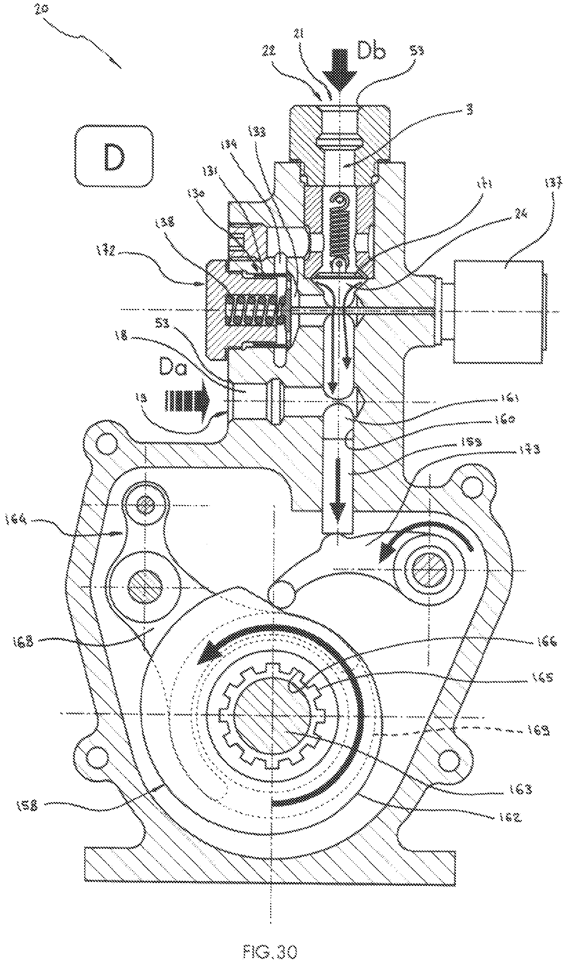

La figure 30 montre ce qui survient immédiatement après que la soupape 8 ait attem sur son siège de soupape 11. Dans un premier temps noté **Da** sur ladite figure 30, le volume interne empli de fluide hydraulique 3 du conduit de fermelure et régénération 18 est détendu, jusqu'à ce que sa pression soit devenue inférieure á vingt bars, c'est dire inférieure á celle régnant dans l'accumulateur basse-pression 4. A partir de ce moment et donc dans un deuxième temps noté **Db** sur la figure 30, le clapet anti-retour de fin de détente 171 s'est ouvert et a permis à du fluide hydraulique 3 contenu dans l'accumulateur basse-pression 4 de rejoindre la chambre de fermeture et régénération 161.

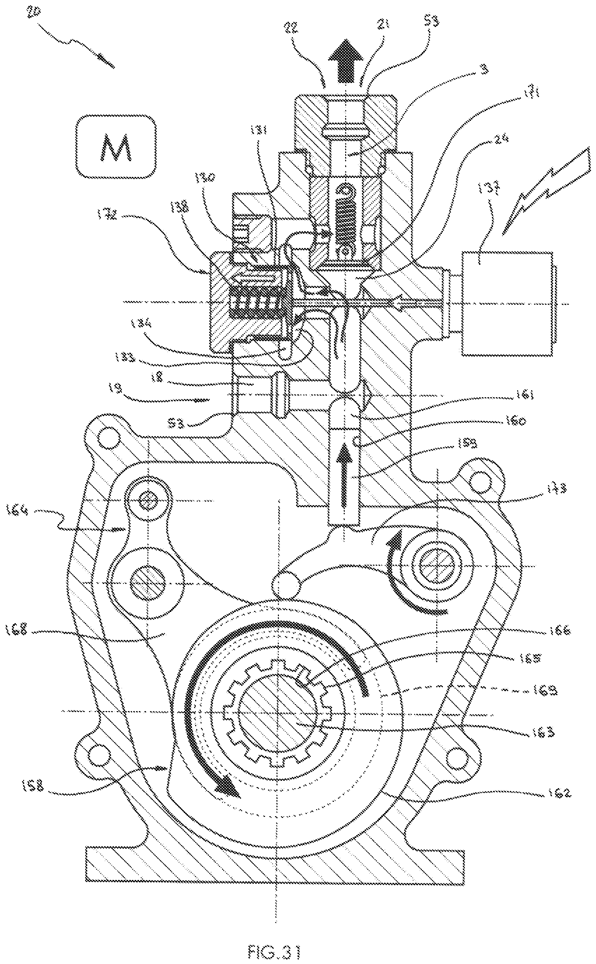

Il s'ensuit ce qui est illustré en figure 31, le linguet de fermeture et régénération 173 étant au contact du secteur angulaire de manoeuvre M. Sur cette figure, on remarque que la vanne de pré-compression 172 a été ouverte par son actionneur de tube 137 et que le profil de came de fermeture et régénération 162 fait remonter le piston de fermeture et régénération 159 dans son cylindre de fermeture et régénération 160 et ceci, aussi longtemps que nécessaire pour positionner le début du secteur angulaire de pré-compression P à la position angulaire souhaitée.

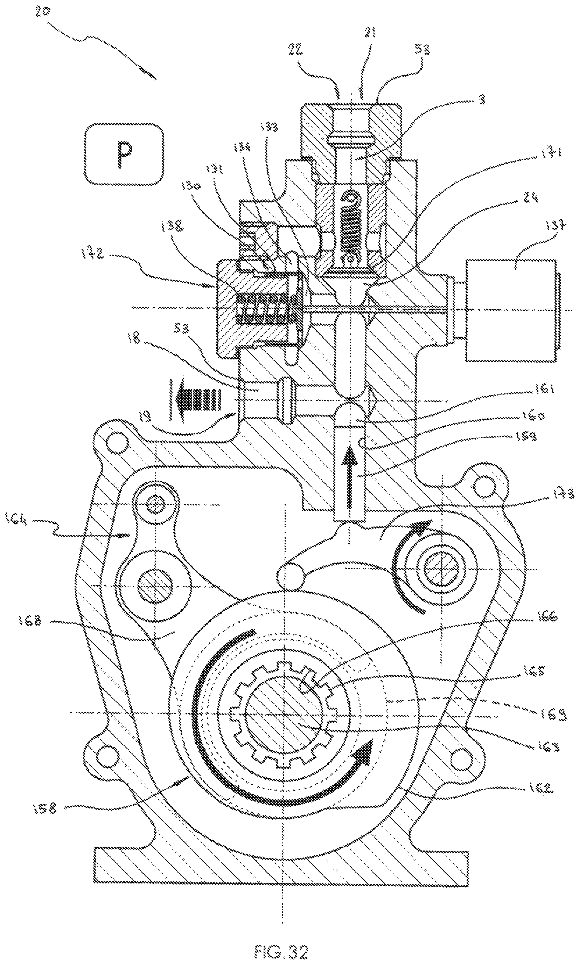

On voit en figure 32 que la vanne de pré-compression 172 a été refermée. Le point de fermeture de ladite vanne 172 a marqué le début du secteur angulaire de pré-compression P qui n'a pas de réalité physique sur le profil de came de fermeture et régénération 162. Le moment où ladite vanne 172 a été effectivement refermée a été déterminé par un calculateur non-représenté tenant compte de première part, de la pression qui va régner dans la chambre hydraulique d'actionneur 7 quand la soupape 8 sera maintenue en ouverture comme montré en figure 9, de deuxième part, de la compressibilité du fluide hydraulique 3, et de troisième part, du volume interne et de la rigidité du conduit de fermeture et régénération 18.

Plus la vanne de pré-compression 172 est refermée tôt lorsque le linguet de fermeture et régénération 173 parcourt le secteur angulaire de pré-compression P, plus la pression qui règnera dans le conduit de fermeture et régénération 18 sera élevée au moment ou s'ouvrira la vanne hydraulique de fermeture de soupape 17

Le but est que lorsque ladite vanne 17 va s'ouvrir, la pression régnant dans le conduit de fermeture et régénération 18 soit la plus proche possible de celle régnant dans la chambre hydraulique d'actionneur 7.

Une fois la pression cible atteinte dans le conduit de fermelure et régénération 18, le linguet de fermeture et régénération 173 va parcourir le secteur angulaire de stabilisation S qui n'est autre qu'une partie du profil de came de fermeture et régénération 162 qui est concentrique à l'arbre de moteur hydraulique 163 et qui donc ne génère aucun déplacement du piston de fermeture et régénération 159 dans le cylindre de fermeture et régénération 160.

A partir de ce moment, le moteur hydraulique de fermeture et régénération 20 est prët à exécuter un nouveau cycle de fermeture de la soupape 8, la came de fermeture et régénération 158 aliant aborder à nouveau le secteur angulaire de régénération R tel que montré en figure 29.

On remarque que l'actionneur hydraulique de soupape à régénération 1 suivant l'invention étant totalement flexible, il est nécessaire de pouvoir recaler angulairement la came de fermeture et régénération 158 par rapport au vilebrequin 102 lorsque change le moment angulaire par rapport audit vilebrequin 102 où dort être refermée la soupape 8.

Pour cela, ladite came 158 comporte des cannelure hélicoïdale femelle 166 qui coopèrent avec des cannelure hélicoïdale mâle 165 aménagées sur l'arbre de moteur hydraulique 163.

Lesdites cannelures 165, 166 décalent angulairement ladite came 158 par rapport à l'arbre de moteur hydraulique 163 lorsque ladite came 158 est déplacée axialement le long dudit arbre 163 par l'actionneur de déphasage de came 167 qu'on a montré en figures 34 et 35, ceci au moyen de la fourchette de déphasage 168 qui coopère avec une gorge de déphasage 169 aménagée dans la came de fermelure et régénération 158.

On remarquera qu'à titre de variante non-représentèe, une même came de fermeture et régénération 158 peut actionner plusieurs linguets de fermeture et régénération 173 chacun dédié à la fermeture d'une soupape 8. A titre d'autre vanante. l'arbre de moteur hydraulique 163 peut tourner à deux fois la vitesse du vilebrequin 102 tandis qu_{'}un seul linguet de fermeture et régénération 173 peut être chargé de reposer deux soupapes 8 qui partagent un même conduit de fermeture et régénération 18, la fermeture de la première soupape 8 étant décalée d'approximativement cent quatre-vingt degrés de vilebrequin 102 par rapport à la fermeture de la deuxième soupape 8.

On comprend au travers de la description du fonctionnement de l'actionneur hydraulique de soupape ȧ régénération 1 suivant l'invention qui vient d'être faite que ledit actionneur 1 répond favorablement à la quasi-totalité des objectifs de l'actionnement hydraulique des soupapes 8 de tout compresseur ou moteur á piston alternatif 100.

Parmi ces objectifs figure la récupération de l'énergie cinétique - au moyen du moteur hydraulique de fermeture et régénération 20 - des composants mécaniques mobiles et du fluide hydraulique 3 mis en mouvements. En effet, si elle n'est pas récupérée, ladite énergie est non seulement dissipée en pure perte au détriment du bilan énergétique final du compresseur ou moteur à piston alternatif 100. mais elle peut exciter le système masse-ressort que constituent les composants mécaniques mobiles mais rigides pris isolément d'une part, et le fluide hydraulique 3 compressible d'autre part. Cette excitation produit de l'instabilité fonctionnelle et du bruit. Ladite excitation pourrait être atténuée par de l'amortissement, mais ceci se ferait au détriment du rendement final car l'amortissement dissipe notoirement l'énergie d'excitation sous forme de chaleur.

Or, l'actionneur hydraulique de soupape à régénération 1 suivant l'invention n'induit pas d'amortissement dissipatif, mais régénératif en utilisant l'énergie cinétique emmagasinée par ses principaux composants mobiles durant la première demie course de la soupape 8 pour assurer le déplacement de ladite soupape 8 durant sa deuxième demie course.

Par ailleurs grâce aux fonctions avancées de son moteur hydraulique de fermeture et régénération 20, ledit actionneur 1 suivant l'invention gère la pré-compression du fluide hydraulique 3 dans le conduit de fermeture et régénération 18 pour assurer à la partie régénérative du cycle de fermeture de la soupape 8 la meilleure stabilité et le meilleur rendement énergétique possibles.

En outre et comme on le comprend aisément, l'actionneur hydraulique de soupape à régénération 1 suivant l'invention permet de réaliser des levées de soupape 8 extrêmement rapides que pourrait difficilement produire une came conventionneile vu le profil de came auquel de telles levées conduiraient. Pour autant, ledit actionneur 1 garantit une repose à faible vitesse de la soupape 8 sur le siège de soupape 11 avec lequel elle coopère, ceci étant nécessaire pour garantir le silence de fonctionnement et la durée de vie recherchée à ladite soupape 8 et audit siège 11.

On remarque aussi que le calculateur non-représenté peut ordonner l'ouverture ou la fermeture, soit de la vanne hydraulique de levée de soupape 13. soit de la vanne hydraulique de fermeture de soupape 17, à n'importe quel moment, de sorte ȧ déclencher l'ouverture ou la fermeture de la soupape 8 à n'importe quel moment angulaire de rotation dudit vilebrequin 102. Cette possibilité laisse toute liberté de régler avec précision la quantité de gaz admis dans la chambre de compression ou combustion 105 via le conduit d'admission 106, et le moment où lesdits gaz sont admis dans ladite chambre 105.

On note aussi que l'actionneur hydraulique de soupape à régénération 1 suivant l'invention offre la possibilité de régler la hauteur de levée de la soupape 8 en agissant sur la durée d'ouverture de la vanne hydraulique de levée de soupape 13. Pour une pression donnée régnant dans l'accumulateur haute-pression 5. plus ladite durée est longue, plus la hauteur de levée de ladite soupape 8 est grande.

En outre, ledit actionneur 1 offre aussi la possibilité de bloquer la soupape 8 en ouverture et de la conserver aussi longtemps que nécessaire dans la position montrée en figure 9. Ceci permet de réaliser des levées de soupape 8 en plateau, ce qui peut s'avérer utile à diverses applications.

On notera que la configuration particulière de l'actionneur hydraulique de soupape à régénération 1 suivant l'invention telle que présentée en figures 5 à 12 rend possiblement avantageux le réglage de la pression régnant dans l'accumulateur haute-pression 5. Ledit réglage permet de choisir la vitesse de levée et de repose de la soupape 8. En effet, le piston de vérin de rappel 41 étant soumis à la pression régnant dans l'accumulateur haute-pression 5. si la pression régnant dans ce dernier est augmentée pour ouvrir plus vite la soupape 8 au moyen du piston de vérin d'actionneur 26, l'effort de rappel exercé sur ladite soupape 8 par le piston de vérin de rappel 41 sera augmenté dans les mêmes proportions. En conséquence, la vitesse de levée et la vitesse de repose de la soupape 8 restent toujours approximativement proportionnelles.

On notera d'ailleurs que divers moyens permettent de faire varier la pression régnant dans l'accumulateur haute-pression 5. Parmi lesdits moyens figure la possibilité de temporairement augmenter ou diminuer la cylindrée de la pompe hydraulique haute-pression d'alimentation 2, ou encore, de prévoir un volume incompressible qui peut être plus ou moins introduit dans l'accumulateur haute-pression 5 ou dans le circuit auquel est raccordé ledit accumulateur 5.

Parmi les autres avantages de l'actionneur hydraulique de soupape à régénération 1 suivant l'invention figure la possibilité - comme illustré en figures 5 à 12 - de remplacer les ressorts ordinairement utilisés pour rappeler les soupapes 8 des compresseur ou moteur à piston alternatif 100 sur leur siège de soupape 11 par un vérin de rappel de soupape 39.

Cette configuration particuliére permise par l'invention permet notamment d'exercer un effort de rappel très élevé sur la soupape 8 sans subir le dimensionnement important et la masse alternative élevée d'un ressort en acier tel qu'ordinairement utilisé par l'homme de l'art. En ce sens, l'actionneur hydraulique de soupape à régénération 1 suivant l'invention peut offrir des puissances de rappel de soupape 8 qui ne sont ordinairement accessibles qu'à des commandes de type desmodromique connues en soi.

Cette particularité permet notamment de prévoir des levées de soupape 8 rapides et brèves comme cela est par exemple nécessaire pour réaliser les soupapes doseuses d'admission et d'échappement du moteur thermique à transfert-détente et régénération dont le brevet français publié sous le N° FR 3 032 236 appartient au demandeur.

En effet. le contrôle dudit moteur thermique à transfert-détente et régénération peut de préférence s'opérer non pas en variation de pression des gaz, mais par troncature de la détente pour générer plus de couple, ou par prolongement de la détente suivie d'une re-compression quasi-adiabatique à l'échappement pour produire moins de couple. Ledit moteur opérant alors à pression constante n'a pratiquement plus de dèlai de réponse en transitoires de charge.

On note qu'avantageusement l'actionneur hydraulique de soupape à régénération 1 suivant l'invention peut s'appliquer aux compresseurs dudit moteur dont la charge peut également être pilotée au moyen de leurs soupapes 8 d'admission grâce audit actionneur 1.

La réactivité et la rapidité de l'actionneur hydraulique de soupape à régénération 1 suivant l'invention permet aussi d'équiper des moteurs thermiques ȧ combustion interne rapides avec des soupapes 8 offrant de nombreuses variantes de pilotage pour optimiser le rendement, le couple, la puissance et les émissions polluantes desdits moteurs.

La flexibilité de pilotage de soupape 8 offerte par l'actionneur hydraulique de soupape à régénération 1 suivant l'invention permet en outre de prévoir des levées multiples durant un même cycle thermodynamique pour par exemple régler finement la quantité de gaz d'échappement re-circulès dans la chambre de compression ou combustion 105, et réaliser des moteurs thermiques à combustion interne à allumage par compression.

On note aussi la grande flexibilité d'intégration sur la culasse de compresseur ou moteur 104 de quelque compresseur ou moteur à piston alternatif 100 que ce soit de l'actionneur hydraulique de soupape à régénération 1 suivant l'invention. Notamment, l'absence de toute liaison mécanique entre la source d'énergie de l'actionneur hydraulique de soupape à régénération 1 et la cartouche d'actionneur 52 qui héberge la soupape 8, permet d'orienter librement cette dernière par rapport ȧ la chambre de compression ou combustion 105. Ceci permet notamment d'améliorer les qualites géométriques de ladite chambre 105 par exemple sur des cntères de perméabilité et/ou de qualité de combustion

A titre d'autre avantage de l'actionneur hydraulique de soupape à régénération 1 selon l'invention, on remarque que la configuration particulière dudit actionneur 1 telle que montrée en figures 5 à 12 évite autant que possible tout cul-de-sac dans lequel pourrait séjourner le fluide hydraulique 3. En effet, ladite configuration assure une constante circulation du fluide hydraulique 3 entre l'accumulateur haute-pression 5 et l'accumulateur basse-pression 4 via les différents circuits et volumes constitués à l'intérieur de la cartouche d'actionneur 52. Un refroidisseur peut d'ailleurs être prévu sur le parcours dudit fluide 3. Ainsi, ladite cartouche 52 se trouve refroidie par ledit fluide hydraulique 3, et sa température est stabilisée. Cet arrangement trouve toul son intérêt par exemple dans le cadre du moteur thermique à transfert-détente et régénération dont le brevet français publiè sous le N° FR 3 032 236 appartient au demandeur, l'ensemble de cylindre dètendeur 54 dudit moteur ne comportant aucun circuit de refroidissement externe.

Parmi les autres avantages de l'actionneur hydraulique de soupape ȧ régénération 1 selon l'invention figure la vanne tubulaire 130, particulièrement lorsque cette dernière coopère avec l'actionneur piézoélectrique à amplification hydraulique 139 dont le fonctionnement se comprend aisément à la vue des figures 21 et 22.

## Revendications

1. Actionneur hydraulique de soupape à régénération (1) pour un compresseur ou moteur à piston alternatif (100) qui comprend au moins un piston (101) reliè à des moyens de transmission (102) pour aller et venir dans un cylindre (103) fermé par une culasse de compresseur ou moteur (104), ledit piston (101), ledit cylindre (103) et ladite culasse (104) formant une chambre de compression ou combustion (105) dans laquelle débouche au moins un conduit d'admission (106) et au moins un conduit d'échappement ou de refoulement (107), l'un, l'autre ou les deux dits conduit (106, 107) étant reliés à ladite chambre (105) par un orifice de conduit (10) qu'une soupape (8) peut obturer quand elle repose sur un siège de soupape (11) **caractérisé en ce qu'il** comprend ^{.}
• Au moins une pompe hydraulique haute-pression d'alimentation (2) qui peut admettre un fluide hydraulique (3) depuis un accumulateur basse-pression (4) ou une bâche à fluide (46) via un conduit d'alimentation basse-pression (47) pour refouler ledit fluide (3) vers un accumulateur haute-pression (5) via un conduit d'alimentation haute-pression (48) ;
• Au moins un vèrin d'actionneur (6) qui comprend un cylindre de vérin d'actionneur (25) coiffé d'une culasse de vérin d'actionneur (49), ledit cylindre (25) étant directement ou indirectement arrimé à la culasse de compresseur ou moteur (104) cependant que ledit cylindre (25) et la culasse de vérin d'actionneur (49) forment avec un piston de vérin d'actionneur (26) une chambre hydraulique d'actionneur (7), ledit piston (26) étant mécaniquement relie par des moyens de transmission (9) à la soupape (8), lesdits moyens (9) étant prévus de telle sorte que si la chambre hydraulique d'actionneur (7) est soumise à une pression exercée par le fluide hydraulique (3), le piston de vérin d'actionneur (26) tend à éloigner ladite soupape (8) du siège de soupape (11) avec lequel elle coopère ;
• Au moins un dispositif de rappel de soupape (12) qui exerce sur la soupape (8) un effort antagoniste á celui que peut produire le vérin d'actionneur (6), ledit dispositif (12) tendant ainsi à ramener la soupape (8) au contact du siège de soupape (11) avec lequel elle coopère :
• Au moins une vanne hydraulique de levée de soupape (13) qui peut ouvrir ou fermer un conduit de levée haute-pression (14) qui relie l'accumulateur haute-pression (5) à la chambre hydraulique d'actionneur (7) ;
• Au moins un clapet anti-retour de ievèe (15) placé dans un conduit de levée inertielle (16) qui relie l'accumulateur basse-pression (4) ou la bâche à fluide (46) á la chambre hydraulique d'actionneur (7). ledit clapet (15) permettant au fluide hydraulique (3) - via ledit conduit (16) - de circuler depuis l'accumulateur basse-pression (4) ou la bâche á fluide (46) vers la chambre hydraulique d'actionneur (7), mais non en sens inverse ;
• Au moins une vanne hydraulique de fermeture de soupape (17) qui peut ouvrir ou fermer un conduit de fermeture et régénération (18) qui relie la chambre hydraulique d'actionneur (7) avec une admission de fluide (19) que présente un moteur hydraulique de fermeture et régénération (20), une sortie de fluide (21) que présente également ledit moteur (20) étant reliée avec l'accumulateur basse-pression (4) ou avec la bâche à fluide (46) par un conduit de retour basse-pression de moteur hydraulique (22) ;
• Au moins un levier à rapport de bras progressif (27) constituant en tout ou partie les moyens de transmission (9), ledit levier (27) exposant au moins un point d'application de l'effort de vérin (28) sur lequel le piston de vérin d'actionneur (26) peut directement ou indirectement appliquer un effort moteur ou résistant, au moins un point d'application de l'effort de soupape (29) sur lequel la soupape (8) peut directement ou indirectement appliquer un effort moteur ou résistant, et au moins un point d'application de l'effort de réaction sur la culasse (30) sur lequel s'applique directement ou indirectement un effort sur la culasse de compresseur ou moteur (104).

2. Actionneur hydraulique de soupape á régénération suivant la revendication 1. **caractérisé en ce que** des moyens de déplacement du point d'application (31) déplacent le point d'application de l'effort de vénn (28) et/ou le point d'application de l'effort de soupape (29) et/ou le point d'application de l'effort de réaction sur la culasse (30) le long du levier à rapport de bras progressif (27) durant la course d'ouverture de la soupape (8).

3. Actionneur hydraulique de soupape á régénération suivant la revendication 2. **caractérisé en ce que** le point d'application de l'effort de vérin (28) et/ou le point d'application de l'effort de soupape (29) et/ou le point d'application de l'effort de réaction sur la culasse (30) forme directement ou indirectement respectivement avec le piston de vérin d'actionneur (26). et/ou avec la soupape (8) et/ou avec la culasse de compresseur ou moteur (104) avec le ou laquelle il coopère soit au moins une liaison pivot (34), soit au moins une liaison roulante-glissante (35), cette dernière constituant les moyens de déplacement du point d'application (31).

4. Actionneur hydraulique de soupape á régénération suivant la revendication 3. **caractérisé en ce que** la liaison roulante-glissante (35) est constituée d'au moins une piste de contact de levier (36) aménagée sur le levier à rapport de bras progressif (27) au niveau du point d'application de l'effort de vérin (28) et/ou du point d'application de l'effort de soupape (29) et/ou du point d'application de l'effort de réaction sur la culasse (30), ladite piste (36) coopérant avec une surface de réaction de levier (37) aménagée directement, ou indirectement respectivement sur le piston de vérin d'actionneur (26) et/ou sur la soupape (8) et/ou sur la culasse de compresseur ou moteur (104), ladite piste (36) et/ou ladite surface (37) présentant un profil de contact courbe (38) sur lequel s'établit le contact entre ladite piste (36) et ladite surface (37).

5. Actionneur hydraulique de soupape à régénération suivant la revendication 1, **caractérisé en ce que** le dispositif de rappel de soupape (12) est constitué d'un vérin de rappel de soupape (39) qui comprend un cylindre de vérin de rappel (40) coiffé d'une culasse de vérin de rappel (50), ledit cylindre (40) étant directement ou indirectement arrimé à la culasse de compresseur ou moteur (104) cependant que ledit cylindre (40) et la culasse de vérin de rappel (50) forment avec un piston de vérin de rappel (41) une chambre hydraulique de vérin de rappel (42), ledit piston (41) étant mécaniquement relié à la soupape (8) par des moyens de transmission de rappel (43).

6. Actionneur hydraulique de soupape à régénération suivant la revendication 5, **caractérisé en ce que** la chambre hydraulique de vérin de rappel (42) est reliée à l'accumulateur haute-pression (5) par un conduit de pression de rappel (44).

7. Actionneur hydraulique de soupape à régénération suivant la revendication 1, **caractérisé en ce que** le niveau et la pression du fluide hydraulique (3) que contient l'accumulateur basse-pression (4) sont maintenus dans une certaine plage de vaieur par une pompe hydraulique basse-pression de gavage (45) qui peut transférer ledit fluide (3) depuis la bâche á fluide (46) vers ledit accumulateur (4) via un conduit de gavage basse-pression (60).

8. Actionneur hydraulique de soupape à régénération suivant la revendication 1, **caractérisé en ce qu'**au moins la soupape (8) avec ou sans le siège de soupape (11) avec lequel elle coopère, le vénn d'actionneur (6), les moyens de transmission (9). le dispositif de rappel de soupape (12), le clapet anti-retour de levée (15), la vanne hydraulique de levée de soupape (13), et la vanne hydraulique de fermeture de soupape (17) sont communément logés dans une cartouche d'actionneur (52) qui expose au moins un connecteur hydraulique (53).

9. Actionneur hydraulique de soupape à régénération suivant ia revendication 1, **caractérisé en ce que** la vanne hydraulique de levée de soupape (13) et/ou la vanne hydraulique de fermeture de soupape (17) est constituée d'une vanne tubulaire (130) qui comprend un tube obturateur (131) qui peut être mú en translation longitudinale par un actionneur de tube (137), ledit tube (131) étant logé de manière étanche dans un alésage de tube obturateur (181) et se terminant par une portée d'étanchéité de tube (135) qui peut soit reposer sur un siège de tube (136) pour former avec ce dernier une ligne continue de contact étanche, soit être maintenue á une certaine distance dudit siège (136) pour laisser passer le fluide hydraulique (3) depuis un volume interne de tube (133) vers un collecteur-répartiteur externe de tube (134) ou inversement.

10. Actionneur hydraulique de soupape à régénération suivant la revendication 9, **caractérisé en ce que** l'actionneur de tube (137) est un actionneur piézoélectrique à amplification hydraulique (139) qui comprend une pile d'éléments céramiques (140) qui se déforment mécaniquement quand on les soumet à un champ électrique, l'extrémité de ladite pile (140) étant reliée à un piston émetteur d'actionneur (141) de grand diamètre qui forme - avec un cylindre emetteur d'actionneur (142) - une chambre émettrice d'actionneur (143) qui communique avec au moins une chambre réceptrice d'actionneur (144) cette dernière étant formée d'une part, par un piston récepteur d'actionneur (145) de petit diamètre qui est directement ou indirectement relié au tube obturateur (131) avec lequel il coopére de sorte à pouvoir mouvoir ce dernier en translation longitudinale, et d'autre part, par un cylindre récepteur d'actionneur (142).

11. Actionneur hydraulique de soupape à régénération suivant la revendication 10, **caractérisé en ce que** la chambre émettrice d'actionneur (143) et la chambre réceptrice d'actionneur (144) sont communément mises en relation avec une source de fluide hydraulique sous pression (147) par un clapet anti-retour de gavage d'actionneur (148) qui permet à du fluide hydraulique (3) d'aller depuis ladite source (147) vers lesdites chambres (143, 144) et non l'inverse.

12. Actionneur hydraulique de soupape à régénération suivant la revendication 11, **caractérisé en ce que** le piston émetteur d'actionneur (141) reçoit un ressort de compensation de pression (149) qui tend à le rapprocher de la chambre émettrice d'actionneur (143), l'effort qu'exerce ledit ressort (149) sur ledit piston (141) étant inférieur ou égal à l'effort qu'exerce le fluide hydraulique (3) sur ledit piston (141) lorsque la pression régnant dans la chambre émettrice d'actionneur (143) est ègale á celle régnant dans la source de fluide hydraulique sous pression (147).

13. Actionneur hydraulique de soupape à régénération suivant la revendication 11, **caractérisé en ce que** le piston récepteur d'actionneur (145) reçoit un ressort de compensation de pression (149) qui tend à le rapprocher de la chambre réceptrice d'actionneur (144), l'effort qu'exerce ledit ressort (149) sur ledit piston (145) étant inférieur ou égal à l'effort qu'exerce le fluide hydraulique (3) sur ledit piston (145) lorsque la pression régnant dans la chambre rèceptrice d'actionneur (144) est égale à celle régnant dans la source de fluide hydraulique sous pression (147).

14. Actionneur hydraulique de soupape à régénération suivant la revendication 10, **caractérisé en ce que** la chambre émettrice d'actionneur (143) communique via une rampe commune de chambres réceptrices (151) avec plusieurs chambres réceptrices d'actionneur (144), le piston rècepteur d'actionneur (145) formant chaque dite chambre réceptrice (144) pouvant mouvoir en translation longitudinale un tube obturateur (131) qui lui est propre.

15. Actionneur hydraulique de soupape ȧ régénération suivant la revendication 14, **caractérisé en ce que** les chambres réceptrices d'actionneur (144) sont chacune mise ou non en communication avec la rampe commune de chambres réceptrices (151) par une vanne de sélection (152) dont l'ouverture est commandée par un actionneur de vanne de sèlection (153).

16. Actionneur hydraulique de soupape à régénération suivant la revendication 10, **caractérisé en ce que** la rampe commune de chambres réceptrices (151) héberge de façon non-étanche au moins un élément cylindrique incompressible (156) plein ou creux qui est maintenu centré au voisinage d'une certaine position longitudinale relative à la rampe commune de chambres réceptrices (151) par au moins deux ressorts antagonistes de centrage (157).

17. Actionneur hydraulique de soupape à régénération suivant la revendication 1. **caractérisé en ce que** le moteur hydraulique de fermeture et régénération (20) comprend une came de fermeture et régénération (158) montée sur un arbre de moteur hydraulique (163) qui est entraîné - directement ou indirectement - en rotation par le compresseur ou moteur à piston alternatif (100), un piston de fermeture et régénération (159) prenant appui directement ou indirectement sur ladite came (158) et formant - avec un cylindre de fermeture et régénération (160) - une chambre de fermeture et régénération (161) qui communique avec l'admission de fluide (19).

18. Actionneur hydraulique de soupape ȧ régénération suivant la revendication 17, **caractérisé en ce que** la came de fermeture et régénération (158) expose un profil de came de fermeture et régénération (162) qui comporte au moins un secteur angulaire de régénération R sur lequel prend appui le piston de fermeture et régénération (159) pour reposer la soupape (8) sur le siège de soupape (11).

19. Actionneur hydraulique de soupape à régénération suivant la revendication 17, **caractérisé en ce que** la came de fermeture et régénération (158) expose un profil de came de fermeture et régénération (162) qui comporte au moins un secteur angulaire de pré-compression P sur lequel prend appui le piston de fermeture et régénération (159) pour pré-comprimer le conduit de fermeture et régénération (18) entre deux reposes de la soupape (8) sur le siège de soupape (11).

20. Actionneur hydraulique de soupape á régénération suivant la revendication 17, **caractérisé en ce que** la came de fermeture et régénération (158) peut être décalée angulairement par rapport à l'arbre de moteur hydraulique (163) par des moyens de déphasage de came (164).

21. Actionneur hydraulique de soupape à régénération suivant la revendication 20, **caractérisé en ce que** les moyens de déphasage de came (164) sont constitués d'au moins une cannelure hélicoïdale mâle (165) aménagée sur la face cylindrique externe de l'arbre de moteur hydraulique (163) qui coopère avec au moins une cannelure hélicoïdale femelle (166) aménagée à l'intérieur de la came de fermeture et régénération (158), cette dernière pouvant être déplacée ou maintenue en place axialement par rapport à l'arbre de moteur hydraulique (163) par un actionneur de déphasage de came (167).

22. Actionneur hydraulique de soupape à régénération suivant la revendication 21. **caractérisé en ce que** l'actionneur de déphasage de came (167) est relié á la came de fermeture et régénération (158) par l'intermédiaire d'une fourchette de déphasage (168) qui coopère avec une gorge de déphasage (169) que présente la came de fermeture et régénération (158).

23. Actionneur hydraulique de soupape à régénération suivant la revendication 1, **caractérisé en ce que** le conduit de fermeture et régénération (18) comporte un clapet anti-retour de fin de détente (171) qui permet à du fluide hydraulique (3) provenant soit de l'accumulateur basse-pression (4). soit de la bâche à fluide (46), soit d'une source de fluide hydraulique sous pression (147) de pénétrer dans ledit conduit (18) via un canal de roue libre (24), mais non d'en ressortir.

24. Actionneur hydraulique de soupape à régénération suivant la revendication 1, **caractérisé en ce que** le conduit de fermeture et régénération (18) comporte une vanne de pré-compression (172) qui permet à du fluide hydraulique (3) provenant soit de l'accumulateur basse-pression (4), soit de la bâche à fluide (46), soit d'une source de fluide hydraulique sous pression (147) de pénétrer dans ledit conduit (18) et/ou d'en ressortir.

25. Actionneur hydraulique de soupape ȧ régénération suivant la revendication 1, **caractérisé en ce que** le point d'application de l'effort de vérin (28) et/ou le point d'application de l'effort de soupape (29) et/ou le point d'application de l'effort de réaction sur la culasse (30) comporte des moyens de rattrapage de jeu (174).

26. Actionneur hydraulique de soupape à régénération suivant la revendication 25. **caractérisé en ce que** les moyens de rattrapage de jeu (174) sont constitués d'un vérin de rattrapage de jeu (175) ȧ l'intérieur duquel une chambre de rattrapage de jeu (176) comporte un clapet anti-retour de rattrapage de jeu (177) qui permet à du fluide hydraulique (3) provenant soit de l'accumulateur basse-pression (4), soit de l'accumulateur haute-pression (5), soit de la bâche á fluide (46), soit d'une source de fluide hydraulique sous pression (147) de pénétrer dans ladite chambre (176), mais non d'en ressortir.

27. Actionneur hydraulique de soupape à régénération suivant la revendication 25, **caractérisé en ce que** les moyens de rattrapage de jeu (174) sont constitués d'un vèrin de rattrapage de jeu (175) á l'intérieur duquel une chambre de rattrapage de jeu (176) comporte un ajutage de rattrapage de jeu (178) qui permet à du fluide hydraulique (3) provenant soit de l'accumulateur basse-pression (4), soit de l'accumulateur haute-pression (5), soit de la bâche à fluide (46), soit d'une source de fluide hydraulique sous pression (147) de pénétrer dans ladite chambre (176), et d'en ressortir.

28. Actionneur hydraulique de soupape à régénération suivant la revendication 1, **caractérisé en ce que** le levier à rapport de bras progressif (27) est logé dans une chambre de levier (23) dans laquelle débouche également le piston de vérin d'actionneur (26), ladite chambre (23) étant reliée, soit avec l'accumulateur basse-pression (4), soit avec la bâche ȧ fluide (46), soit avec une source de fluide hydraulique sous pression (147) par un clapet anti-retour de chambre de levier (59) qui permet à du fluide hydraulique (3) de sortir de ladite chambre de levier (23) mais non d'y entrer, ou bien par un ajutage calibré de chambre de levier (67) qui permet à du fluide hydraulique (3) de sortir et de rentrer de ladite chambre de levier (23), ou encore par à la fois ledit clapet (59) et ledit ajutage (67), ce dernier étant alors placé en parallèle avec le clapet anti-retour de chambre de levier (59).

## Patentansprüche

1. Hydraulischer Stellantrieb mit Regenerierventil (1) für einen Hubkolbenkompressor oder -motor (100), der mindestens einen Kolben (101) aufweist, der mit Übertragungsmitteln (102) verbunden ist, um sich in einem Zylinder (103) hin- und herzubewegen, der durch einen Kompressor- oder Motorzylinderkopf (104) geschlossen ist, wobei der Kolben (101), der Zylinder (103) und der Zylinderkopf (104) eine Kompressions- oder Brennkammer (105) bilden, in die mindestens eine Einlassleitung (106) und mindestens eine Auslass- oder Abflussleitung (107) mündet, wobei die eine, die andere oder die beiden Leitungen (106, 107) mit der Kammer (105) durch ein Leitungsloch (10) verbunden sind, das ein Ventil (8) verschließen kann, wenn es auf einem Ventilsitz (11) ruht, **dadurch gekennzeichnet, dass** er aufweist:
• mindestens eine hydraulischen Hochdruckversorgungspumpe (2), die eine Hydraulikflüssigkeit (3) von einem Niederdruckspeicher (4) oder einem Flüssigkeitsbehälter (46) über eine Niederdruckversorgungsleitung (47) einlassen kann, um diese Flüssigkeit (3) in Richtung eines Hochdruckspeichers (5) über eine Hochdruckversorgungsleitung (48) abzugeben,
• mindestens einen Stellantrieb (6), der einen Stellantriebszylinder (25) aufweist, der mit einem Zylinderkopf des Stellantriebs (49) bedeckt ist, wobei der Zylinder (25) direkt oder indirekt an dem Kompressor- oder Motorzylinderkopf (104) befestigt ist, während der Zylinder (25) und der Zylinderkopf des Stellantriebs (49) mit einem Stellantriebskolben (26) eine Hydraulikkammer des Stellantriebs (7) bilden, wobei der Kolben (26) durch Übertragungsmittel (9) mit dem Ventil (8) mechanisch verbunden ist, wobei die Mittel (9) derart vorgesehen sind, dass, wenn die Hydraulikkammer des Stellantriebs (7) einem Druck ausgesetzt ist, der von der Hydraulikflüssigkeit (3) ausgeübt wird, der Stellantriebskolben (26) dazu neigt, das Ventil (8) von dem Ventilsitz (11), mit dem es zusammenwirkt, zu entfernen,
• mindestens eine Ventilrückstellvorrichtung (12), die auf das Ventil (8) eine Kraft ausübt, die jener entgegenwirkt, die der Stellantrieb (6) erzeugen kann, wobei die Vorrichtung (12) somit dazu neigt, das Ventil (8) wieder in Kontakt mit dem Ventilsitz (11) zu bringen, mit dem es zusammenwirkt,
• mindestens ein hydraulisches Ventilhubventil (13), das eine Hochdruck-Heberleitung (14) öffnen oder schließen kann, die den Hochdruckspeicher (5) mit der Hydraulikkammer des Stellantriebs (7) verbindet,
• mindestens ein Hubrückschlagventil (15), das in einer Trägheits-Heberleitung (16) angeordnet ist, die den Niederdruckspeicher (4) oder den Flüssigkeitsbehälter (46) mit der Hydraulikkammer des Stellantriebs (7) verbindet, wobei das Ventil (15) der Hydraulikflüssigkeit (3) ermöglicht, über die Leitung (16) von dem Niederdruckspeicher (4) oder dem Flüssigkeitsbehälter (46) in Richtung der Hydraulikkammer des Stellantriebs (7) zu zirkulieren, aber nicht umgekehrt,
• mindestens ein Hydraulikventil zum Ventilschließen (17), das eine Schließ- und Regenerierungsleitung (18) öffnen oder schließen kann, die die Hydraulikkammer des Stellantriebs (7) mit einem Flüssigkeitseinlass (19) verbindet, den ein hydraulischer Schließ- und Regenerationsmotor (20) aufweist, wobei ein Flüssigkeitsauslass (21), den der Motor (20) ebenfalls aufweist, mit dem Niederdruckspeicher (4) oder mit dem Flüssigkeitsbehälter (46) durch eine Niederdruck-Rücklaufleitung des Hydraulikmotors (22) verbunden ist,
• mindestens einen Hebel mit progressivem Hebelarmverhältnis (27), der ganz oder teilweise die Übertragungsmittel (9) bildet, wobei der Hebel (27) mindestens einen Angriffspunkt der Stellantriebskraft (28) freilegt, auf den der Stellantriebskolben (26) direkt oder indirekt eine Motor- oder Widerstandskraft ausüben kann, mindestens einen Angriffspunkt der Ventilkraft (29), auf den das Ventil (8) direkt oder indirekt eine Motor- oder Widerstandskraft ausüben kann, und mindestens einen Angriffspunkt der Reaktionskraft auf den Zylinderkopf (30), auf den direkt oder indirekt eine Kraft auf den Kompressor- oder Motorzylinderkopf (104) ausgeübt wird.

2. Hydraulischer Stellantrieb mit Regenerierventil nach Anspruch 1, **dadurch gekennzeichnet, dass** Mittel zum Verlagern des Angriffspunkts (31) den Angriffspunkt der Stellantriebskraft (28) und/oder den Angriffspunkt der Ventilkraft (29) und/oder den Angriffspunkt der Reaktionskraft auf den Zylinderkopf (30) entlang des Hebels mit progressivem Hebelarmverhältnis (27) während des Öffnungshubs des Ventils (8) verlagern.

3. Hydraulischer Stellantrieb mit Regenerierventil nach Anspruch 2, **dadurch gekennzeichnet, dass** der Angriffspunkt der Stellantriebskraft (28) und/oder der Angriffspunkt der Ventilkraft (29) und/oder der Angriffspunkt der Reaktionskraft auf den Zylinderkopf (30) direkt oder indirekt jeweils mit dem Stellantriebskolben (26) und/oder mit dem Ventil (8) und/oder mit dem Kompressor- oder Motorzylinderkopf (104), mit dem er zusammenwirkt, entweder mindestens eine Schwenkverbindung (34) oder mindestens eine Roll-Gleit-Verbindung (35) bildet, wobei diese Letztere die Mittel zum Verlagern des Angriffspunkts (31) bildet.

4. Hydraulischer Stellantrieb mit Regenerierventil nach Anspruch 3, **dadurch gekennzeichnet, dass** die Roll-Gleit-Verbindung (35) aus mindestens einer Hebel-Kontaktbahn (36) gebildet ist, die auf dem Hebel mit progressivem Hebelarmverhältnis (27) auf Ebene des Angriffspunkts der Stellantriebskraft (28) und/oder des Angriffspunkts der Ventilkraft (29) und/oder des Angriffspunkts der Reaktionskraft auf den Zylinderkopf (30) ausgebildet ist, wobei die Bahn (36) mit einer Hebel-Reaktionsfläche (37) zusammenwirkt, die direkt oder indirekt jeweils auf dem Stellantriebskolben (26) und/oder auf dem Ventil (8) und/oder auf dem Kompressor- oder Motorzylinderkopf (104) ausgebildet ist, wobei die Bahn (36) und/oder die Fläche (37) ein gekrümmtes Kontaktprofil (38) aufweist, auf dem der Kontakt zwischen der Bahn (36) und der Fläche (37) erstellt wird.

5. Hydraulischer Stellantrieb mit Regenerierventil nach Anspruch 1, **dadurch gekennzeichnet, dass** die Ventilrückstellvorrichtung (12) aus einem Ventilrückstellantrieb (39) gebildet ist, der einen Rückstellantriebszylinder (40) aufweist, der mit einem Zylinderkopf des Rückstellantriebs (50) bedeckt ist, wobei der Zylinder (40) direkt oder indirekt an dem Kompressor- oder Motorzylinderkopf (104) befestigt ist, während der Zylinder (40) und der Zylinderkopf des Rückstellantriebs (50) mit einem Rückstellantriebskolben (41) eine Hydraulikkammer des Rückstellantriebs (42) bilden, wobei der Kolben (41) durch Rückstellübertragungsmittel (43) mit dem Ventil (8) mechanisch verbunden ist.

6. Hydraulischer Stellantrieb mit Regenerierventil nach Anspruch 5, **dadurch gekennzeichnet, dass** die Hydraulikkammer des Rückstellantriebs (42) durch eine Rückstelldruckleitung (44) mit dem Hochdruckspeicher (5) verbunden ist.

7. Hydraulischer Stellantrieb mit Regenerierventil nach Anspruch 1, **dadurch gekennzeichnet, dass** der Füllstand und Druck der Hydraulikflüssigkeit (3), die der Niederdruckspeicher (4) enthält, durch eine hydraulische Niederdruck-Speisepumpe (45), die die Flüssigkeit (3) über eine Niederdruck-Speiseleitung (60) von dem Flüssigkeitsbehälter (46) in Richtung des Speichers (4) transportieren kann, in einem bestimmten Wertebereich gehalten werden.

8. Hydraulischer Stellantrieb mit Regenerierventil nach Anspruch 1, **dadurch gekennzeichnet, dass** mindestens das Ventil (8) mit oder ohne dem Ventilsitz (11), mit dem es zusammenwirkt, der Stellantrieb (6), die Übertragungsmittel (9), die Ventilrückstellvorrichtung (12), das Hubrückschlagventil (15), das hydraulische Ventilhubventil (13), das Hydraulikventil zum Ventilschließen (17) gemeinsam in einer Stellantriebs-Kartusche (52) untergebracht sind, die mindestens einen Hydraulikstecker (53) freilegt.

9. Hydraulischer Stellantrieb mit Regenerierventil nach Anspruch 1, **dadurch gekennzeichnet, dass** das hydraulische Ventilhubventil (13) und/oder das Hydraulikventil zum Ventilschließen (17) aus einem Rohrventil (130) gebildet ist, das ein Verschlussrohr (131) aufweist, das von einem Rohr-Stellantrieb (137) in Längsverschiebung bewegt werden kann, wobei das Rohr (131) dicht in einer Bohrung des Verschlussrohrs (181) untergebracht ist und mit einer Rohrdichtfläche (135) endet, die entweder auf einem Rohrsitz (136) ruhen kann, um mit diesem Letzteren eine dichte durchgehende Kontaktlinie zu bilden, oder in einem gewissen Abstand zu dem Sitz (136) gehalten werden kann, um die Hydraulikflüssigkeit (3) von einem Innenvolumen des Rohrs (133) in Richtung eines externen Rohrverteilers/-sammlers (134) oder umgekehrt durchfließen zu lassen.

10. Hydraulischer Stellantrieb mit Regenerierventil nach Anspruch 9, **dadurch gekennzeichnet, dass** der Rohr-Stellantrieb (137) ein piezoelektrischer Stellantrieb mit hydraulischer Verstärkung (139) ist, der einen Stapel Keramikelemente (140) aufweist, die sich mechanisch verformen, wenn sie einem elektrischen Feld ausgesetzt werden, wobei das Ende des Stapels (140) mit einem Stellantriebs-Geberkolben (141) mit großem Durchmesser, der - mit einem Stellantriebs-Geberzylinder (142) - eine Stellantriebs-Geberkammer (143) bildet, die mit mindestens einer Stellantriebs-Nehmerkammer (144) in Verbindung steht, wobei diese Letztere einerseits durch einen Stellantriebs-Nehmerkolben (145) mit kleinem Durchmesser, der direkt oder indirekt mit dem Verschlussrohr (131) verbunden ist, mit dem er derart zusammenwirkt, um dieses Letztere in Längsverschiebung bewegen zu können, und andererseits durch einen Stellantriebs-Nehmerzylinder (142) gebildet ist.

11. Hydraulischer Stellantrieb mit Regenerierventil nach Anspruch 10, **dadurch gekennzeichnet, dass** die Stellantriebs-Geberkammer (143) und die Stellantriebs-Nehmerkammer (144) mit einer Quelle von unter Druck stehender Hydraulikflüssigkeit (147) durch ein Stellantriebs-Speiserückschlagventil (148) gemeinsam in Verbindung gebracht sind, das der Hydraulikflüssigkeit (3) ermöglicht, von der Quelle (147) in Richtung der Kammern (143, 144) zu gelangen und nicht umgekehrt.

12. Hydraulischer Stellantrieb mit Regenerierventil nach Anspruch 11, **dadurch gekennzeichnet, dass** der Stellantriebs-Geberkolben (141) eine Druckausgleichsfeder (149) aufnimmt, die dazu neigt, ihn an die Stellantriebs-Geberkammer (143) anzunähern, wobei die Kraft, die die Feder (149) auf den Kolben (141) ausübt, kleiner oder gleich der Kraft ist, die die Hydraulikflüssigkeit (3) auf den Kolben (141) ausübt, wenn der Druck, der in der Stellantriebs-Geberkammer (143) herrscht, gleich jenem ist, der in der Quelle von unter Druck stehender Hydraulikflüssigkeit (147) herrscht.

13. Hydraulischer Stellantrieb mit Regenerierventil nach Anspruch 11, **dadurch gekennzeichnet, dass** der Stellantriebs-Nehmerkolben (145) eine Druckausgleichsfeder (149) aufnimmt, die dazu neigt, ihn an die Stellantriebs-Nehmerkammer (144) anzunähern, wobei die Kraft, die die Feder (149) auf den Kolben (145) ausübt, kleiner oder gleich der Kraft ist, die die Hydraulikflüssigkeit (3) auf den Kolben (145) ausübt, wenn der Druck, der in der Stellantriebs-Nehmerkammer (144) herrscht, gleich jenem ist, der in der Quelle von unter Druck stehender Hydraulikflüssigkeit (147) herrscht.

14. Hydraulischer Stellantrieb mit Regenerierventil nach Anspruch 10, **dadurch gekennzeichnet, dass** die Stellantriebs-Geberkammer (143) über ein gemeinsames Verteilerrohr von Nehmerkammern (151) mit mehreren Stellantriebs-Nehmerkammer (144) in Verbindung steht, wobei der Stellantriebs-Nehmerkolben (145), der jede Nehmerkammer (144) bildet, ein Verschlussrohr (131) in Längsverschiebung bewegen kann, das er aufweist.

15. Hydraulischer Stellantrieb mit Regenerierventil nach Anspruch 14, **dadurch gekennzeichnet, dass** die Stellantriebs-Geberkammern (144) jeweils mit dem gemeinsamen Verteilerrohr von Nehmerkammern (151) durch ein Auswahlventil (152) in Verbindung gebracht sind oder nicht, dessen Öffnung durch einen Auswahlventil-Stellantrieb (153) gesteuert wird.

16. Hydraulischer Stellantrieb mit Regenerierventil nach Anspruch 10, **dadurch gekennzeichnet, dass** das gemeinsame Verteilerrohr von Nehmerkammern (151) mindestens ein volles oder hohles inkompressibles zylindrisches Element (156) nicht dicht aufnimmt, das in der Nähe einer bestimmten Längsposition in Bezug auf das gemeinsame Verteilerrohr von Nehmerkammern (151) durch mindestens zwei entgegengesetzt wirkende Zentrierfedern (157) zentriert gehalten ist.

17. Hydraulischer Stellantrieb mit Regenerierventil nach Anspruch 1, **dadurch gekennzeichnet, dass** der hydraulische Schließ- und Regenerationsmotor (20) einen Schließ- und Regenerationsnocken (158) aufweist, der auf einer Hydraulikmotor-Welle (163) befestigt ist, die - direkt oder indirekt - von dem Hubkolbenkompressor oder -motor (100) drehangetrieben ist, wobei sich ein Schließ- und Regenerationskolben (159) direkt oder indirekt auf dem Nocken (158) abstützt und - mit einem Schließ- und Regenerationszylinder (160) - eine Schließ- und Regenerationskammer (161) bildet, die mit dem Flüssigkeitseinlass (19) in Verbindung steht.

18. Hydraulischer Stellantrieb mit Regenerierventil nach Anspruch 17, **dadurch gekennzeichnet, dass** der Schließ- und Regenerationsnocken (158) ein Schließ- und Regenerationsnocken-Profil (162) freilegt, das mindestens einen Regenerations-Winkelabschnitt R aufweist, auf dem sich der Schließ- und Regenerationskolben (159) abstützt, um das Ventil (8) wieder auf den Ventilsitz (11) aufzulegen.

19. Hydraulischer Stellantrieb mit Regenerierventil nach Anspruch 17, **dadurch gekennzeichnet, dass** der Schließ- und Regenerationsnocken (158) ein Schließ- und Regenerationsnocken-Profil (162) freilegt, das mindestens einen Vorkompressions-Winkelabschnitt P aufweist, auf dem sich der Schließ- und Regenerationskolben (159) abstützt, um die Schließ- und Regenerierungsleitung (18) zwischen zwei Rückläufen des Ventils (8) auf dem Ventilsitz (11) vorzukomprimieren.

20. Hydraulischer Stellantrieb mit Regenerierventil nach Anspruch 17, **dadurch gekennzeichnet, dass** der Schließ- und Regenerationsnocken (158) in Bezug auf die Hydraulikmotor-Welle (163) durch Mittel zur Nockenphasenverschiebung (164) winkelmäßig versetzt werden kann.

21. Hydraulischer Stellantrieb mit Regenerierventil nach Anspruch 20, **dadurch gekennzeichnet, dass** die Mittel zur Nockenphasenverschiebung (164) aus mindestens einer spiralförmigen Außennut (165) gebildet sind, die auf der zylindrischen Außenfläche der Hydraulikmotor-Welle (163) ausgebildet sind, die mit mindestens einer spiralförmigen Innennut (166) zusammenwirkt, die im Inneren des Schließ- und Regenerationsnockens (158) ausgebildet ist, wobei dieser Letztere in Bezug auf die Hydraulikmotor-Welle (163) durch einen Stellantrieb zur Nockenphasenverschiebung (167) axial verschoben oder in Position gehalten werden kann.

22. Hydraulischer Stellantrieb mit Regenerierventil nach Anspruch 21, **dadurch gekennzeichnet, dass** der Stellantrieb zur Nockenphasenverschiebung (167) mit dem Schließ- und Regenerationsnocken (158) durch eine Gabel zur Phasenverschiebung (168) verbunden ist, die mit einer Kehle zur Phasenverschiebung (169) zusammenwirkt, die der Schließ- und Regenerationsnocken (158) aufweist.

23. Hydraulischer Stellantrieb mit Regenerierventil nach Anspruch 1, **dadurch gekennzeichnet, dass** die Schließ- und Regenerierungsleitung (18) ein Rückschlagventil am Expansionsende (171) aufweist, das einer Hydraulikflüssigkeit (3) ermöglicht, die entweder von dem Niederdruckspeicher (4) oder dem Flüssigkeitsbehälter (46) oder einer Quelle von unter Druck stehender Hydraulikflüssigkeit (147) kommt, über einen Freilaufkanal (24) in die Leitung (18) einzudringen, aber nicht daraus herauszutreten.

24. Hydraulischer Stellantrieb mit Regenerierventil nach Anspruch 1, **dadurch gekennzeichnet, dass** die Schließ- und Regenerierungsleitung (18) ein Vorkompressionsventil (172) aufweist, das der Hydraulikflüssigkeit (3) ermöglicht, die entweder von dem Niederdruckspeicher (4) oder dem Flüssigkeitsbehälter (46) oder einer Quelle von unter Druck stehender Hydraulikflüssigkeit (147) kommt, in die Leitung (18) einzudringen und/oder daraus herauszutreten.

25. Hydraulischer Stellantrieb mit Regenerierventil nach Anspruch 1, **dadurch gekennzeichnet, dass** der Angriffspunkt der Stellantriebskraft (28) und/oder der Angriffspunkt der Ventilkraft (29) und/oder der Angriffspunkt der Reaktionskraft auf den Zylinderkopf (30) Spielausgleichsmittel (174) aufweist.

26. Hydraulischer Stellantrieb mit Regenerierventil nach Anspruch 25, **dadurch gekennzeichnet, dass** die Spielausgleichsmittel (174) aus einem Spielausgleichsstellantrieb (175) gebildet sind, in dessen Innerem eine Spielausgleichs-Kammer (176) ein Spielausgleichs-Rückschlagventil (177) aufweist, das einer Hydraulikflüssigkeit (3) ermöglicht, die entweder von dem Niederdruckspeicher (4) oder dem Hochdruckspeicher (5) oder dem Flüssigkeitsbehälter (46) oder einer Quelle von unter Druck stehender Hydraulikflüssigkeit (147) kommt, in die Kammer (176) einzudringen, aber nicht daraus herauszutreten.

27. Hydraulischer Stellantrieb mit Regenerierventil nach Anspruch 25, **dadurch gekennzeichnet, dass** die Spielausgleichsmittel (174) aus einem Spielausgleichsstellantrieb (175) gebildet sind, in dessen Innerem eine Spielausgleichs-Kammer (176) eine Spielausgleichs-Düse (178) aufweist, die einer Hydraulikflüssigkeit (3) ermöglicht, die entweder von dem Niederdruckspeicher (4) oder dem Hochdruckspeicher (5) oder dem Flüssigkeitsbehälter (46) oder einer Quelle von unter Druck stehender Hydraulikflüssigkeit (147) kommt, in die Kammer (176) einzudringen und daraus herauszutreten.

28. Hydraulischer Stellantrieb mit Regenerierventil nach Anspruch 1, **dadurch gekennzeichnet, dass** der Hebel mit progressivem Hebelarmverhältnis (27) in einer Hebelkammer (23) untergebracht ist, in die auch der Stellantriebskolben (26) mündet, wobei die Kammer (23) entweder mit dem Niederdruckspeicher (4) oder mit dem Flüssigkeitsbehälter (46) oder mit einer Quelle von unter Druck stehender Hydraulikflüssigkeit (147) durch ein Hebelkammer-Rückschlagventil (59), das einer Hydraulikflüssigkeit (3) ermöglicht, aus der Hebelkammer (23) herauszutreten, aber nicht in diese einzudringen, oder durch eine kalibrierte Hebelkammer-Düse (67), die einer Hydraulikflüssigkeit (3) ermöglicht, aus der Hebelkammer (23) herauszutreten und in diese einzudringen, oder auch gleichzeitig durch das Ventil (59) und die Düse (67) verbunden ist, wobei diese Letztere dann zu dem Hebelkammer-Rückschlagventil (59) parallel angeordnet ist.

## Claims

1. Regenerative valve hydraulic actuator (1) for a reciprocating piston compressor or engine (100) which comprises at least one piston (101) connected to transmission means (102) to reciprocate in a cylinder (103) closed by a compressor or engine cylinder head (104), said piston (101), said cylinder (103) and said cylinder head (104) forming a compression or combustion chamber (105) into which opens at least one intake line (106) and at least one exhaust or discharge line (107), one or both of said two lines (106, 107) being connected to said chamber (105) by a line orifice (10) that a valve (8) can block when it rests on a valve seat (11) **characterized in that it** comprises:
• At least one high-pressure hydraulic feed pump (2) that can admit a hydraulic fluid (3) from a low-pressure accumulator (4) or a fluid tank (46) via a low-pressure feed line (47) to discharge said fluid (3) to a high-pressure accumulator (5) via a high-pressure feed line (48);
• At least one actuator (6) which comprises an actuator cylinder (25) capped by an actuator cylinder head (49), said cylinder (25) being attached directly or indirectly to the compressor or engine cylinder head (104) whereas said cylinder (25) and the actuator cylinder head (49) form with an actuator piston (26) an actuator hydraulic chamber (7), said piston (26) being mechanically connected by transmission means (9) to the valve (8), said means (9) being such that if the actuator hydraulic chamber (7) is subjected to a pressure exerted by the hydraulic fluid (3), the actuator piston (26) tends to move said valve (8) away from the valve seat (11) with which it cooperates;
• At least one valve return device (12) which exerts on the valve (8) a force opposite that which the actuator (6) is able to produce, said device (12) therefore tending to return the valve (8) into contact with the valve seat (11) with which it cooperates;
• At least one valve lifter hydraulic valve (13) that can open or close a high-pressure lifter line (14) which connects the high-pressure accumulator (5) to the actuator hydraulic chamber (7);
• At least one lifter check valve (15) placed in an inertial lifter line (16) that connects the low-pressure accumulator (4) or the fluid tank (46) to the actuator hydraulic chamber (7), said check valve (15) allowing the hydraulic fluid (3) - via said line (16) - to flow from the low-pressure accumulator (4) or the fluid tank (46) to the actuator hydraulic chamber (7), but not in the opposite direction;
• At least one valve closure hydraulic valve (17) that can open or close a closure and regeneration line (18) which connects the actuator hydraulic chamber (7) with a fluid intake (19) which a closure and regeneration hydraulic motor (20) includes, a fluid outlet (21) which said motor (20) also includes being connected with the low-pressure accumulator (4) or with the fluid tank (46) by a hydraulic motor low-pressure return line (22);
• At least one progressive lever arm ratio lever (27) constituting all or part of the transmission means (9), said lever (27) exposing at least one point of application of the force of the actuator (28) to which the actuator piston (26) can apply directly or indirectly a driving or resisting force, at least one point of application (29) of the force of the valve (8) to which the valve can apply directly or indirectly a driving or resisting force, and at least one point of application of the reaction force on the cylinder head (30) at which a force is applied directly or indirectly to the compressor or engine cylinder head (104).

2. Regenerative valve hydraulic actuator according to Claim 1, **characterized in that** means for moving the application point (31) move the point of application (28) of the force of the actuator and/or the point of application (29) of the force of the valve and/or the point of application of the reaction force on the cylinder head (30) along the progressive lever arm ratio lever (27) during the opening travel of the valve (8).

3. Regenerative valve hydraulic actuator according to Claim 2, **characterized in that** the point of application (28) of the force of the actuator and/or the point of application (29) of the force of the valve and/or the point of application (30) of the reaction force on the cylinder head respectively form directly or indirectly with the actuator piston (26) and/or with the valve (8) and/or with the compressor or engine cylinder head (104) with which it cooperates either at least one pivot connection (34) or at least one rolling-sliding connection (35), the latter constituting the means (31) for moving the application point.

4. Regenerative valve hydraulic actuator according to Claim 3, **characterized in that** the rolling-sliding connection (35) consists of at least one lever contact track (36) provided on the progressive lever arm ratio lever (27) at the level of the point of application (28) of the force of the actuator and/or the point of application (29) of the force of the valve and/or the point of application (30) of the reaction force on the cylinder head, said track (36) cooperating with a lever reaction surface (37) respectively formed directly or indirectly on the actuator piston (26) and/or on the valve (8) and/or on the compressor or engine cylinder head (104), said piston (36) and/or said surface (37) having a curved contact profile (38) on which is established the contact between said track (36) and said surface (37).

5. Regenerative valve hydraulic actuator according to Claim 1, **characterized in that** the valve return device (12) consists of a valve return actuator (39) which comprises a return actuator cylinder (40) capped by a return actuator cylinder head (50), said cylinder (40) being attached directly or indirectly to the cylinder head (104) of the compressor or engine whereas said cylinder (40) and the return actuator cylinder head (50) form with a return actuator piston (41) a return actuator hydraulic chamber (42), said piston (41) being mechanically connected to the valve (8) by return transmission means (43).

6. Regenerative valve hydraulic actuator according to Claim 5, **characterized in that** the return actuator hydraulic chamber (42) is connected to the high-pressure accumulator (5) by a return pressure line (44).

7. Regenerative valve hydraulic actuator according to Claim 1, **characterized in that** the level and the pressure of the hydraulic fluid (3) that the low-pressure accumulator (4) contains are maintained within a certain range of values by a force-feed low-pressure hydraulic pump (45) which can transfer said fluid (3) from the fluid tank (46) to said accumulator (4) via a low-pressure force-feed line (60).

8. Regenerative valve hydraulic actuator according to Claim 1, **characterized in that** at least the valve (8) with or without the valve seat (11) with which it cooperates, the actuator (6), the transmission means (9), the valve return device (12), the lifter check valve (15), the valve lifter hydraulic valve (13) and the valve closure hydraulic valve (17) are together accommodated in an actuator cartridge (52) which exposes at least one hydraulic connector (53).

9. Regenerative valve hydraulic actuator according to Claim 1, **characterized in that** the valve lifter hydraulic valve (13) and/or the valve closure hydraulic valve (17) consists of a tubular valve (130) which comprises a blocking tube (131) which can be moved in longitudinal translation by a tube actuator (137), said tube (131) being accommodated in fluid-tight manner in a blocking tube bore (181) and ending at a tube sealing bearing surface (135) that can either rest on a tube seat (136) to form with the latter a continuous line of fluid-tight contact or be maintained at a certain distance from said seat (136) to allow the hydraulic fluid (3) to pass from a tube internal volume (133) to a tube external collector-distributor (134) or vice versa.

10. Regenerative valve hydraulic actuator according to Claim 9, **characterized in that** the tube actuator (137) is a hydraulic amplification piezoelectric actuator (139) which comprises a stack of ceramic elements (140) that are deformed mechanically when they are subjected to an electric field, the end of said stack (140) being connected to an actuator sender piston (141) of large diameter which forms - with an actuator sender cylinder (142) - an actuator sender chamber (143) which communicates with at least one actuator receiver chamber (144), the latter being formed on the one hand by an actuator receiver piston (145) of small diameter which is directly or indirectly connected to the blocking tube (131) with which it cooperates so as to be able to move the latter in longitudinal translation and on the other hand by an actuator receiver cylinder (142).

11. Regenerative valve hydraulic actuator according to Claim 10, **characterized in that** the actuator sender chamber (143) and the actuator receiver chamber (144) are together connected with a pressurized hydraulic fluid source (147) by an actuator force-feed check valve (148) which allows hydraulic fluid (3) to go from said source (147) to said chambers (143, 144) and not vice versa.

12. Regenerative valve hydraulic actuator according to Claim 11, **characterized in that** the actuator sender piston (141) receives a pressure compensation spring (149) which tends to move it toward the actuator sender chamber (143), the force which said spring (149) exerts on said piston (141) being less than or equal to the force which the hydraulic fluid (3) exerts on said piston (141) when the pressure in the actuator sender chamber (143) is equal to that in the pressurized hydraulic fluid source (147).

13. Regenerative valve hydraulic actuator according to Claim 11, **characterized in that** the actuator receiver piston (145) receives a pressure compensation spring (149) which tends to move it toward the actuator receiver chamber (144), the force which said spring (149) exerts on said piston (145) being less than or equal to the force which the hydraulic fluid (3) exerts on said piston (145) when the pressure in the actuator receiver chamber (144) is equal to that in the pressurized hydraulic fluid source (147).

14. Regenerative valve hydraulic actuator according to Claim 10, **characterized in that** the actuator sender chamber (143) communicates via a receiver chamber common manifold (151) with a plurality of actuator receiver chambers (144), the actuator receiver piston (145) forming each of said receiver chambers (144) being able to move in longitudinal translation a blocking tube (131) that is its own.

15. Regenerative valve hydraulic actuator according to Claim 14, **characterized in that** the actuator receiver chambers (144) are each put into communication or not with the receiver chamber common manifold (151) by a selection valve (152) the opening of which is commanded by a selection valve actuator (153).

16. Regenerative valve hydraulic actuator according to Claim 10, **characterized in that** the receiver chamber common manifold (151) accommodates in non-fluid-tight manner at least one solid or hollow incompressible cylindrical element (156) which is maintained centered in the vicinity of a certain longitudinal position relative to the receiver chamber common manifold (151) by at least two oppositely acting centering springs (157).

17. Regenerative valve hydraulic actuator according to Claim 1, **characterized in that** the closure and regeneration hydraulic motor (20) comprises a closure and regeneration cam (158) mounted on a hydraulic motor shaft (163) which is driven - directly or indirectly - in rotation by the reciprocating piston compressor or engine (100), a closure and regeneration piston (159) bearing directly or indirectly on said cam (158) and forming - with a closure and regeneration cylinder (160) - a closure and regeneration chamber (161) which communicates with the fluid intake (19).

18. Regenerative valve hydraulic actuator according to Claim 17, **characterized in that** the closure and regeneration cam (158) exposes a closure and regeneration cam profile (162) which includes at least one regeneration angular sector R on which the closure and regeneration piston (159) bears to return the valve (8) to the valve seat (11).

19. Regenerative valve hydraulic actuator according to Claim 17, **characterized in that** the closure and regeneration cam (158) exposes a closure and regeneration cam profile (162) which includes at least one pre-compression angular sector P on which the closure and regeneration piston (159) bears to pre-compress the closure and regeneration line (18) between two returns of the valve (8) to the valve seat (11).

20. Regenerative valve hydraulic actuator according to Claim 17, **characterized in that** the closure and regeneration cam (158) can be offset angularly relative to the hydraulic motor shaft (163) by cam phase-shifting means (164).

21. Regenerative valve hydraulic actuator according to Claim 20, **characterized in that** the cam phase-shifting means (164) consist of at least one male helical spline (165) formed on the cylindrical external face of the hydraulic motor shaft (163) which cooperates with at least one female helical spline (166) formed inside the closure and regeneration cam (158), the latter being able to be moved or retained in place axially relative to the hydraulic motor shaft (163) by a cam phase-shifting actuator (167).

22. Regenerative valve hydraulic actuator according to Claim 21, **characterized in that** the cam phase-shifting actuator (167) is connected to the closure and regeneration cam (158) by a phase-shifting fork (168) which cooperates with a phase-shifting groove (169) of the closure and regeneration cam (158).

23. Regenerative valve hydraulic actuator according to Claim 1, **characterized in that** the closure and regeneration line (18) includes an end of expansion check valve (171) which allows hydraulic fluid (3) coming from the low-pressure accumulator (4), the fluid tank (46), or a pressurized hydraulic fluid source (147) to enter said line (18) via a freewheel channel (24), but not to leave it.

24. Regenerative valve hydraulic actuator according to Claim 1, **characterized in that** the closure and regeneration line (18) includes a precompression valve (172) that allows hydraulic fluid (3) coming from the low-pressure accumulator (4), the fluid tank (46), or a pressurized hydraulic fluid source (147) to enter said line (18) and/or to leave it.

25. Regenerative valve hydraulic actuator according to Claim 1, **characterized in that** the point of application (28) of the force of the actuator and/or the point of application (29) of the force of the valve and/or the point of application (30) of the reaction force on the cylinder head includes play compensation means (174).

26. Regenerative valve hydraulic actuator according to Claim 25, **characterized in that** the play compensation means (174) consist of a play compensation actuator (175) inside which a play compensation chamber (176) includes a play compensation check valve (177) which allows hydraulic fluid (3) coming from the low-pressure accumulator (4), the high-pressure accumulator (5), the fluid tank (46) or a pressurized hydraulic fluid source (147) to enter said chamber (176), but not to leave it.

27. Regenerative valve hydraulic actuator according to Claim 25, **characterized in that** the play compensation means (174) consist of a play compensation actuator (175) inside which a play compensation chamber (176) includes a play compensation nozzle (178) which allows hydraulic fluid (3) coming from the low-pressure accumulator (4), the high-pressure accumulator (5), the fluid tank (46) or a pressurized hydraulic fluid source (147) to enter said chamber (176) and to leave it.

28. Regenerative valve hydraulic actuator according to Claim 1, **characterized in that the** progressive lever arm ratio lever (27) is accommodated in a lever chamber (23) into which also opens the actuator piston (26), said chamber (23) being connected with the low-pressure accumulator (4), the fluid tank (46) or a pressurized hydraulic fluid source (147) by a lever chamber check valve (59) which allows hydraulic fluid (3) to leave said lever chamber (23) but not to enter it, or by a lever chamber calibrated nozzle (67) which allows hydraulic fluid (3) to leave and to enter said lever chamber (23), or again by both said valve (59) and said nozzle (67), the latter then being placed in parallel with the lever chamber check valve (59).
